(19) Europäisches Patentamt / European Patent Office / Office européen des brevets

(11) **EP 3 197 011 A1**

(12) **EUROPEAN PATENT APPLICATION**
published in accordance with Art. 153(4) EPC

(43) Date of publication:
**26.07.2017 Bulletin 2017/30**

(51) Int Cl.:
*H02J 13/00* *(2006.01)*    *G06Q 50/06* *(2012.01)*
*H02J 3/32* *(2006.01)*    *H04Q 9/00* *(2006.01)*

(21) Application number: **15828194.9**

(22) Date of filing: **15.07.2015**

(86) International application number:
**PCT/JP2015/070256**

(87) International publication number:
**WO 2016/017426 (04.02.2016 Gazette 2016/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **31.07.2014 JP 2014156202**

(71) Applicant: **NEC Corporation**
**Tokyo 108-8001 (JP)**

(72) Inventors:
• **KUDO, Koji**
 **Tokyo 108-8001 (JP)**
• **SAKUMA, Hisato**
 **Tokyo 108-8001 (JP)**
• **YANO, Hitoshi**
 **Tokyo 108-8001 (JP)**

(74) Representative: **Vossius & Partner**
**Patentanwälte Rechtsanwälte mbB**
**Siebertstrasse 3**
**81675 München (DE)**

(54) **CONTROL DEVICE, APPARATUS CONTROL DEVICE, CONTROL METHOD, REPORT RECEPTION METHOD, REPORTING METHOD, AND RECORDING MEDIUM**

(57) When executing adjustment processing in the power supply/demand adjustment processing of a DR (demand response) system, the present invention can prevents the selection, as a power supply/demand adjustment device to be used (device to be used), of a power supply/demand adjustment device that does not satisfy the characteristics of the adjustment processing. This control device (A) is provided with: an acquisition unit (A1) that acquires information that relates to power supply/demand adjustment devices and that is indicated for each power supply/demand adjustment device and information indicating characteristics of the power supply/demand adjustment processing; and a reporting unit (A2) that, on the basis of the information that relates to the power supply/demand adjustment devices and information that indicates characteristics of the power supply/demand adjustment processing, reports an actuation of the power supply/demand adjustment processing to power supply/demand adjustment devices that are to be used for the power supply/demand adjustment processing.

FIG. 1A

EP 3 197 011 A1

**Description**

Technical Field

The present invention relates to a control device, an apparatus control device, a control method, a report reception method, a reporting method, and a program, and more particularly relates to a control device, an apparatus control device, a control method, a report reception method, a reporting method, and a program for selecting a power supply/demand adjustment device used in power supply/demand adjustment processing.

Background Art

A method of using power supply/demand adjustment devices such as storage batteries is known as a method of performing power supply/demand adjustment processing.

Patent Document 1 discloses a DR (demand response) system that controls electrical apparatuses that function as power supply/demand adjustment devices to execute power supply/demand adjustment processing according to a DR contract. "Power supply/demand adjustment processing" is hereinbelow also referred to as simply an "adjustment process."

The DR system described in Patent Document 1 executes a plurality of adjustment processes (a peak cutting process of reducing power demand amount and a frequency adjustment process of adjusting the frequency of a power grid) in accordance with each of a plurality of DR contracts by controlling the operation of one or more electrical apparatuses.

Literature of the Prior Art

Patent Documents

Patent Document 1: International No. WO 2014/038201

Summary of the Invention

Problem to be Solved by the Invention

The processing content of the plurality of adjustment processes executed by the DR system described in Patent Document 1 (such as a peak cutting process or a frequency adjustment process) differ according to the object of power supply/demand adjustment. The characteristics of the adjustment processing consequently differ for each adjustment process.

As a result, in the DR system described in Patent Document 1, when a power supply/demand adjustment device such as an electrical apparatus that does not satisfy the characteristics of an adjustment process is selected as the power supply/demand adjustment device to be used (device that is to be used for) when executing the adjustment process, the adjustment process will not be executed appropriately.

The problem therefore arises that a method is desired that can prevent the selection, as the power supply/demand adjustment device to be used (device that is to be used for) at the time of executing an adjustment process, of a power supply/demand adjustment device that does not satisfy the characteristics of the adjustment process.

It is an example object of the present invention is to provide a control device, an apparatus control device, a control method, a report reception method, a reporting method that can solve the above-described problem.

Means for Solving the Problem

The control device of an example aspect of the present invention is provided with: an acquisition unit that acquires information that relates to power supply/demand adjustment devices that is indicated for each power supply/demand adjustment device and information that indicates characteristics of power supply/demand adjustment processing; and a reporting unit that, on the basis of the information that relates to the power supply/demand adjustment devices and information that indicates characteristics of the power supply/demand adjustment processing, reports an actuation of the power supply/demand adjustment processing to the power supply/demand adjustment devices that are to be used for the power supply/demand adjustment processing.

The apparatus control device of an example aspect of the present invention includes: a communication unit that transmits information that relates to power supply/demand adjustment devices to an outside device; and a reception unit that receives the report of an actuation of power supply/demand adjustment processing that is determined on the basis of information that relates to the power supply/demand adjustment devices and information that indicates characteristics that relate to the power supply/demand adjustment processing.

The apparatus control device of an example aspect of the present invention is provided with: an acquisition unit that acquires information that relates to power supply/demand adjustment devices and that is indicated for each power supply/demand adjustment device and information that indicates characteristics of power supply/demand adjustment processing; and a reporting unit that, on the basis of the information that relates to the power supply/demand adjustment devices and information that indicates characteristics of the power supply/demand adjustment processing, performs reporting to an outside device that is a power supply/demand adjustment device that satisfies the characteristics of the power supply/demand adjustment processing.

The control method of an example aspect of the present invention includes: acquiring information that relates to power supply/demand adjustment devices and that is indicated for each power supply/demand adjustment device and information that indicates characteristics of power supply/demand adjustment processing; and, on the basis of the information that relates to the power supply/demand adjustment devices and information that indicates the characteristics of the power supply/demand adjustment processing, reporting an actuation of the power supply/demand adjustment processing to the power supply/demand adjustment devices that are to be used for the power supply/demand adjustment processing.

The report reception method of an example aspect of the present invention includes: transmitting to an outside device information that relates to power supply/demand adjustment devices; and receiving a report of an actuation of power supply/demand adjustment processing that was determined on the basis of information that relates to the power supply/demand adjustment devices and information that indicates characteristics that relate to the power supply/demand adjustment processing.

The reporting method of an example aspect of the present invention includes: acquiring information that relates to power supply/demand adjustment devices and that is indicated for each power supply/demand adjustment device and information that indicates characteristics of power supply/demand adjustment processing; and, on the basis of the information that relates to the power supply/demand adjustment devices and information that indicates the characteristics of the power supply/demand adjustment processing, reporting to an outside device that is a power supply/demand adjustment device that satisfies the characteristics of the power supply/demand adjustment processing.

The recording medium of an example aspect of the present invention is a recording medium that can be read by a computer and on which is recorded a program for causing a computer to execute an acquisition procedure of acquiring information that relates to power supply/demand adjustment devices and that is indicated for each power supply/demand adjustment device and information that indicates characteristics of power supply/demand adjustment processing; and a reporting procedure of, on the basis of the information that relates to the power supply/demand adjustment devices and information that indicates characteristics of the power supply/demand adjustment processing, reporting an actuation of the power supply/demand adjustment processing to the power supply/demand adjustment devices that are to be used for the power supply/demand adjustment processing.

The recording medium of an example aspect of the present invention is a recording medium that can be read by a computer and on which is recorded a program that causes a computer to execute: a transmission procedure of transmitting to an outside device information that relates to power supply/demand adjustment devices; and a reception procedure of receiving a report of the actuation of power supply/demand adjustment processing that was determined on the basis of the information that relates to the power supply/demand adjustment devices and information that indicates characteristics that relate to the power supply/demand adjustment processing.

The recording medium of an example aspect of the present invention is a recording medium that can be read by a computer and on which is recorded a program for causing a computer to execute: an acquisition procedure of acquiring information that relates to power supply/demand adjustment devices and that is indicated for each power supply/demand adjustment device and information that indicates characteristics of power supply/demand adjustment processing; and a reporting procedure of, on the basis of the information that relates to the power supply/demand adjustment devices and information that indicates characteristics of the power supply/demand adjustment processing, carrying out reporting to an outside device that is a power supply/demand adjustment device that satisfies the characteristics of the power supply/demand adjustment processing.

Effect of the Invention

An example advantage according to the invention is preventing of the selection of a power supply/demand adjustment device that does not satisfy characteristics of power supply/demand adjustment processing as a power supply/demand adjustment device that is to be used when executing the power supply/demand adjustment processing.

Brief Description of the Drawings

FIG. 1A shows control device A of the first example embodiment of the present invention.
FIG. 1B shows control device AA of a modification of the first example embodiment.
FIG. 1C shows an example of control device AA of a modification of the first example embodiment.
FIG. 2 shows an example of each response time that is required by applications AP1-AP3.
FIG. 3 is a flow chart for describing the operation of control device A.
FIG. 4 shows control device B of the second example embodiment of the present invention.
FIG. 5 shows an example of the response times and degree of communication confidence of applications AP1-AP3.
FIG. 6 is a flow chart for describing the operation of control device B.
FIG. 7 shows control device C of the third example embodiment of the present invention.
FIG. 8 shows an example of the selection result of selection unit B3.
FIG. 9 is a flow chart for describing the operation of control unit C3.
FIG. 10 shows control device D of the fourth example embodiment of the present invention.
FIG. 11 shows an example of the response times, the degrees of communication confidence, and the profitability of applications AP1-AP3.
FIG. 12 shows an example of the profitability condition of storage batteries R3-1-R3-n.
FIG. 13 is a flow chart for describing the operation of selecting storage batteries that are the objects of use in each application.
FIG. 14 shows control device E of the fifth example embodiment of the present invention.
FIG. 15 shows an example of the response times, the degrees of communication confidence, the profitability, the reliability, and the execution times of applications AP1-AP3.
FIG. 16 shows examples of the implementation guarantee and the usage-permitted intervals of storage batteries R3-1-R3-n.
FIG. 17 is a flow chart for describing the operation of selecting storage batteries that are to be used for each application.
FIG. 18 shows control device F of the sixth example embodiment of the present invention.
FIG. 19 shows control device G of the seventh example embodiment of the present invention.
FIG. 20 shows control device H of the eighth example embodiment of the present invention.
FIG. 21 shows power control system 1000 that adopts the battery control system of the ninth example embodiment of the present invention.
FIG. 22 shows an example of load dispatching unit 2, central control device 7, and a plurality of apparatus control devices 8.
FIG. 23A shows an example of storage battery distribution ratio curve 202a at the time of discharging.
FIG. 23B shows an example of storage battery distribution ratio curve 202b at the time of charging.
FIG. 24A shows an example of the DR2 charging/discharging gain line.
FIG. 24B shows an example of the DR3 drooping characteristic line.
FIG. 25 is a flow chart for describing the operation of selecting candidates of storage batteries that are to be used.
FIG. 26 shows the result of candidate selection.
FIG. 27 is a flow chart for describing the operation of selecting batteries for adjustment.
FIG. 28 shows an example of the intent to participate of each customer.
FIG. 29 shows an example of the LFC center for which implementation guarantee is required.
FIG. 30 shows the selection result of storage batteries that are to be used for each DR application.
FIG. 31 shows a power demand curve during normal operation of customer No. 1.
FIG. 32 is a sequence diagram for describing the $P_{ES\text{-}DR2}$ derivation operation.
FIG. 33 is a sequence diagram for describing the DR2 comprehension operation.
FIG. 34 is a sequence diagram for describing the DR2 allotment operation.
FIG. 35 shows an example of local charging/discharging gain line 800A.
FIG. 36 is a sequence diagram for describing the charging/discharging control operation.
FIG. 37 is a sequence diagram for describing the DR3 comprehension operation.
FIG. 38 is a sequence diagram for describing the DR3 allotment operation.
FIG. 39 is a sequence diagram for describing the charging/discharging control operation.
FIG. 40 is a view for describing control relating to spinning reserve.
FIG. 41 shows apparatus control device K that is provided with acquisition unit K1 and reporting unit K2.

Best Mode for Carrying Out the Invention

Example embodiments of the present invention are next described with reference to the accompanying drawings.

First Example Embodiment

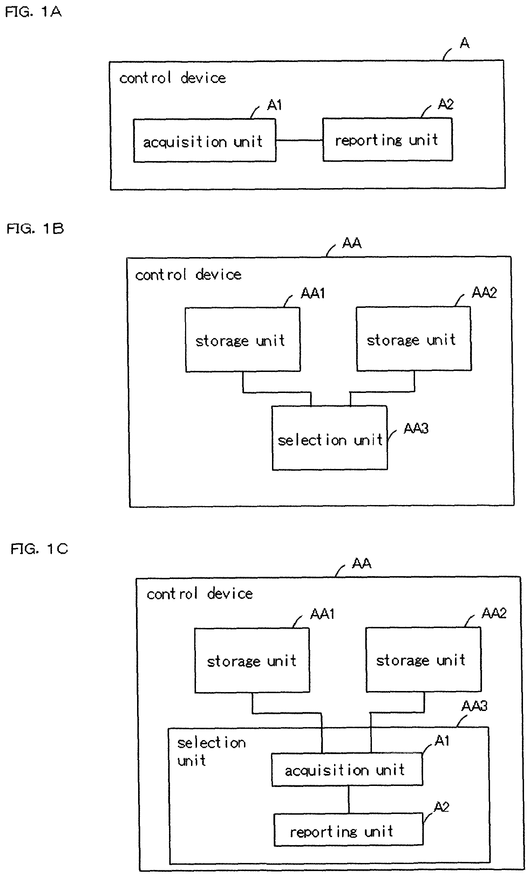

FIG. 1A shows control device A of the first example embodiment of the present invention.

Control device A includes acquisition unit A1, and reporting unit A2.

Acquisition unit A1 acquires information that relates to storage batteries that is indicated for each storage battery and information that indicates characteristics of power supply/demand adjustment processing.

In the present example embodiment, a power demand reduction process, an LFC (Load Frequency Control) process, and a GF (Governor Free) process are used as a plurality of types of power supply/demand adjustment processing. The plurality of types of power supply/demand adjustment processing are not limited to the power demand reduction process, LFC process, and GF process and can be altered as appropriate. Further, the number of types of power supply/demand adjustment processing is not limited to three and may be one or more.

The power demand reduction process, the LFC process, and the GF process are hereinbelow referred to as "application AP1," "application AP2," and "application AP3," respectively.

Application AP1 (the demand reduction process) is a process of, for example, peak cutting of the power demand. Application AP2 (the LFC process) and application AP3 (the GF process) are processes of controlling (stabilizing) the grid frequency of the power grid.

All of applications AP1-AP3 are processes of performing power supply/demand adjustment by controlling the charging and discharging of storage batteries that are connected to a power grid.

The storage batteries are examples of power supply/demand adjustment devices. The power supply/demand adjustment devices are not limited to storage batteries and can be altered as appropriate. For example, electrical apparatuses, electric water heaters, heat pump water heaters, pumps, and electric vehicles may also be used as power supply/demand adjustment devices.

Acquisition unit A1 acquires, as an example of the information that indicates characteristics of each application, information that indicates the response times that are required by each application. The "response time required by an application" is hereinbelow also referred to as the "response time of an application." The response time of an application is an example of the response characteristic required by an application.

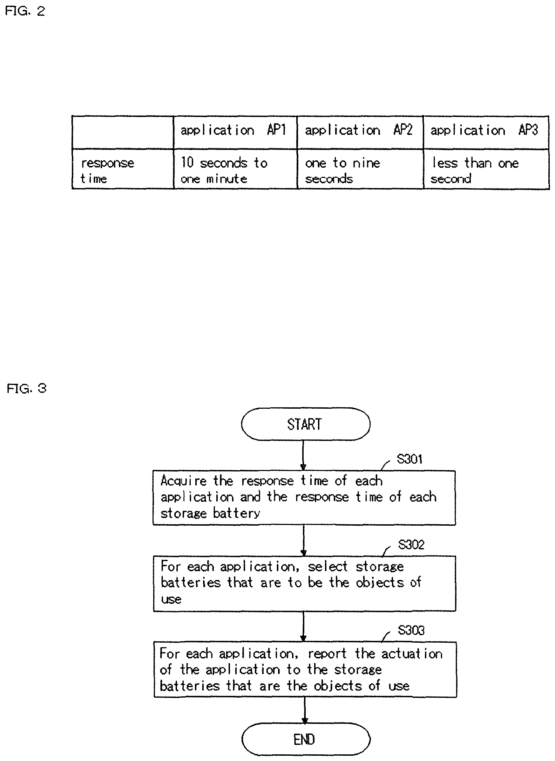

FIG. 2 shows an example of each response time that is required by applications AP1-AP3.

The response time required by application AP1 (the demand reduction process) is 10 seconds to one minute.

The response time required by application AP2 (the LFC process) is from one to nine seconds.

The response time required by application AP3 (the GF process) is one second or less.

Acquisition unit A1 acquires information that indicates the response time of each storage battery that is connected to a power grid. The information that indicates the response time of each storage battery is an example of the information that relates to each storage battery.

The response time is next described.

The response time is the time necessary from giving an instruction to execute a process until the first response.

For example, in the case of power supply/demand adjustment processing, the response time is the time required to cause the power demand curve to match a "target power demand curve" by carrying out the process (for example, 10 seconds to one minute for application AP1, one to nine seconds for application AP2, and one second or less for application AP3).
In the case of storage batteries, the response time is the time from receiving an instruction to carry out a relevant process until implementation of charging/discharging.

For each application, reporting unit A2 reports, on the basis of the information that indicates the response time of each application and information that indicates the response time of each storage battery, the actuation of the application to storage batteries that have response times that are equal to or less than the response time of the application. A storage battery that has a response time that is equal to or less than the response time of an application is an example of a storage battery that is the object of the application (hereinbelow also referred to as a "storage battery that is the object of use") and a storage battery that accommodates the response time of the application. A storage battery that is to be used is an example of a device that is the object of use. The storage batteries that are to be used for an application are storage batteries that are used when executing the application.

The operation of the present example embodiment is next described.

FIG. 3 is a flow chart describing the operation of control device A.

Acquisition unit A1 acquires information that indicates the response time of each application and information that indicates the response time of each storage battery (Step S301). For example, acquisition unit A1 acquires information that indicates the response time of each application and information that indicates the response time of each storage battery from an outside device. Acquisition unit A1 may also acquire information that indicates the response time of each application and information that indicates the response time of each storage battery from different outside devices.

Acquisition unit A1 next supplies the information that indicates the response time of each application and the information that indicates the response time of each storage battery to reporting unit A2.

Upon receiving the information that indicates the response time of each application and the information that indicates the response time of each storage battery, reporting unit A2 operates as described below.

Reporting unit A2 uses the information that indicates the response time of each application and the information that indicates the response time of each storage battery to select, for each application, storage batteries that have a response time that is equal to or less than the response time of the application as the storage batteries that are to be the objects of use (Step S302).

Reporting unit A2 next reports, for each application, the actuation of the application to the storage batteries that are the objects of use (Step S302). Upon receiving the report of the actuation of the application, storage batteries that are to be used for begin execution of the application.

The effect of the present example embodiment is next described.

In the present example embodiment, acquisition unit A1 acquires information that indicates the response time of each application and information that indicates the response time of storage batteries. Reporting unit A2 reports the actuation of the application to storage batteries that have a response time that is equal to or less than the response time of the application.

As a result, the selection of storage batteries having a response time that is longer than the response time of the application as storage batteries that are to be used for application can be prevented. The possibility of selecting, as a storage battery that is to be used for, a storage battery that accords with the characteristics of an application can therefore be increased. The use of storage batteries that are to be used and that accord with the characteristics of an application when executing that application enables execution of the power supply/demand adjustment realized by the application with higher precision.

A modification of the present example embodiment is next described.

The response times of each of applications AP1-AP3 are not limited to 10 seconds to one minute, one to nine seconds, and one second or less, respectively, and can be altered as appropriate.

When each application accords with a power company's demand (a demand for power supply/demand adjustment processing), the response time of each application is preferably set on the basis of the response time that is indicated as necessary in the demand.

In the present example embodiment, the response time of an application is used as a characteristic of the application, but the characteristic of the application is not limited to the response time and can be altered as appropriate.

Reporting unit A2 may also transmit, to an apparatus control device that controls storage batteries that are the objects of use of an application, operation control information for controlling the operation of the storage batteries that are to be used in accordance with the application and cause the apparatus control device to execute a process of controlling the operation of the storage batteries that is to be used for the application according to the operation control information. The operation control information is an example of the report of the actuation of an application.

Further, a control device may also include a storage unit that stores information that indicates the response times of applications and a storage unit that stores information that indicates the response times of storage batteries.

FIG. 1B shows control device AA that has a storage unit that stores information that indicates the response times of applications and a storage unit that stores information that indicates the response times of storage batteries.

Control device AA includes storage units AA1 and AA2 and selection unit AA3.

Storage unit AA1 is an example of the first storage unit. Storage unit AA2 is an example of the second storage unit.

Storage unit AA1 stores information that indicates the response times (hereinbelow "information that indicates response times" is also referred to as simply "response times") that are required by each application as an example of the characteristics of each application. Hereinbelow, "response time that is required by an application" is also referred to as "response time of an application." The response time of an application is an example of the response characteristic that is required by an application.

Storage unit AA2 stores information that indicates the response time of each storage battery that is connected to the power grid. Hereinbelow, "information that indicates the response time of a storage battery" is also referred to as simply "response time of a storage battery." The response time of each storage battery is an example of the information of each storage battery.

Selection unit AA3 includes acquisition unit A1 and reporting unit A2.

FIG. 1C shows control device AA that contains storage units AA1 and AA2 and selection unit AA3 that includes acquisition unit A1 and reporting unit A2.

Selection unit AA3 (acquisition unit A1) acquires the response time of each application that is stored in storage unit AA1 and the response time of each storage battery that is stored in storage unit AA2.

Selection unit AA3 (reporting unit A2) uses the response time of each application and the response time of each storage battery to select, for each application, storage batteries having response times that are equal to or less than the response time of the application as storage batteries that are to be used. A storage battery that has a response time that is equal to or less than the response time of the application is an example of a storage battery that satisfies the response time of the application. A storage battery that is to be used is an example of a device that is to be used. The storage batteries that are to be used for an application are storage batteries that are used at the time of executing the application.

For each application, selection unit AA3 (reporting unit A2) reports the actuation of the application to the storage batteries that are to be used for the application.

When acquisition unit A1 and reporting unit A2 are provided separate from selection unit AA3, selection unit AA3 will be a component that has the function of using the response time of each application and the response time of each storage battery to select storage batteries having a response time that is equal to or less than the response time of the application as the storage batteries that are to be used.

Moreover, in the present modification and example embodiments that will subsequently be described, the selection unit may also be inside the reporting unit or may be provided separate from the reporting unit. Alternatively, the storage units may be inside the acquisition unit or may be provided separate from the acquisition unit.

Second Example Embodiment

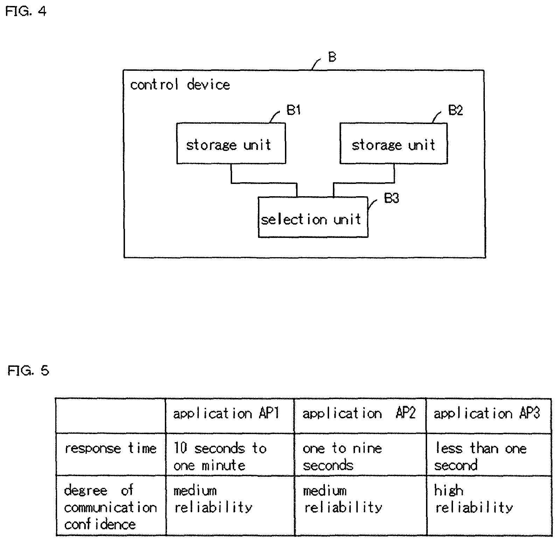

FIG. 4 shows control device B of the second example embodiment of the present invention.

The main points of difference between the first example embodiment and the second example embodiment are that a communication characteristic that is required by each application is used as a characteristic of applications AP1-AP3 in addition to the response time of each application in the second example embodiment. The second example embodiment is hereinbelow described with focus upon the points of difference from the first example embodiment.

Control device B includes storage units B1 and B2 and selection unit B3.

Storage unit B1 is an example of the first storage unit. Storage unit B1 stores information that indicates communication characteristics that are required by each application (hereinbelow "information that indicates communication characteristics" is also referred to as "communication characteristics") as the characteristic of applications AP1-AP3 in addition to the response time of each application. In the present example embodiment, the degree of communication confidence that is required by an application (information that indicates the degree of communication confidence that is required by an application) is used as a communication characteristic. Hereinbelow, "degree of communication confidence that is required by an application" is also referred to as "degree of communication confidence of an application."

FIG. 5 shows an example of the response times and degrees of communication confidence of applications AP1-AP3.

The response times of applications AP1-AP3 are the same as shown in FIG. 2.

The degree of communication confidence that is required by applications AP1 and AP2 is "medium reliability."

The degree of communication confidence that is required by application AP3 is "high reliability."

In the present example embodiment, the degree of communication confidence (medium reliability and high reliability) is determined on the basis of communication modes (hereinbelow "compatible communication modes") that can be accommodated on the storage battery side.

"High reliability" means that the compatible communication mode is VPN (Virtual Private Network) or the Internet. A storage battery for which the compatible communication mode is VPN or the Internet is a storage battery that can communicate by way of VPN or the Internet.

"Medium reliability" means that the compatible communication mode is 3G (3rd Generation) or the Internet. A storage battery for which the compatible communication mode is 3G or the Internet is a storage battery that can communicate by way of 3G or the Internet.

The degree of communication confidence is not limited to a characteristic that is determined based on the compatible communication mode and can be altered as appropriate. For example, the degree of communication confidence may also be determined on the basis of the error rate that occurs in communication with the storage battery side. For example, "medium reliability" may mean that the error rate is equal to or lower than a first threshold value, and "high reliability" may mean that the error rate is equal to or lower than a second threshold value that is lower than the first threshold value.

Storage unit B2 is an example of the second storage unit. Storage unit B2 stores information that indicates response times and compatible communication modes of each storage battery that is connected to the power grid. Hereinbelow, "information that indicates the compatible communication mode of a storage battery" is also referred to as simply "compatible communication mode of a storage battery." The compatible communication mode of a storage battery is an example of the information of the storage battery.

As in the first example embodiment, selection unit B3 includes an acquisition unit and a reporting unit.

The acquisition unit in selection unit B3 acquires the response times of applications and the degrees of communication confidence of applications from storage unit B1. Further, the acquisition unit in selection unit B3 further acquires the response time and the compatible communication mode of each storage battery from storage unit B2.

Selection unit B3 refers to the response time of the application, the degree of communication confidence of the application, and the response time and compatible communication mode of each storage battery to select, as the storage batteries that are to be used for each application, storage batteries that satisfy both the response time of the application and the degree of communication confidence of the application. For each application, reporting unit in selection unit B3 reports the actuation of the application to storage batteries that are the objects of use of the application.

The operation of the present example embodiment is next described.

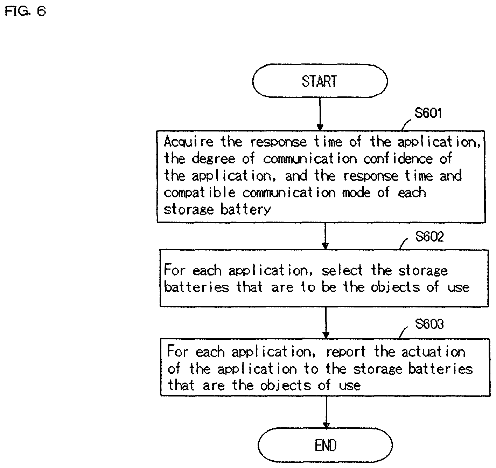

FIG. 6 is a flow chart for describing the operation of control device B.

The acquisition unit in selection unit B3 acquires the response time of the application, the degree of communication confidence of the application, and the response time and compatible communication mode of each storage battery (Step S601).

Selection unit B3 next, on the basis of the response times of the applications, the degrees of communication confidence of the applications, and the response time and compatible communication mode of each storage battery, selects as the storage batteries that are to be used for each application from among storage batteries that have a response time that is equal to or lower than the response time of the application, storage batteries that have a compatible communication mode that satisfy the degree of communication confidence of the application (Step S602).

Here, selection unit B3 uses VPN or the Internet as the compatible communication mode that corresponds to "high reliability" that is the degree of communication confidence of an application. In addition, selection unit B3 also uses VPN that corresponds to "high reliability" in addition to 3G and the Internet as the compatible communication modes that corresponds to "medium reliability" that is the degree of communication confidence of applications.

Selection unit B3 may also store for each application the selection results of storage batteries that are to be used in storage unit B1.

The reporting unit in selection unit B3 next, for each application, reports the actuation of the application to storage batteries that are to be used (Step S603).

The storage batteries that are to be used for begin execution of the application upon receiving the report of the actuation of the application.

The effects of the present example embodiment are next described.

In the present example embodiment, storage unit B1 stores the response time and degree of communication confidence that are required by each application. Storage unit B2 stores the response time and compatible communication mode of each storage battery that is connected to the power grid. For each of applications AP1-AP3, selection unit B3 selects, as the storage batteries that are to be used, those storage batteries that satisfy the response time and degree of communication confidence of each of the applications.

As a result, the selection of storage batteries that do not satisfy any of the plurality of characteristics required by an application as storage batteries that are to be used for the application can be prevented.

A modification of the present example embodiment is next described.

Storage unit B1 may also serve as storage unit B2. In this case, storage unit B1 stores the response time and degree of communication confidence that are required by each application and the response time and compatible communication mode of each storage battery.

The degrees of communication confidence of each of applications AP1-AP3 are not limited to "medium reliability," "medium reliability," and "high reliability," respectively, and can be altered as appropriate.

When each application is an application that accords with the demand of a power company (a demand for power supply/demand adjustment processing), the response time and degree of communication confidence of each application are preferably set on the basis of the response time and degree of communication confidence that are required by the demand from the power company.

Selection unit B3 may transmit, to apparatus control devices that control the storage batteries that are to be used for an application, operation control information for controlling the operation of the storage batteries that are to be used in accordance with the application, and may cause the apparatus control devices to execute processing that controls the operation of the storage batteries that are to be used for the application in accordance with the operation control information.

Either one or both of storage unit B1 and storage unit B2 may be incorporated in selection unit B3. For example, storage unit B1 and storage unit B2 may be memory that is incorporated in selection unit B3.

Storage unit B1, storage unit B2, and selection unit B3 may be individual devices. Alternatively, storage unit B1 and storage unit B2 may be incorporated in the same device, and selection unit B3 may be incorporated in another device.

Selection unit (acquisition unit) B3 may acquire information that relates to the characteristics of applications and information that relates to batteries from a storage unit as described in the example embodiment above, or may acquire the information from an outside device.

Third Example Embodiment

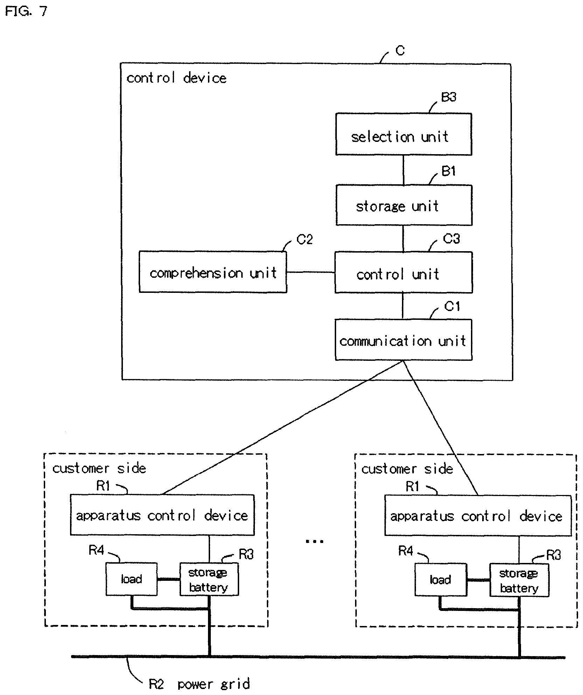

FIG. 7 shows control device C of the third example embodiment of the present invention. In FIG. 7, components that are identical to components shown in FIG. 4 are given the same reference numbers.

The main points of difference between the third example embodiment and the second example embodiment are that, in the third example embodiment, storage unit B1 also serves as storage unit B2, and further, communication unit C1, comprehension unit C2, and control unit C3 have been added to control the operation of storage batteries that are to be used for and that have been selected for each application. The third example embodiment is described below with focus on the points of difference from the second example embodiment.

Control device C includes storage unit B1, selection unit B3, communication unit C1, comprehension unit C2, and control unit C3. Selection unit B3 is an example of the acquisition unit. In addition, selection unit B3, communication unit C1, and control unit C3 are contained in the reporting unit. In other words, Selection unit B3 functions as the acquisition unit and collects information that indicates the characteristics of each application and information of each storage battery. Then, in addition to selection unit B3, communication unit C1 and control unit C3 function as the reporting unit. Selection unit B3, communication unit C1, and control unit C3 select, for each application, storage batteries as the storage batteries that are to be used on the basis of the acquired information that indicates the characteristics of each application and information of each storage battery. Selection unit B3, communication unit C1, and control unit C3 then, for each application, report the actuation of the application to the storage batteries that were selected as the storage batteries that are to be used.

Communication unit C1 communicates with each apparatus control device R1 of the customer side.

Each apparatus control device R1 controls the operation (charging and discharging) of storage batteries R3 that are connected to the power grid R2. Load R4 is also connected to power grid R2. Load R4 is, for example, a home appliance. Each customer holds apparatus control device R1, storage battery R3, and load R4.

Storage unit B1 also stores the selection results of selection unit B3.

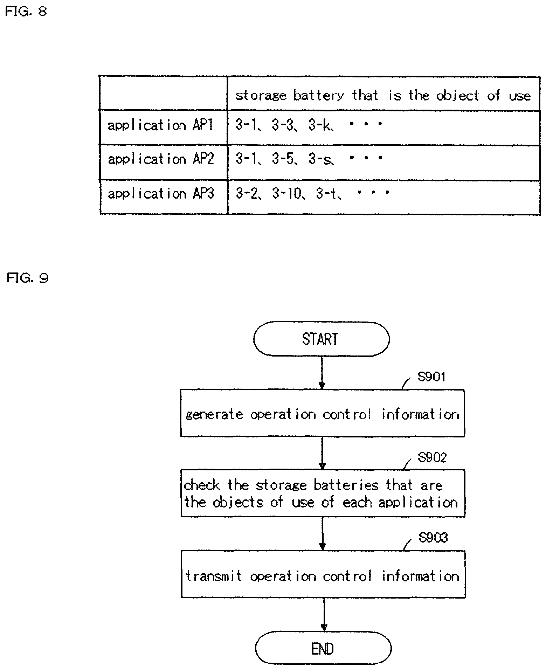

FIG. 8 shows an example of the selection results of selection unit B3.

In FIG. 8, the suffix that is appended to "3" (where "3" means storage battery R3) represents the ID (Identification) of storage battery R3.

Comprehension unit C2 comprehends the information of each application. The information of an application indicates at least the processing content of an application (the content of power supply/demand adjustment).

Control unit C3 uses the information of each application that was comprehended by comprehension unit C2 to generate, for each application, operation control information for controlling the storage batteries that are to be used for the application. The operation control information that accords with applications AP1-AP3 is hereinbelow also referred to as "operation control information of application AP1," "operation control information of application AP2," and "operation control information of application AP3," respectively.

The operation control information of application AP1 is operation control information for a peak-cutting (demand reduction) process. The operation control information of application AP1 is, for example, operation control information that indicates the amount of power that is be reduced.

The operation control information of application AP2 is operation control information for LFC. The operation control information of application AP2 is operation control information that prescribes the process of controlling the operation of storage batteries that are to be used on the basis of the integrated value of the frequency deviation (deviation from the standard frequency) of the grid frequency of power grid R2.

The operation control information of application AP3 is operation control information for GF. The operation control information of application AP3 is operation control information that prescribes the process of controlling the operation of storage batteries that are to be used on the basis of the frequency deviation of the grid frequency of power grid R2.

Control unit C3 repeatedly transmits from communication unit C1 the operation control information of each of applications AP1-AP3 to apparatus control devices R1 that are connected to the storage batteries that are to be used for applications AP1-AP3, respectively, while providing time intervals.

Upon receiving operation control information, apparatus control devices R1 control the operation of storage batteries R3 that are to be used in accordance with the operation control information at a time interval (for example, a time interval that is shorter than the reception interval) that is equal to or smaller than the reception interval of the operation control information.

When the discharging (reverse power flow) from storage battery R3 that is to be used (customer side) to power grid R2 is prohibited, apparatus control device R1 causes the discharged power of storage battery R3, that is to be used, to discharge within the range of the power consumption of load R4 of the customer. The power demand upon power grid R2 is thus reduced by the consumption by load R4 of the discharged power of storage battery R3 that is to be used.

On the other hand, when the discharging (reverse power flow) from storage battery R3 that is to be used for (customer side) to power grid R2 is not prohibited, apparatus control device R1 may supply the discharged power of storage battery R3 that is to be used to power grid R2.

The operation of the present example embodiment is next described.

Selection unit B3 executes Steps S601 and S602 shown in the above-described FIG. 6. Selection unit B3 further stores the selection results in storage unit B1.

Control unit C3 operates after selection unit B3 has selected the storage batteries that are the objects of use for each application.

FIG. 9 is a flow chart for describing the operation of control unit C3.

Control unit C3 generates operation control information for each application (Step S901).

For example, control unit C3 creates, for each application, operation control information that reflects the power supply/demand adjustment processing content of the application (operation control information of applications AP1, AP2, and AP3) on the basis of the power supply/demand adjustment processing content of each application that comprehension unit C2 has comprehended.

Control unit C3 next refers to storage unit B1 to check the storage batteries that are the objects of use of applications AP1, AP2, and AP3 (Step S902).

Control unit C3 then transmits the operation control information of each of applications AP1, AP2, and AP3 from communication unit C1 to apparatus control devices R1 that are connected to the storage batteries that are the objects of use of applications AP1, AP2, and AP3, respectively (Step S903).

When the execution intervals of each of applications AP1, AP2, and AP3 have been determined, control unit C3 executes Steps S901-S903 for, for example, the application for which the current day and time are within the execution interval.

Control unit C3 repeatedly executes Steps S901-S903 at period T1. Control unit C3 may alter period T1 within a time range that is equal to or greater than the standard interval T1s.

Upon receiving operation control information, apparatus control devices R1 control the operation of the storage batteries R3 that are the objects of use according to the operation control information at period T2 that is shorter than the standard period T1s. Apparatus control devices R1 may also alter period T2 within a time range that is shorter than the standard interval T1s.

The effect of the present example embodiment is next described.

In the present example embodiment, control unit C3 repeatedly executes the transmission of operation control information at period T1. Apparatus control devices R1 control the operation of storage batteries R3 that are the objects of use according to the operation control information at period T2 that is shorter than period T1. Apparatus control devices R1 are able to use operation control information that has been once received a plurality of times to control the operation of storage batteries that are to be used.

Apparatus control devices R1 are therefore able to use operation control information that has been received to control the operation of storage batteries that are to be used even in the event of a failure in the transmission of new operation control information.

Accordingly, in the present example embodiment, the operation of storage batteries that are to be used for can be controlled with precision even should a failure occur in transmission due to a circumstance such as the selection of a storage battery that does not satisfy the degree of communication confidence of an application as the storage battery that is to be used.

As a result, in the present example embodiment, selection unit B3 may select, as a storage battery that is to be used, a storage battery that does not satisfy the degree of communication confidence required by an application.

Selection unit (acquisition unit) B3 may acquire, for example, information that relates to the characteristics of applications and information that relates to batteries from a storage unit as in the above-described example embodiment, or may acquire information from an outside device.

Fourth Example Embodiment

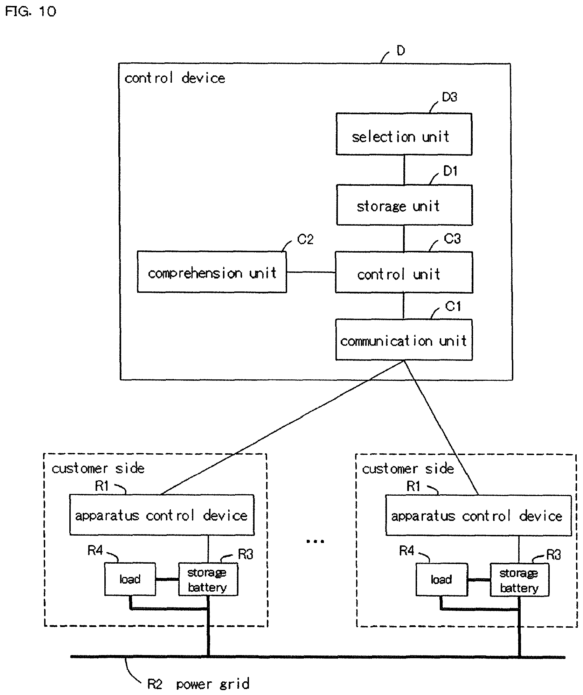

FIG. 10 shows control device D of the fourth example embodiment of the present invention. In FIG. 10, components that are identical to components shown in FIG. 7 are given the same reference numbers.

The point of difference between the fourth example embodiment and the third example embodiment is that in the fourth example embodiment, the profitability of each application is used as a characteristic of each of applications AP1-AP3 in addition to the response time and communication reliability of each application.

In the present example embodiment, when the storage batteries that are to be used are used in the implementation of an application, the compensation that is paid to the user (customer) of the storage batteries that are to be used is used as the profit of the application.

In addition, a point of difference between the fourth example embodiment and the third example embodiment regarding the configuration is that, in the fourth example embodiment, storage unit D1 and selection unit D3 are used instead of storage unit B1 and selection unit B3.

The fourth example embodiment is next described with focus upon the points of difference with the third example embodiment.

Control device D includes storage unit D1, selection unit D3, communication unit C1, comprehension unit C2, and control unit C3. Selection unit D3 is an example of the acquisition unit. In addition, selection unit D3, communication unit C1, and control unit C3 are contained in the reporting unit. In other words, selection unit D3 functions as the acquisition unit and collects the information that indicates the characteristics of each application and the information of each storage battery. Then communication unit C1 and control unit C3 in addition to selection unit D3 function as the reporting unit. Selection unit D3, communication unit C1, and control unit C3, on the basis of the acquired information that indicates the characteristics of each application and information of each storage battery, select for each application storage batteries as the storage batteries that are to be used. Selection unit D3, communication unit C1, and control unit C3 then report the actuation of the application to the storage batteries that were selected as the storage batteries that are to be used for each application.

Storage unit D1 is an example of the first storage unit and the second storage unit.

Storage unit D1 stores information that indicates the profitability of each application (hereinbelow, "information that indicates the profitability of an application" is also referred to as simply "profitability of an application") in addition to the response time and degree of communication confidence of each application as the characteristics of each of applications AP1-AP3.

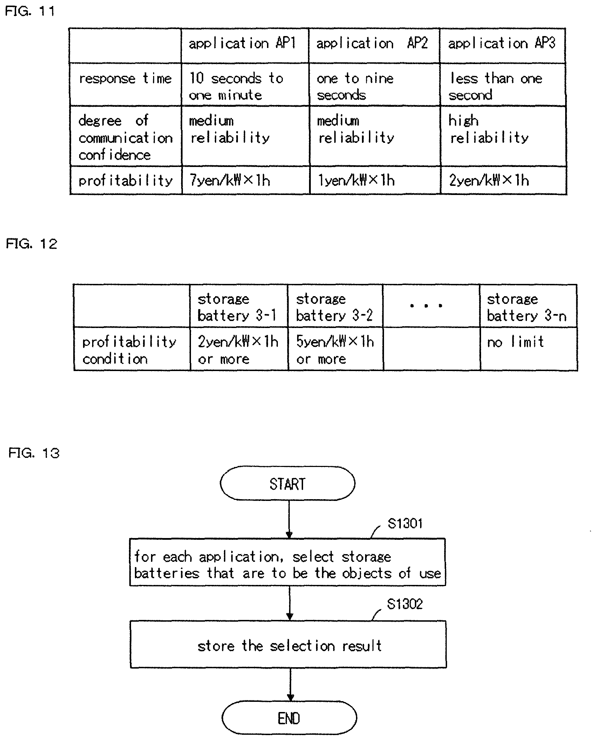

FIG. 11 shows an example of the response times, the degrees of communication confidence, and the profitability of applications AP1-AP3.

The response times and degrees of communication confidence of applications AP1-AP3 are identical to the characteristics shown in FIG. 5.

The profitability of application AP1 is 7 yen / kW x 1h.

The profitability of application AP2 is 1 yen / kW x 1h.

The profitability of application AP3 is 2 yen / kW x 1h.

Storage unit D1 further stores the response times and compatible communication modes of each storage battery that is connected to the power grid.

Storage unit D1 further stores information that indicates the profitability conditions (hereinbelow, "information that indicates profitability conditions" is referred to as simply "profitability condition") of each of storage batteries R3-1-R3-n.

The profitability condition is an example of a usage condition. The profitability condition is an example of the compensation condition in which compensation for the use of a storage battery be equal to or greater than a predetermined value. The profitability condition is, for example, set by the customer that maintains storage battery R3. The profitability condition may also be set by a person who differs from the customer who is the person who maintains storage battery R3 or device.

FIG. 12 shows an example of the profitability conditions of storage batteries R3-1-R3-n.

The profitability condition of storage battery R3-1 is 2 yen / kW x 1h or more. The profitability 2 yen / kW x 1h is an example of a predetermined value.

The profitability condition of storage battery R3-2 is 5 yen / kW x 1h or more. The profitability 5 yen / kW x 1h is an example of a predetermined value.

The profitability condition of storage battery R3-n is not limited. In this case, 0 yen corresponds to the predetermined value.

Selection unit D3 acquires information that is stored in storage unit D1.

For each application, selection unit D3 selects, as the storage battery that is to be used, a storage battery for which the profitability condition is satisfied among storage batteries that satisfy both the response time of the application and the degree of communication confidence of the application.

For example, it will be assumed that storage battery R3-1 satisfies the response time and degree of communication confidence of application AP1. In this case, the profitability of application AP1 (7 yen / kW x 1h) satisfies the profitability condition of storage battery R3-1 (at least 2 yen / kW x 1h), and selection unit D3 therefore selects storage battery R3-1 as the storage battery that is to be used for application AP1.

On the other hand, although storage battery R3-1 satisfies the response time and degree of communication confidence of application AP2, the profitability of application AP2 (1 yen / kW x 1h) does not satisfy the profitability condition of storage battery R3-1 (at least 2 yen / kW x 1h). As a result, selection unit D3 does not select storage battery R3-1 as a storage battery that is to be used for application AP2.

It will be assumed that storage battery R3-1 satisfies the response time and degree of communication confidence of application AP3. In this case, the profitability of application AP3 (2 yen / kW x 1h) satisfies the profitability condition of storage battery R3-1 (at least 2 yen / kW x 1h), and selection unit D3 therefore selects storage battery R3-1 as the storage battery that is to be used for application AP3.

The operation of the present example embodiment is next described with focus upon the points of difference with the operation of the third example embodiment.

The operation of the present example embodiment and the operation of the third example embodiment differ with regard to the operation of selecting storage batteries that are to be used for each application. In the interest of simplifying the following explanation, of the operation of the present example embodiment, the operation of selecting storage batteries that are to be used for each application is described.

FIG. 13 is a flow chart for describing the operation of selecting storage batteries that are to be used for each application in the present example embodiment.

Selection unit D3 refers to storage unit D1 and for each application selects, from among storage batteries that have a response time that is equal to or less than the response time of the application and that have a compatible communication mode that satisfies the degree of communication confidence of the application, storage batteries whose profitability condition is satisfied as the storage batteries that are to be used (Step S1301).

Selection unit D3 next stores the selection results in storage unit D1 (Step S1302).

In Step S1301, in a case in which one storage battery can be selected as the storage battery that is to be used for a plurality of applications, selection unit D3 gives priority to selecting that storage battery as the storage battery that is to be used for the application among the plurality of applications that has the best profitability.

The effect of the present example embodiment is next described.

In the present example embodiment, selection unit D3 selects for each application, of storage batteries that satisfy both the response time of the application and the degree of communication confidence of the application, storage batteries whose profitability condition is satisfied as the storage batteries that are to be used.

As a result, the selection, as storage batteries that are to be used, of storage batteries whose profitability condition is not satisfied can be prevented.

In addition, when one storage battery can be selected as a storage battery that is to be used for a plurality of applications, selection unit D3 gives priority to the selection of that storage battery as a storage battery that is to be used for, among the plurality of applications, the application for which compensation for use of the storage battery is highest.

As a result, the compensation to a customer who maintains a storage battery that is to be used can be made higher. The customer is therefore more greatly motivated regarding the selection of storage battery R3 as a storage battery that is to be used for.

Selection unit (acquisition unit) D3 may acquire, for example, information that relates to the characteristics of applications and information that relates to batteries from a storage unit as in the above-described example embodiment, or may acquire the information from an outside device.


Fifth Example Embodiment


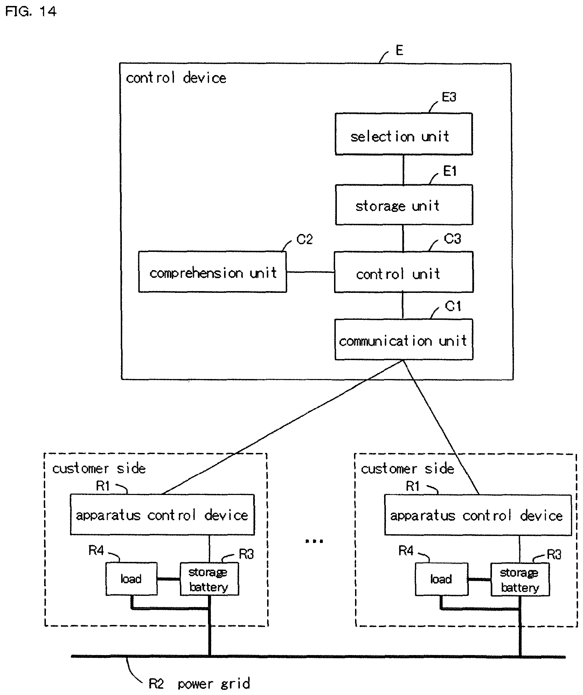

FIG. 14 shows control device E of the fifth example embodiment of the present invention. In FIG. 14, components that are identical to components shown in FIG. 10 are given the same reference numbers.

The main point of difference between the fifth example embodiment and the fourth example embodiment is that, in the fifth example embodiment, information that indicates the reliability of the implementation of an application by means of storage batteries and information that indicates the implementation time are used in addition to the response time, communication reliability, and profitability of each application as each of the characteristics of applications AP1-AP3. Hereinbelow, the "information that indicates the reliability of implementation" is also referred to as simply "implementation reliability." In addition, "information that indicates the implementation time" is also referred to as simply "implementation time."

In the present example embodiment, "implementation guaranteed" and "implementation not guaranteed" are used as the reliability.

Implementation guaranteed means that an application requires a guarantee of the implementation of an application by means of storage batteries that are to be used.

Implementation not guaranteed means that application does not require a guarantee of the implementation of an application by means of storage batteries that are to be used.

A point of difference between the fifth example embodiment and the fourth example embodiment regarding configuration is that, in the fifth example embodiment, storage unit E1 and selection unit E3 are used in place of storage unit D1 and selection unit D3, respectively.

In the following explanation, the fifth example embodiment is described with focus on the points of difference with the fourth example embodiment.

Control device E includes storage unit E1, selection unit E3, communication unit C1, comprehension unit C2, and control unit C3. Selection unit E3 is an example of the acquisition unit. In addition, selection unit E3, communication unit C1, and control unit C3 are included in the reporting unit. In other words, selection unit E3 functions as the acquisition unit and collects information that indicates the characteristics of each application and information of each storage battery. Communication unit C1 and control unit C3 in addition to selection unit E3 function as the reporting unit. Selection unit E3, communication unit C1, and control unit C3 select storage batteries as storage batteries that are to be used for each application on the basis of the acquired information that indicates the characteristics of each application and information of each storage battery. Selection unit E3, communication unit C1, and control unit C3 then report the actuation of an application to the storage batteries that have been selected as the storage batteries that are to be used for each application.

Storage unit E1 is an example of the first storage unit and the second storage unit.

Storage unit E1 stores, as each of the characteristics of applications AP1-AP3, the reliability (implementation guaranteed and implementation not guaranteed) and the implementation time of each application in addition to the response time, the degree of communication confidence, and the profitability of each application.

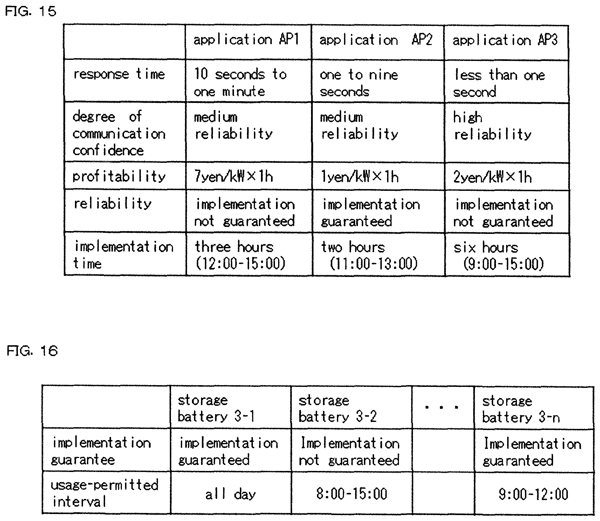

FIG. 15 shows an example of the response time, the degree of communication confidence, the profitability, the reliability, and the implementation time of each of applications AP1-AP3.

The response time, degree of communication confidence, and profitability of applications AP1-AP3 are the same as shown in FIG. 11.

The reliability and implementation time of application AP1 are implementation not guaranteed and three hours (12:00-15:00), respectively.

The reliability and implementation time of application AP2 are implementation guaranteed and two hours (11:00-13:00), respectively.

The reliability and implementation time of application AP3 are implementation not guaranteed and six hours (9:00-15:00), respectively.

Storage unit E1 further stores the response time, compatible communication mode, and profitability condition of each of storage batteries R3-1-R3-n.

Storage unit E1 further stores information that indicates the implementation guarantee and usage-permitted interval of each of storage batteries R3-1-R3-n. "Information that indicates the implementation guarantee" is hereinbelow referred to as simply "implementation guarantee." In addition, the "information that indicates the usage-permitted interval" is hereinbelow also referred to as simply "usage-permitted interval." The implementation guarantee is an example of the implementation guarantee condition that relates to the implementation guarantee of an application by storage batteries. The usage-permitted interval is an example of the usage interval condition.

The implementation guarantee and the usage-permitted interval are set by, for example, the customer that is the person that maintains storage battery R3. The implementation guarantee and the implementation-permitted interval may be set by a person that differs from the customer that is the person who maintains storage battery R3 or device.

FIG. 16 shows an example of the implementation guarantee and usage-permitted interval of storage batteries R3-1-R3-n.

The implementation guarantee and usage-permitted interval of storage battery R3-1 are implementation guaranteed and all day, respectively.

The implementation guarantee and usage-permitted interval of storage battery R3-2 are implementation not guaranteed and 8:00-15:00, respectively.

The implementation guarantee and usage-permitted interval of storage battery R3-3 are implementation guaranteed and 9:00-12:00, respectively.

Selection unit E3 acquires the information that is stored by storage unit E1.

Selection unit E3 refers to storage unit E1 and selects for each application, as the storage batteries that are to be used, all storage batteries that meet the following Conditions (a)-(e).

Condition (a): Has a response time equal to or less than the response time of the application.
Condition (b): Has a compatible communication mode that satisfies the degree of communication confidence of the application.
Condition (c): Has a profitability condition that is satisfied by the profitability of the application.
Condition (d): Has an implementation guarantee that satisfies the reliability of the application.
Condition (e): Has a usage-permitted interval that is contained in the implementation time of the application.

In Condition (d), the implementation guarantee that satisfies the reliability "implementation not guaranteed" of an application is "implementation guaranteed" and "implementation not guaranteed," and the implementation guarantee that satisfies the reliability "implementation guaranteed" of an application is "implementation guaranteed."

The operation of the present example embodiment is next described while focusing on the points of difference with the operation of the fourth example embodiment.

The operation of the present example embodiment and the operation of the fourth example embodiment differ with respect to the operation of selecting storage batteries that are to be used for each application. In the interest of simplifying the explanation below, of the operation of the present example embodiment, the operation of selecting storage batteries that are to be used for each application is described.

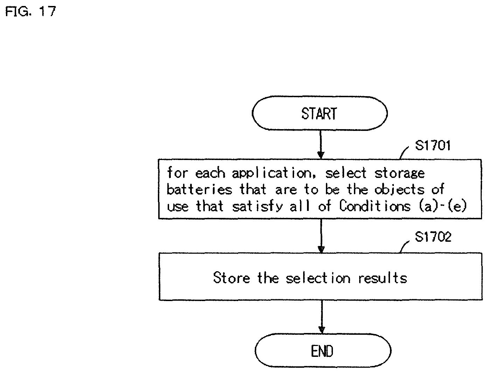

FIG. 17 is a flow chart for describing the operation of selecting storage batteries that are to be used for each application in the present example embodiment.

Selection unit E3 acquires information that is stored by storage unit E1, and for each application, selects as the storage batteries that are to be used storage batteries that satisfy all of Conditions (a)-(e) (Step S1701).

Selection unit E3 next stores the selection result in storage unit E1 (Step S1702).

Under circumstances in which one storage battery can be selected as the storage battery that is to be used for a plurality of applications in Step S1701, selection unit E3 gives priority to selecting the storage battery as the storage battery that is to be used for the application for which profitability is best among the plurality of applications.

The effect of the present example embodiment is next described.

In the present example embodiment, selection unit E3 selects for each application storage batteries that satisfy all of Conditions (a)-(e) as the storage batteries that are to be used for. As a result, the selection of a storage battery that does not satisfy any of Conditions (a)-(e) as a storage battery that is to be used can be prevented.

Selection unit (acquisition unit) E3 may acquire, for example, information that relates to the characteristics of applications and information that relates to storage batteries from a storage unit as described in the example embodiment above, or may acquire the information from an outside device.

Sixth Example Embodiment

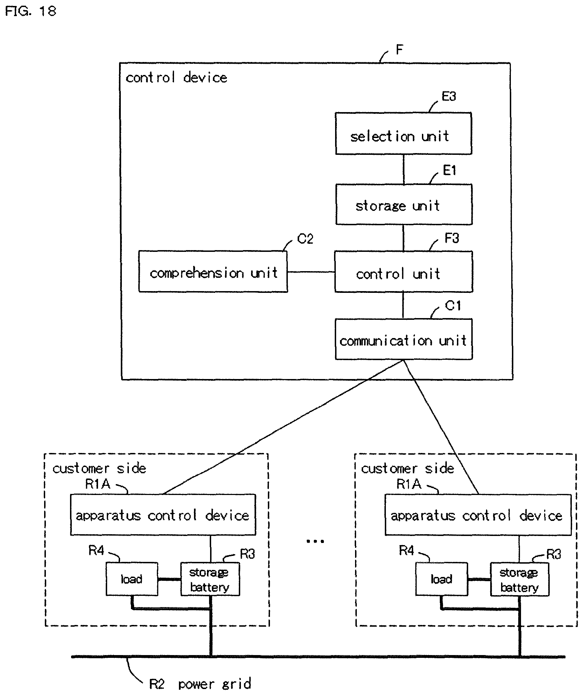

FIG. 18 shows control device F of the sixth example embodiment of the present invention. In FIG. 18, components that are the same as components shown in FIG. 14 are given the same reference numbers.

The main point of difference between the sixth example embodiment and the fifth example embodiment is that in the sixth example embodiment, a process is executed for determining a baseline of the power demand for each of applications AP1-AP3. The baseline of the power demand of application AP1 is an assumed value of the power demand of customers under circumstances in which application AP1 is not executed. The baselines of power demand of each of applications AP2 and AP3 are fixed values.

The baseline of the power demand is used, for example, for checking the state of implementation of an application by storage batteries that are to be used.

In addition, a point of difference between the sixth example embodiment and the fifth example embodiment regarding configuration is that in the sixth example embodiment, control unit F3 and apparatus control device R1A are used in place of control unit C3 and apparatus control device R1.

The sixth example embodiment is next described with focus on the points of difference with the fifth example embodiment.

Control device F includes storage unit E1, selection unit E3, communication unit C1, comprehension unit C2, and control unit F3.

Control unit F3 has the function of, in addition to the functions of control unit C3, determining the baseline of power demand for each of applications AP1-AP3.

For example, control unit F3 uses a typical averaging method or a regression method to determine a baseline of the power demand of application AP1 for each customer on the basis of the history of power consumption of customers that is measured by a power meter of each customer. Control unit F3 may determine the power demand baseline of application AP1 by using a power demand forecast of the implementation time slots of application AP1 for each customer.

In addition, control unit F3 determines for each customer, as the power demand baseline of applications AP2 and AP3, a value obtained by correcting the measurement value of the power meter of the customer by the charging/discharging amount of storage battery R3 immediately before implementation of applications AP2 and AP3. For example, control unit F3 determines, as the power demand baseline of applications AP2 and AP3, a value that is obtained by subtracting the charging/discharging amount of storage battery R3 immediately before implementation of applications AP2 and AP3 from the measurement value of the power meter. The charging/discharging amount of storage battery R3 immediately before implementation of applications AP2 and AP3 means the charging/discharging amount that is executed without regard to whether or not applications AP2 and AP3 were implemented. The charging/discharging of storage batteries R3 that implement applications AP2 and AP3 is preferably halted as much possible immediately before the implementation of applications AP2 and AP3.

In addition, during the execution of application AP1, if the amount of reduction of the power demand is insufficient with the discharging of storage batteries R3 that are to be used for application AP1, control unit F3 may also operate as shown below.

Control unit F3 transmits, from communication unit C1 to apparatus control devices R1A that are connected to storage batteries R3 that are to be used, load control information that calls for reducing the power consumption of loads R4 of the customers that maintain storage batteries R3 that are to be used by the portion of a designated amount for compensating for the amount of deficiency.

Apparatus control devices R1A, upon receiving the load control information, reduce the power consumption of loads R4 by the designated amount. The load control information is an example of operation control information.

In addition, apparatus control devices R1A report the value of the power meters of the customers to control device F.

According to the present example embodiment, the power demand baseline can be used to appraise, for each application, the actual implementation performance of the application.

Selection unit (acquisition unit) E3 may acquire, for example, information that relates to the characteristics of applications and information that relates to storage batteries from a storage unit as described in the above example embodiment, or may acquire the information from an outside device.

Seventh Example Embodiment

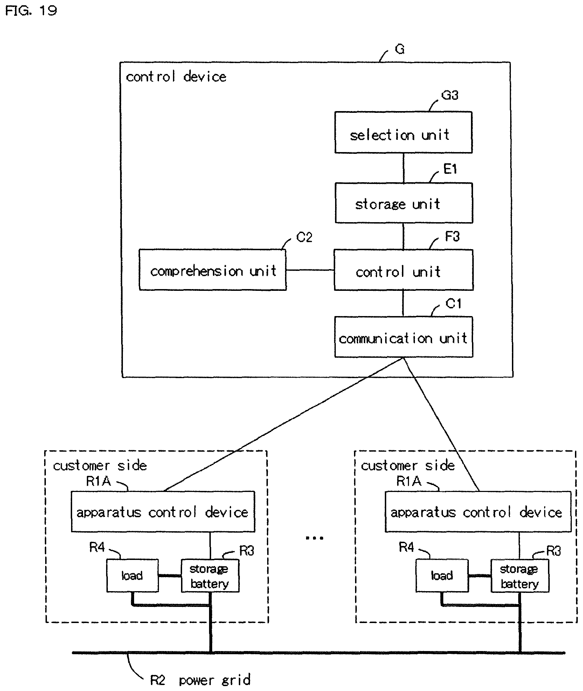

FIG. 19 shows control device G of the seventh example embodiment of the present invention. In FIG. 19, components that are identical to components shown in FIG. 18 are given the same reference numbers.

In the seventh example embodiment, storage batteries that are selectable as the storage batteries that are to be used for a plurality of applications are selected as the storage batteries that are to be used for each of a plurality of applications.

The point of difference regarding configuration between the seventh example embodiment and the sixth example embodiment is that in the seventh example embodiment, selection unit G3 is used in place of selection unit E3.

The seventh example embodiment is next described with focus upon the point of difference with the sixth example embodiment.

Control device G includes storage unit E1, selection unit G3, communication unit C1, comprehension unit C2, and control unit F3. Selection unit G3 is an example of the acquisition unit. In addition, selection unit G3, communication unit C1, and control unit F3 are contained in the reporting unit. In other words, selection unit G3 functions as the acquisition unit and collects information that indicates the characteristics of each application and information of each storage battery. Storage batteries are selected as the storage batteries that is to be used for each application on the basis of information that indicates the characteristics of each application and information of each storage battery, this information having been acquired by communication unit C1 and control unit C3 in addition to selection unit G3 as a reporting unit. The actuation of the applications is then reported to the storage batteries that were selected as storage batteries that are to be used for each application.

Selection unit G3 has, in addition to the function of selection unit E3, the function of selecting, as storage batteries that are to be used for each of the plurality of applications, storage batteries that can be selected as storage batteries that are to be used for a plurality of applications.

For example, selection unit G3 selects storage battery R3-k that can be selected as a storage battery that is to be used for application AP1 and AP2 as the storage battery that is to be used for application AP2 from 11:00 to 12:00 and as the storage battery that is to be used for application AP1 from 12:00 to 15:00.

Storage battery R3-k can be selected as a storage battery that is to be used for applications AP1 and AP2 for the period from 12:00 to 13:00, but selection unit G3 selects storage battery R3-k as the storage battery that is to be used for application AP1 that has higher profitability among applications AP1 and AP2.

According to the present example embodiment, selection unit G3 selects storage battery R3-k as the storage battery that is to be used for different applications according to the time slot. As a result, a single storage battery can be shared among a plurality of applications.

Selection unit (acquisition unit) G3 may acquire, for example, information relating to the characteristics of applications and information relating to storage batteries from a storage unit as described in the example embodiment above, or may acquire the information from an outside device.

Eighth Example Embodiment

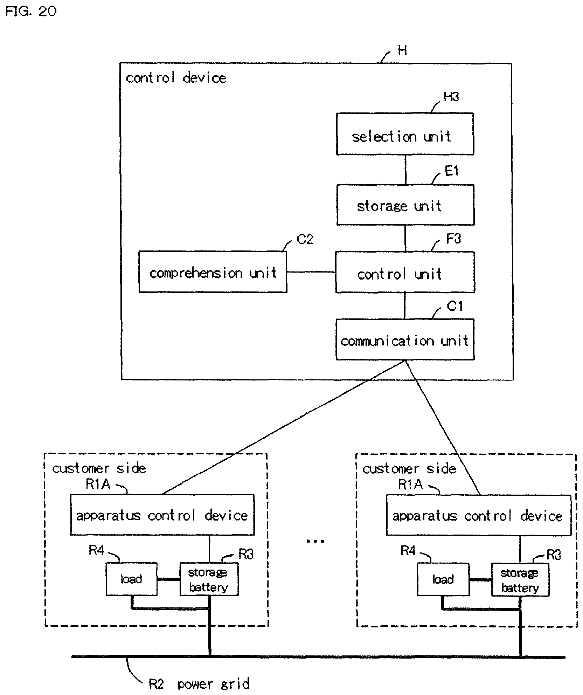

FIG. 20 shows control device H of the eighth example embodiment of the present invention. In FIG. 20, components that are identical to components shown in FIG. 19 are given the same reference numbers.

The main points of difference between the eighth example embodiment and the seventh example embodiment is that, in the eighth example embodiment, spinning reserve or non-spinning reserve have been added as applications (power supply and demand adjustment processing).

The spinning reserve process is a process of securing the necessary power amount for suppressing a drop in grid frequency at the time of a dropped power supply.
Spinning reserve is next described.

Spinning reserve refers to a power supply that, at the time of a dropped power supply, immediately starts to react to the drop in frequency and rapidly (within about ten seconds) raises output, and further, that can be continuously and spontaneously generated at least until the actuation of operating reserve other than the spinning reserve.

As a result, storage batteries that are compatible with the characteristics of the spinning reserve process are storage batteries that have a time response characteristic that can immediately accommodate a dropped power supply as described above and that have a supply power that can be continuously generated.

The non-spinning reserve process is a process of, in the event that power becomes necessary, creating a state in which the necessary power can be supplied within a predetermined time interval (such as 30 minutes).

The point of difference regarding the configuration between the eighth example embodiment and the seventh example embodiment is that, in the eighth example embodiment, selection unit H3 is used in place of selection unit G3.

The eighth example embodiment is next described with focus on the points of difference with the seventh example embodiment.

Control device H includes storage unit E1, selection unit H3, communication unit C1, comprehension unit C2, and control unit F3.

In the present example embodiment, storage unit E1 further stores characteristics of each of the spinning reserve process and the non-spinning reserve process (for example, response time, degree of communication confidence, profitability, reliability and implementation time).

Selection unit H3 has the following functions in addition to the functions of selection unit G3.

Selection unit H3 has the functions of selecting, as storage batteries that are to be used for the spinning reserve process, storage batteries that satisfy the characteristics of the spinning reserve process, and selecting, as storage batteries that are to be used for the non-spinning reserve process, storage batteries that accommodate the characteristics of the non-spinning reserve process.

In the present example embodiment, moreover, control unit F3 transmits operation control information for controlling the operation of storage batteries that are to be used in accordance with the spinning reserve process to apparatus control devices that control the storage batteries that are to be used for the spinning reserve process. Control unit F3 further transmits operation control information for controlling the operation of storage batteries that are to be used for in accordance with the non-spinning reserve process to apparatus control devices that control the storage batteries that are to be used for of the non-spinning reserve process.

In the present example embodiment, selection unit H3 selects storage batteries that satisfy the characteristics of the spinning reserve process as storage batteries that are to be used for the spinning reserve process, and selects storage batteries that satisfy the characteristics of the non-spinning reserve process as storage batteries that are to be used for the non-spinning reserve process.

As a result, the possibility that a storage battery that does not satisfy the characteristics of the spinning reserve process will be selected as a storage battery that is to be used for the spinning reserve process can be prevented. Further, the possibility that a storage battery that does not satisfy the characteristics of the non-spinning reserve process will be selected as a storage battery that is to be used for the non-spinning reserve process can be prevented.

Selection unit (acquisition unit) H3 may acquire, for example, information that relates to the characteristics of applications and information that relates to storage batteries from a storage unit as in the above-described example embodiment, or may acquire the information from an outside device.

Ninth Example Embodiment

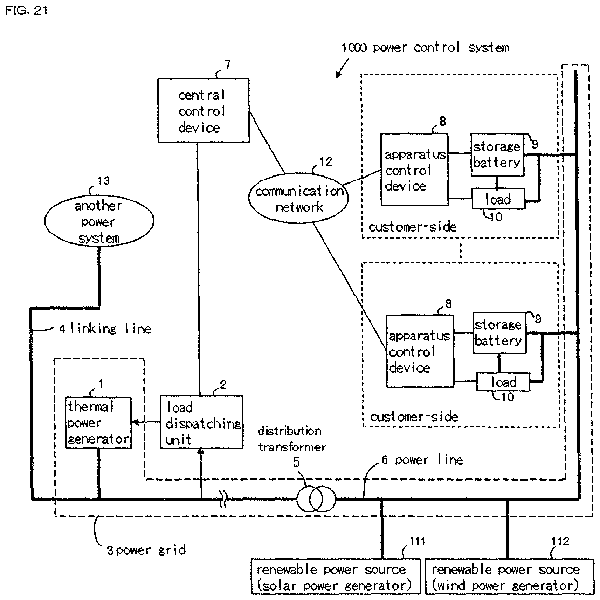

FIG. 21 shows power control system 1000 that adopts the battery control system of the ninth example embodiment of the present invention.

Power control system 1000 includes thermal power generator 1, load dispatching unit 2, power grid 3, linking line 4, distribution transformer 5, power line 6, central control device 7, a plurality of apparatus control devices 8, a plurality of storage batteries 9, and a plurality of loads 10.

Thermal power generator 1, load dispatching unit 2, power grid 3, linking line 4, distribution transformer 5, and power line 6 are maintained by a power company.

Central control device 7 is maintained by an aggregator.

Apparatus control devices 8, storage batteries 9, and loads 10 are each maintained by customers.

Thermal power generator 1, distribution transformer 5, and power line 6 are included in power grid 3. Renewable power source (solar power generator) 111 and renewable power source (wind power generator) 112 are connected to power grid 3.

Central control device 7 is an example of a control device. Storage battery 9 is an example of a power supply/demand adjustment device. Storage battery 9 is connected to power grid 3. Load 10 is, for example, a home appliance.

A summary of the functions belonging to power control system 1000 is first described.

On the power company side, load dispatching unit 2 transmits a request (demand) for power supply/demand adjustment processing to central control device 7 on the aggregator side. Load dispatching unit 2 transmits demands of a plurality of types to central control device 7.

On the aggregator side, central control device 7 selects, for each demand (process request) of the power company on the basis of the characteristics of the power supply/demand adjustment processing that was requested in the demand, storage batteries (storage batteries that are the objects of use) to be used for the power supply/demand adjustment from among storage batteries 9 that are kept by each customer.

Central control device 7 further creates operation control information for controlling the storage batteries 9 that are the objects of use.

For example, central control device 7 creates operation control information that reflects the state of the storage batteries that are the objects of use (for example, the residual capacity and SOC (State of Charge)) and the content of the power supply/demand adjustment processing that accords with the demand.

Central control device 7 next transmits the operation control information of the storage batteries 9 that are the objects of use to apparatus control devices 8 that control storage batteries 9 that are the objects of use.

The transmission of operation control information of storage batteries 9 that are the objects of use to apparatus control devices 8 that control storage batteries 9 that are the objects of use is an example of the report of actuation of the power supply/demand adjustment processing.

Upon receiving the operation control information, apparatus control devices 8 control the operation of the storage batteries that are the objects of use in accordance with the operation control information to execute the power supply/demand adjustment that accords with the demand of the power company. The power supply/demand adjustment that accords with the demand of the power company refers to the response to the demand of the power company (hereinbelow also referred to as the "response").

In the present example embodiment, a demand reduction (for example, peak-cutting) request, an LFC request, and a GF request are used as the demands of the power company.

The demands of the power company are not limited to those described above and can be altered as appropriate. For example, a demand creation (for example, bottom up) request, an emergency response request, an interruptible load request, a supply power load request, an operating reserve request, and a spinning reserve request can be offered as examples of other demands of the power company.

When the demand of the power company is a demand reduction request, central control device 7 generates operation control information for executing the process of deleting the power (power amount) (hereinbelow referred to as "DR application 1") that was requested in the demand reduction demand. The operation control information for executing DR application 1 (demand reduction process) is hereinbelow referred to as the "operation control information of DR application 1."

When the demand of the power company is an LFC request, central control device 7 generates operation control information for executing a process (hereinbelow referred to as "DR application 2") of using the integrated value of the frequency deviation of the grid frequency to control the operation of storage batteries that are the objects of use. The operation control information for executing DR application 2 (LFC process) is hereinbelow referred to as the "operation control information of DR application 2."

When the demand of the power company is a GF request, central control device 7 generates operation control information for executing a process (hereinbelow referred to as "DR application 3") of using the frequency deviation of the grid frequency to control the operation of storage batteries that are the objects of use. The operation control information for executing DR application 3 (GF process) is hereinbelow referred to as the "operation control information of DR application 3."

The configuration of power control system 1000 is next described.

Thermal power generator 1 is an example of a power generator. Load dispatching unit 2 communicates with central control device 7. Load dispatching unit 2 transmits, for example, a demand (demand reduction request, LFC request, or GF request) to central control device 7.

Power grid 3 is a system that supplies power to the customer side. Power grid 3 transforms the voltage of the generated power that is supplied from thermal power generator 1 to a predetermined voltage at distribution transformer 5. Power grid 3 supplies the power to the customer side at the predetermined voltage.

Linking line 4 connects power grid 3 and another power grid 13.

Central control device 7 receives a demand (a demand reduction request, an LFC request, or a GF request) from load dispatching unit 2.

For each DR application that accords with a demand, central control device 7 selects storage batteries 9 that satisfy the conditions (for example, response time or degree of communication confidence) required by the DR application as the storage batteries that are to be used. Central control device 7 then assigns the storage batteries that are to be used for the DR application to the DR application and the demand that corresponds to the DR application. The conditions required by the DR application means the characteristics of the DR application.

In addition, for each demand, central control device 7 assigns apparatus control devices 8 that control the storage batteries 9 (storage batteries that are to be used) that have been assigned to the demand to the demand (the DR application that accords with the demand).

Central control device 7 transmits operation control information of the storage batteries 9 that are to be used to apparatus control devices 8 that control storage batteries 9 that are to be used by way of communication network 12.

Apparatus control devices 8 control the operation of storage batteries 9 that are the objects of use in accordance with the operation control information.

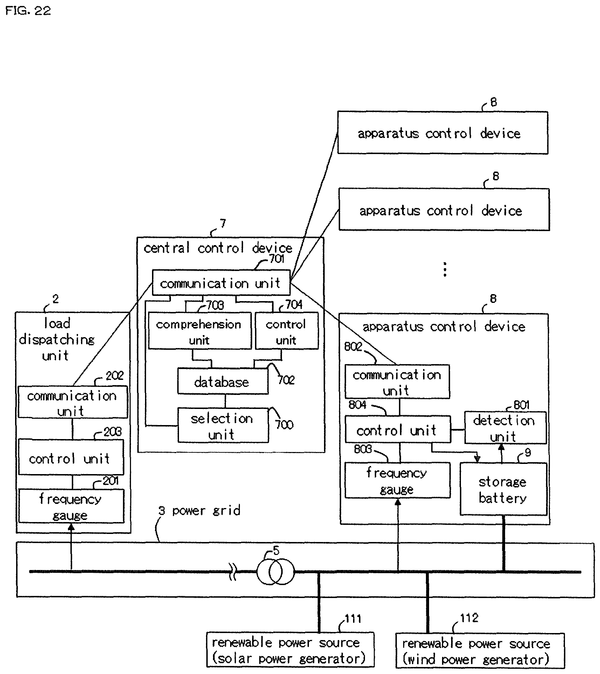

FIG. 22 shows an example of load dispatching unit 2, central control device 7, and a plurality of apparatus control devices 8. In FIG. 22, components that are the same as components shown in FIG. 21 are given the same reference numbers. Communication network 12 is omitted in FIG. 22. Although storage batteries 9 are incorporated in apparatus control devices 8 in FIG. 22, storage batteries 9 need not be incorporated in apparatus control devices 8. Apparatus control devices 8 in which storage batteries 9 are incorporated are examples of electrical storage devices.

Apparatus control devices 8 are first described.

A plurality of apparatus control devices 8 are assigned to each demand and each DR application that accords with the demand. A single apparatus control device 8 may also be assigned to a plurality of demands (DR applications that accord with demands).

Apparatus control devices 8 control the operation of storage batteries 9. Apparatus control device 8 each includes detection unit 801, communication unit 802, frequency gauge 803, and control unit 804.

Detection unit 801 detects the SOC of storage battery 9. The SOC of storage battery 9 assumes a value in the range of from 0 to 1. The SOC of storage battery 9 represents the state of storage battery 9. The state of storage battery 9 is not limited to the SOC of storage battery 9 and can be altered as appropriate. For example, the cell temperature, the current amount, or the voltage of storage battery 9 may also be used as the state of storage battery 9.

Communication unit 802 is an example of a communication unit and reception unit.

Communication unit 802 communicates with central control device 7.

Frequency gauge 803 detects the grid frequency (grid frequency of power grid 3). The grid frequency fluctuates according to the state of balance of the power supply and demand. The grid frequency is an example of the state of a power grid. Frequency gauge 803 may be inside apparatus control device 8 or may be outside apparatus control device 8.

Control unit 804 controls the charging/discharging operation of storage battery 9 in accordance with the operation control information. For example, control unit 804 controls the charging/discharging operation of storage battery 9 according to the operation control information of DR application 1. Alternatively, control unit 804 controls the charging/discharging operation of storage battery 9 according to the operation control information of DR applications 2 and 3 and the grid frequency of power grid 3.

Control unit 804 executes an information procurement operation (transmission/reception process) of obtaining operation control information from central control device 7 and a control operation (battery operation control process) of using operation control information to control the charging/discharging operation of storage battery 9.

Control unit 804 receives execution interval information for specifying the execution interval of the control of storage battery 9 on the basis of the operation control information from central control device 7 by way of communication unit 802.

Control unit 804 repeatedly executes the information procurement operation while providing time intervals.

Control unit 804 repeatedly executes the control operation in accordance with the execution interval information while providing time intervals equal to or less than the time intervals of the information procurement operation.

Central control device 7 is next described.

Central control device 7 places n apparatus control devices 8 and n storage batteries 9 under its the control. Central control device 7 includes selection unit 700, communication unit 701, database 702, comprehension unit 703, and control unit 704. Selection unit 700, communication unit 701, and control unit 704 are contained in the reporting unit.

Selection unit 700 is an example of the acquisition unit and reporting unit.

For each DR application, selection unit 700 selects storage batteries 9 that satisfy the conditions sought by the DR application as storage batteries that are the objects of use.

Communication unit 701 communicates with each apparatus control device 8 and load dispatching unit 2. For example, communication unit 701 receives the SOC and ID (Identification) of storage battery 9 from each apparatus control device 8.

Database 702 is an example of the first storage unit and the second storage unit.

Database 702 stores conditions requested by each DR application and information of each storage battery 9.

In addition, database 702 holds storage battery distribution ratio curves that are used for finding the chargeable/dischargeable capacity of storage batteries 9 from the SOC of storage batteries 9 that is received by communication unit 701. In addition, database 702 holds the rated output P(n) of each storage battery 9 that is used for finding the chargeable/dischargeable capacity. The rated output of a power conditioner (AC/DC converter)(not shown in the figures) that is connected to storage battery 9 is used as the rated output P(n) of storage battery 9.

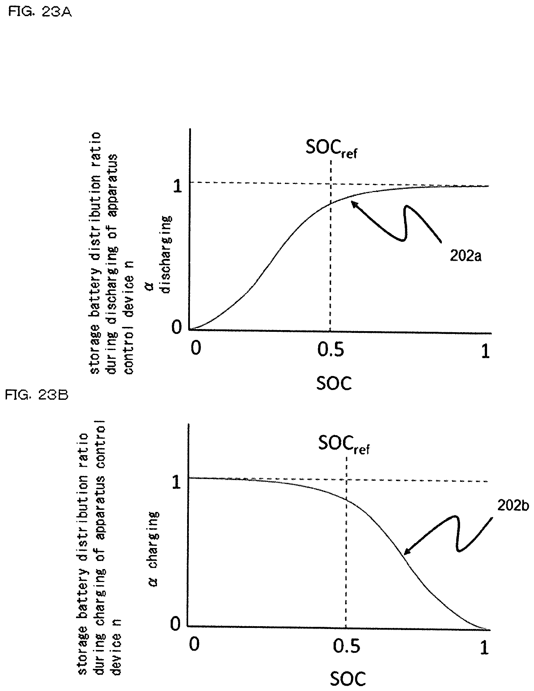

FIGs. 23A and 23B shows examples of the storage battery distribution ratio curves. FIG. 23A shows an example of storage battery distribution ratio curve 202a at the time of discharging and FIG. 23B shows an example of a storage battery distribution ratio curve 202b at the time of charging.

Comprehension unit 703 comprehends information of each DR application. The information of DR applications shows at least the processing content of the DR application (processing content of power supply/demand adjustment)

In addition, comprehension unit 703 comprehends the power amount (hereinbelow referred to as "DR1 allotment power amount," "DR2 allotment power amount," and "DR3 allotment power amount") that is allotted to storage batteries 9 that have been assigned to each DR application. Each allotment power amount is an example of the state of the power grid.

The method of comprehending the DR1 allotment power amount will be described later.

Comprehension unit 703 comprehends the DR2 allotment power amount as shown below.

Comprehension unit 703 uses the storage battery distribution ratio curves in database 702 to derive the chargeable/dischargeable capacity of the storage battery group (DR application 2 storage battery group) that is made up of storage batteries 9 that have been assigned to DR application 2 from the SOC of storage batteries 9 that have been assigned to DR application 2. The chargeable/dischargeable capacity of the DR application 2 storage battery group is hereinbelow referred to as the "total adjustable capacity $P_{ES-DR2}$."

Comprehension unit 703 transmits the total adjustable capacity $P_{ES-DR2}$ from communication unit 701 to load dispatching unit 2. Comprehension unit 703 subsequently receives the DR2 allotment power amount information that represents a DR2 allotment power amount that reflects the total adjustable capacity $P_{ES-DR2}$ from load dispatching unit 2 by way of communication unit 701. Comprehension unit 703 uses the DR2 allotment power amount information to comprehend the DR2 allotment power amount.

As the DR2 allotment power amount information in the present example embodiment, a DR2 charging/discharging gain line is used that represents an LFC assignment capacity $LFC_{ES-DR2}$ that represents the DR2 maximum allotment power amount and the maximum value (threshold value) $\Delta f_{max}$ of the integrated value of the frequency deviation ($\pm \Delta f_{max}$ exist, but $\pm$ has been omitted for subsequent simplification).

"The maximum value of the integrated value of the frequency deviation" is used as the threshold value of the integrated value of the amount of divergence with respect to the standard frequency (for example, 50 Hz) of the grid frequency. The standard frequency of the grid frequency is stored in control unit 804.

In addition, the "maximum value of the integrated value of the frequency deviation" means "the maximum amount of divergence of the integrated value of the frequency deviation" that is able to cope at a total output $LFC_{ES-DR2}$ of the multiplicity of storage batteries 9 that have been assigned to DR application 2. When the integrated value of the frequency deviation becomes a value equal to or greater than the maximum value (threshold value) of the integrated value of the frequency deviation, coping at $LFC_{ES-DR2}$ becomes problematic.

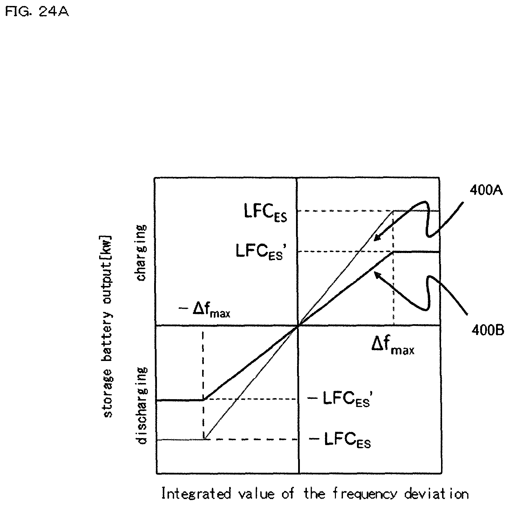

FIG. 24A shows an example of the DR2 charging/discharging gain line. Details regarding the DR2 charging/discharging gain line will be described later.

Control unit 704 generates DR2 allotment information (DR2 allotment coefficient K and the maximum value $\Delta f_{max}$ of the integrated value of frequency deviation) on the basis of the SOC of storage batteries 9 that have been assigned to DR application 2 and the DR2 charging/discharging gain line. Control unit 704 transmits the DR2 allotment information from communication unit 701 to each apparatus control device 8 that has been assigned to DR application 2. DR2 allotment coefficient K increases in proportion to increase of the allotment proportion to storage batteries 9 that have been assigned to DR application 2.

Comprehension unit 703 comprehends the DR3 allotment power amount as shown below.

Comprehension unit 703 uses the storage battery distribution ratio curves in database 702 to derive the chargeable/dischargeable capacity of the storage battery group (DR application 3 storage battery group) that is made up from storage batteries 9 that have been assigned to DR application 3 based on the SOC of storage batteries 9 that have been assigned to DR application 3. The storage battery distribution ratio curve used in this case need not be the same as the storage battery distribution ratio curve that was used when deriving the DR2 allotment power amount. The chargeable/dischargeable capacity of the DR application 3 storage battery group is hereinbelow referred to as "total adjustable capacity $P_{ES-DR3}$."

Comprehension unit 703 transmits the total adjustable capacity $P_{ES-DR3}$ from communication unit 701 to load dispatching unit 2. Comprehension unit 703 subsequently receives, from load dispatching unit 2 by way of communication unit 701, DR3 allotment power amount information that represents a DR3 allotment power amount that reflects the total adjustable capacity $P_{ES-DR3}$. Comprehension unit 703 uses the DR3 allotment power amount information to comprehend the DR3 allotment power amount.

As the DR3 allotment power amount information in the present example embodiment, a DR3 drooping characteristic line is used that represents the GF assignment capacity $GF_{ES-DR3}$ that represents the DR3 maximum allotment power amount and the maximum value (threshold value) $+f_{max}$ and $-f_{max}$ of the frequency deviation ($\pm$ is subsequently consolidated in the interest of simplification, resulting in $f_{max}$).

For the convenience of explanation, "$GF_{ES-DR3}$" is also referred to as "$LFC_{ES-DR3}$."

The "maximum value of the frequency deviation" is used as the threshold value of the amount of divergence with respect to the standard frequency (for example, 50 Hz) of the grid frequency.

The "maximum value of the frequency deviation" means the "maximum amount of divergence of the frequency deviation" that allows accommodation at a total output $GF_{ES-DR3}$ ($LFC_{ES-DR3}$) of the multiplicity of storage batteries 9 that have been assigned to DR application 3. When the frequency deviation reaches a value that is equal to or greater than the maximum value (threshold value) of the frequency deviation, accommodation at $GF_{ES-DR3}$ ($LFC_{ES-DR3}$) becomes problematic.

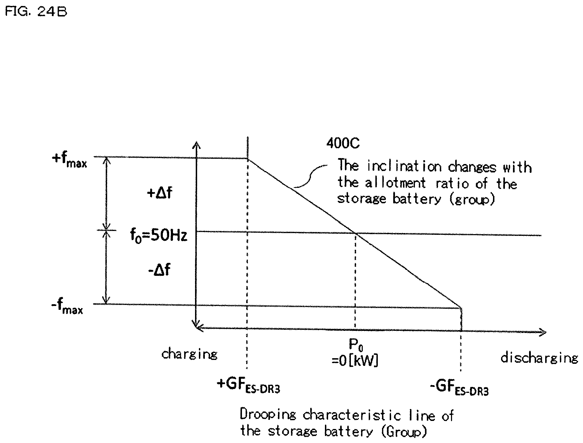

FIG. 24B shows an example of the DR3 drooping characteristic line. Details of the DR3 drooping characteristic line will be described later.

Control unit 704 generates DR3 allotment information (DR3 allotment coefficient K and maximum value $f_{max}$ of the frequency deviation) on the basis of the SOC of storage batteries 9 that have been assigned to DR application 3 and the DR3 drooping characteristic line. Control unit 704 transmits the DR3 allotment information from communication unit 701 to each apparatus control device 8 that has been assigned to DR application 3. DR3 allotment coefficient K increases in proportion to increase of the allotment proportion to storage batteries 9 that have been assigned to DR application 3.

Load dispatching unit 2 is next described.

Load dispatching unit 2 includes frequency gauge 201, communication unit 202, and control unit 203.

Frequency gauge 201 detects the grid frequency of power grid 3.

Communication unit 202 communicates with central control device 7.

For example, communication unit 202 receives the total adjustable capacity $P_{ES-DR2}$ and $P_{ES-DR3}$ from central control device 7.

Control unit 203 controls the operation of load dispatching unit 2.

For example, control unit 203 transmits various demands to central control device 7 by way of communication unit 202.

In addition, control unit 203 generates DR2 allotment power amount information (DR2 charging/discharging gain line) and DR3 allotment power amount information (DR3 drooping characteristic line) as shown below.

The method of generating DR2 allotment power amount information (DR2 charging/discharging gain line) will be explained first.

Control unit 203 uses the grid frequency that was detected by frequency gauge 201 to calculate the area requirement (AR) that is the output correction amount of a power plant. Control unit 203 uses the area requirement AR, the LFC adjustment capacity of thermal power generator 1 that is the object of control, and the total adjustable capacity $P_{ES-DR2}$ to derive the LFC capacity. Control unit 203 procures the LFC adjustment capacity of thermal power generator 1 from a thermal power generator control unit (not shown in the figure), and total adjustable capacity $P_{ES-DR2}$ is supplied to control unit 203 from communication unit 202.

Control unit 203 assigns to thermal power generator 1, of the LFC capacity, a capacity from which the rapid fluctuation component has been removed. Control unit 203 assigns the residual LFC capacity $LFC_{ES-DR2}$ (where $LFC_{ES-DR2} \leq P_{ES-DR2}$) to the DR application 2 storage battery group. For example, control unit 203 uses a high-pass filter that passes, of the LFC capacity, a fluctuation component having a period that is equal to or less than 10 seconds and that does not pass a fluctuation component having a period longer than 10 seconds to extract the rapid fluctuation component (capacity $LFC_{ES-DR2}$) from the LFC capacity.

Control unit 203 otherwise parcels out the LFC capacity to thermal power generator 1 and the DR application 2 storage battery group in accordance with the allotment ratio (fixed value) to thermal power generator 1 and the DR application 2 storage battery group.

Control unit 203 treats capacity $LFC_{ES-DR2}$ as the LFC assignment capacity $LFC_{ES-DR2}$.

Control unit 203 generates DR2 charging/discharging gain line (see FIG. 24A) that represents the LFC assignment capacity $LFC_{ES-DR2}$ and the maximum value (threshold value) $\Delta f_{max}$ of the integrated value of the frequency deviation that was determined in advance.

Control unit 203 transmits the DR2 charging/discharging gain line (DR2 allotment power amount information) from communication unit 202 to central control device 7.

The method of generating the DR3 allotment power amount information (DR3 drooping characteristic line) is next described.

Control unit 203 first procures from communication unit 202 the total adjustable capacity $P_{ES-DR3}$ relating to the GF capacity that is necessary for accommodating the frequency deviation of the power grid within a certain frequency deviation range. Control unit 203 uses the maximum value (threshold value) $f_{max}$ of the frequency deviation that was determined in advance and the total adjustable capacity $P_{ES-DR3}$ to generate the DR3 drooping characteristic line (DR3 allotment power amount information) and the GF capacity $GF_{ES-DR3}$ for the DR application 3 storage battery group. Here, $GF_{ES-DR3} \leq P_{ES-DR3}$. Control unit 203 transmits the DR3 drooping characteristic line from communication unit 202 to central control device 7.

Control unit 203 may further parcel out the GF capacity to thermal power generator 1 and the DR application 3 storage battery group in accordance with the ratio (fixed value) of parceling out the GF capacity to thermal power generator 1 and the DR application 3 storage battery group. In this case, the DR3 drooping characteristic line differs according to the ratio.

The operation is next described.

(1) The operation of selecting candidates of storage batteries that are to be used at the time of implementing DR applications

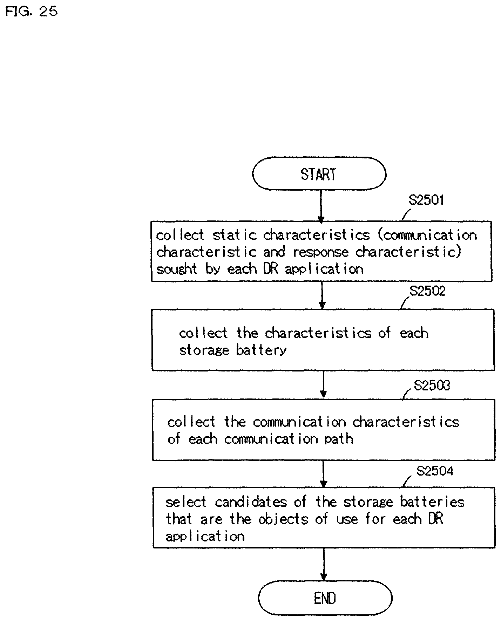

FIG. 25 is a flow chart for describing the operation in which central control device 7 selects candidates of storage batteries that are to be used that are used when implementing a DR application for each of the DR applications.

The aggregator that maintains central control device 7 first concludes a DR implementation contract in advance with a plurality of customers that maintain storage batteries 9.

The DR implementation selection contract is a contract in which a customer recognizes that the aggregator will control as DR storage batteries 9 possessed by the customer on the condition that predetermined procedures will be taken before the implementation of DR.

The DR implementation contract indicates static characteristics (communication characteristic and response characteristic) sought by each DR application and dynamic characteristics (reliability, profitability, and implementation time) sought by each DR application.

Each DR implementation contract is stored in, for example, a contract management device (not shown) that is maintained by the aggregator.

The aggregator itself may determine the static characteristics sought by DR applications 1-3 and the contract management device may store the static characteristics sought by DR applications 1-3 that were determined by the aggregator.

Selection unit 700 next collects the static characteristics (communication characteristic and response characteristic) sought by DR application 1 (demand reduction process), DR application 2 (LFC process), and DR application 3 (GF process) (Step S2501).

In Step S2501, selection unit 700 collects, for example, "the static characteristics sought by DR applications 1-3 (communication characteristic and response characteristic)" that are stored in the contract management device.

When the static characteristics sought by DR applications 1-3 are stored by a server (not shown) that is maintained by a wholesale power exchange, selection unit 700 may collect the static characteristics sought by DR applications 1-3 from the server by way of communication unit 701.

Selection unit 700 then stores the static characteristics sought by DR applications 1-3 in database 702.

In the present example embodiment, the static characteristics sought by DR applications 1-3 are assumed to be as shown below.

DR application 1 (demand reduction process) is assumed to require "10 seconds-1 minute" as the response characteristic (response time), and "medium reliability" as the communication characteristic (degree of communication confidence).

DR application 2 (LFC process) is assumed to require "1-9 seconds" as the response characteristic (response time) and "medium reliability" as the communication characteristic (degree of communication confidence).

DR application 3 (GF process) is assumed to require "1 second or less" as the response characteristic (response time) and "high reliability" as the communication characteristic (degree of communication confidence).

Selection unit 700 next collects the characteristics (for example, the delay, type, rating, the degree of communication confidence and authentication result that accord with the compatible communication mode) of each storage battery 9 (Step S2502).

The authentication result of storage battery 9 here refers to the result of authentication carried out by an authentication authority as to whether storage battery 9 satisfies the response characteristic sought by a DR application. For example, when an authentication authority certifies that storage battery 9 satisfies the response characteristic sought by DR application 3 (GF process), "GF authenticated" is used as the authentication information of storage battery 9.

In Step S2502, selection unit 700 transmits a characteristic request to each apparatus control device 8 from communication unit 701.

In each apparatus control device 8, upon receiving the characteristic request by way of communication unit 802, control unit 804 transmits the ID and a characteristics parameter that indicates the battery delay, type, rating, degree of communication confidence that accords with the compatible communication mode, and authentication result for storage battery 9 to central control device 7. Control unit 804 holds the battery delay, type, rating, degree of communication confidence that accords with the compatible communication mode, and the authentication result for storage battery 9 in advance.

Selection unit 700 receives by way of communication unit 701 the ID and the characteristics parameters (battery delay, type, rating, degree of communication confidence that accords with the compatible communication mode, and authentication result) that are transmitted from each apparatus control device 8 according to a characteristics request.

Selection unit 700 stores the result of collection of the characteristics parameters of each storage battery 9 in database 702.

Selection unit 700 next collects the communication characteristic of the communication path that is used by each storage battery 9 on the basis of the communication result that relates to the transmission of the characteristics request and the reception of the characteristics parameter (Step S2503).

Selection unit 700 calculates the delay time of each communication path between central control device 7 and each apparatus control device 8 on the basis of the difference between the timing of the transmission of the characteristics request and the timing of the reception of the characteristics parameter as the communication delay of each communication path.

Selection unit 700 then stores the communication delay of the communication path that was used by each storage battery 9 in database 702. In the following explanation, the degree of communication confidence that accords with the compatible communication mode is used as the communication reliability in the communication characteristic.

In the present example embodiment, the communication characteristic of the communication path used by storage battery 9 of each customer and the characteristics of storage battery 9 of each customer are assumed to be as shown below.

Storage battery 9 of Customer No. 1: Communication characteristics (Communication reliability: High reliability; Communication delay: on the order of msec); Battery characteristics (Delay: on the order of $\mu$sec; Type: Lib (Lithium ion battery); Rating: 2kW/6kWh; Authentication result: Has GF authentication)

Storage battery 9 of Customer No. 2: Communication characteristics (Communication reliability: High reliability; Communication delay: on the order of msec); Battery characteristics (Delay: on the order of 10-odd seconds; Type: Lead storage cell; Rating: 1 kW/3kWh; Authentication result: No particular authentication)

Storage battery 9 of Customer No. 3: Communication characteristics (Communication reliability: Medium reliability; Communication delay: on the order of msec); Battery characteristics (Delay: on the order of seconds; Type: Nickel-Hydrogen battery; Rating: 3kW/10kWh; Authentication result: No particular authentication)

Storage battery 9 of Customer No. 4: Communication characteristics (Communication reliability: High reliability; Communication delay: on the order of msec); Battery characteristics (Delay: on the order of $\mu$sec; Type: Lib; Rating: 10kW/20kWh; Authentication result: Has GF authentication)

Storage battery 9 of Customer No. 5: Communication characteristics (Communication reliability: High reliability; Communication delay: on the order of msec); Battery characteristics (Delay: on the order of $\mu$sec; Type: Lib; Rating: 10kW/10kWh; Authentication result: Has GF authentication)

Storage battery 9 of Customer No. n: Communication characteristics (Communication reliability: Medium reliability; Communication delay: on the order of seconds); Battery characteristics (Delay: on the order of several seconds; Type: Lead storage cell; Rating: 3kW/6kWh; Authentication result: No particular authentication)

Selection unit 700 next selects for each DR application candidates of storage batteries (storage batteries that are to be used) that will be controlled by the DR applications on the basis of the static characteristics sought by DR applications that are stored in database 702, the characteristics of each storage battery 9, and the communication characteristics of each communication path (Step S2504).

In Step S2504, selection unit 700 selects for each DR application, as the candidates of storage batteries that are to be the objects of use, storage batteries that have the characteristics relevant to the static characteristics of the DR application.

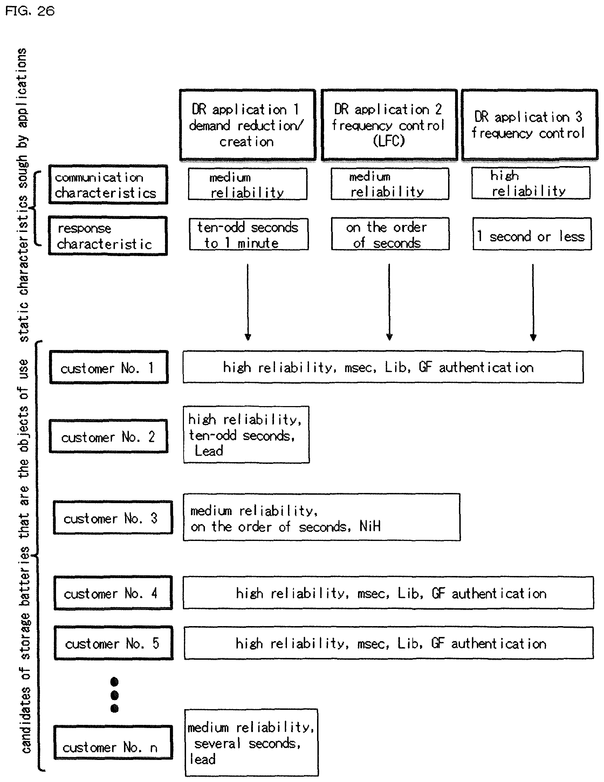

FIG. 26 shows the result of the selection of candidates.

Although DR applications 1-3 exist as DR applications, in actuality, the possibility exists that they will not be selected as a DR application in regard to which each customer will use his own storage battery for the DR application that is to be implemented due to the processes described below (in particular, processes that take into consideration the profit obtained by the implementation of the application). As a result, DR applications 1-3 at this stage are ranked as candidates for an application that is to be implemented.

(2) The operation of selecting batteries for adjustment that are actually used from among candidates of storage batteries that are to be used

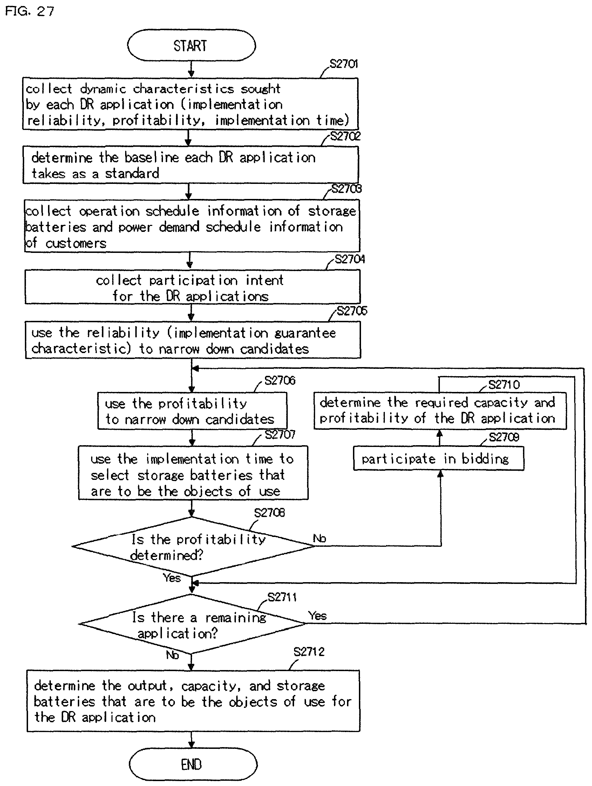

FIG. 27 is a flow chart for describing the operation of selecting storage batteries that are to be used (batteries for adjustment) that are actually used from among the candidates of storage batteries that are the objects of use.

Selection unit 700 collects dynamic characteristics (implementation reliability, profitability, and implementation time) that are sought by each DR application for DR application 1 (demand reduction process), DR application 2 (LFC process), and DR application 3 (GF process) (Step S2701).

In Step S2701, selection unit 700 collects the "dynamic characteristics (profitability, implementation reliability, and implementation time) sought by DR applications 1-3" that are stored, for example, in the contract management device maintained by the aggregator. The profitability is represented by, for example, "price / kW," "kwh@time," and "NoN (undecided)."

The implementation reliability is represented by, for example, "implementation guaranteed" and "implementation not guaranteed."

The implementation time is represented by, for example, "control continuous time" and "24 hour continuous implementation."

If a server (not shown) maintained by a wholesale power exchange stores the dynamic characteristics sought by DR applications 1-3, selection unit 700 may also collect the dynamic characteristics sought by DR applications 1-3 from the server maintained by the wholesale power exchange.

Selection unit 700 next stores the dynamic characteristics (implementation reliability, profitability, and implementation time) sought by DR applications 1-3 in database 702.
The aggregator itself may also determine the dynamic characteristics sought by DR applications 1-3, and database 702 may store the dynamic characteristics sought by DR applications 1-3 that were determined by the aggregator.

In the present example embodiment, the dynamic characteristics sought by DR applications 1-3 are assumed to be as shown below. However, the dynamic characteristics sought by DR applications 1-3 are not limited to the characteristics shown below.

DR application 1 (demand reduction process) requires "a provisional bid by an aggregator of from 10 yen to 5 yen/kWh to a power company or wholesale power exchange" as the profitability, "implementation not guaranteed is OK" as the implementation reliability, and "the three hours from 12:00 to 15:00" as the implementation time.

DR application 2 (LFC process) requires "1 yen /kWh × 1h (determined value for a power company or wholesale power exchange)" as the profitability, "implementation guaranteed necessary" as the implementation reliability, and "the two hours from 11:00 to 13:00" as the implementation time.

DR application 3 (GF process) requires "2 yen /kWh × 1h (determined value for a power company or wholesale power exchange)" as the profitability, "implementation not guaranteed is OK" as the implementation reliability, and "the six hours from 9:00 to 15:00" as the implementation time.

Control unit 704 next determines for each customer (storage battery) the baseline that each DR application takes as a standard (Step S2702).

In the present example embodiment, central control device 7 holds in database 702 history information of the power demand of each customer in advance.

The method by which control unit 704 determines the baseline is the same as the determination method by control unit F3 in the sixth example embodiment. As a result, the explanation of the method by which control unit 704 determines the baseline is here omitted.

In addition, control unit 704 may also transmit the dynamic characteristics sought by DR applications 1-3 and the baseline that each DR application takes as a standard to each apparatus control device 8 (customer side).

Central control device 7 next collects estimated values of the states (usable output / capacity / continuous time) of each storage battery 9 at the time of implementing a DR application and estimated value of the power demand state, or the operation schedule information of each storage battery 9 and the power demand schedule information of each customer (Step S2703).

In the present example embodiment, each apparatus control device 8 (for example, control unit 804) is assumed to hold the operation schedule information of storage batteries 9 and the power demand schedule information of customers.

In Step S2703, selection unit 700 collects the operation schedule information of storage batteries 9 and the power demand schedule information of customers from each apparatus control device 8 (for example, control unit 804).

The operation schedule information of storage battery 9 of each customer and the power demand schedule information of customers is assumed to show the following information. However, the operation schedule information of storage batteries 9 of each customer and the power demand schedule information of the customers is not limited to the following.

Customer No. 1:
Usable output: 1 kW @ 9:00-12:00; 0.5kW @ 12:00-15:00
Usable capacity: 3kWh or 50% as SOC width
Usable continuous time: usable from 9:00 until 15:00

There is an estimated curve of power demand under circumstances of using storage batteries during normal hours.

Customer No. 2:
Usable output: 0.5 kW @ 9:00-15:00
Usable capacity: 1 kWh or 30% as SOC width

(continued)

Usable continuous time:     usable from 9:00 until 15:00

There is an estimated curve of power demand under circumstances of using storage batteries during normal hours.

Customer No. 3:
Usable output:               3 kW @ 9:00-15:00
Usable capacity:             10 kWh or 100% as SOC width
Usable continuous time:     usable from 9:00 until 15:00

There is an estimated curve of power demand under circumstances of using storage batteries during normal hours.

Customer No. 4:
Usable output:               6 kW @ 12:00-15:00
Usable capacity:             15 kWh or 75% as SOC width
Usable continuous time:     usable only from 12:00 until 15:00; Completely used for own purposes from 9:00 until 12:00

There is an estimated curve of power demand under circumstances of using storage batteries during normal hours.

Customer No. 5:
Usable output:               10 kW @ 9:00-15:00
Usable capacity:             10 kWh or 100% as SOC width
Usable continuous time:     usable from 9:00 until 15:00

There is an estimated curve of power demand under circumstances of using storage batteries during normal hours.

Customer No. n:
Usable output:               1 kW @ 9:00-15:00
Usable capacity:             2 kWh or 30% as SOC width
Usable continuous time:     usable from 9:00 until 15:00

There is an estimated curve of power demand under circumstances of using storage batteries during normal hours.

When usage for the DR application has been determined, all storage batteries 9 shown above are charged/discharged in advance to reach the SOC (kWh) that is necessary before the starting time of the DR application.

Selection unit 700 next stores the operation schedule information of storage batteries 9 and the power demand schedule information of customers in database 702.

Central control device 7 next collects the customers' participation intent regarding DR applications (implementation guarantee, desire for profitability, equipment use limitations) (Step S2704).

In the present example embodiment, each apparatus control device 8 (for example, control unit 804) is assumed to hold the customer's participation intent regarding DR applications (implementation guarantee, desire for profitability, equipment use limitations).

In Step S2704, selection unit 700 collects the customers' participation intent regarding DR applications (implementation guarantee, desire for profitability, equipment use limitations) from each apparatus control device 8 (for example, control unit 804).

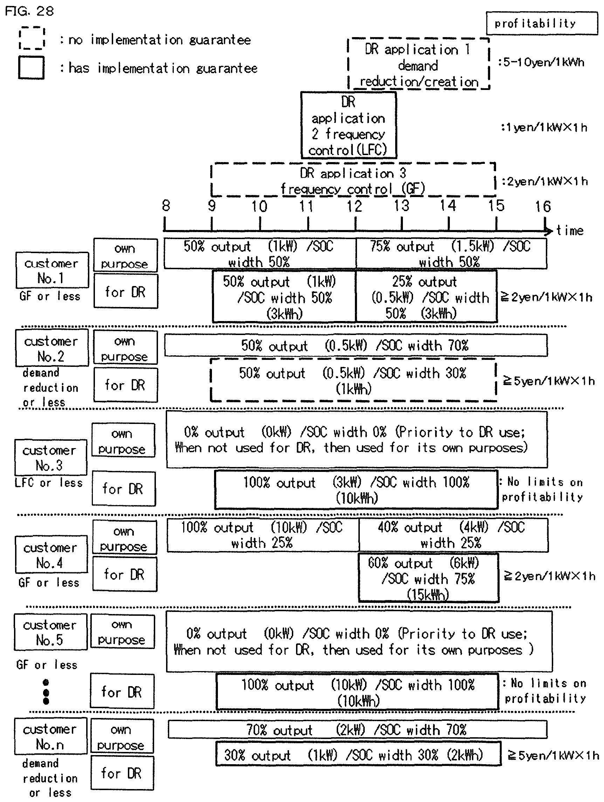

In the present example embodiment, the participation intent of each customer regarding DR applications (implementation guarantee, desire for profitability, equipment use limitations) is assumed to be as shown below (see FIG. 28). However, the participation intent of each customer regarding DR applications is not limited to the values shown below.

Customer No. 1:

Implementation guarantee:       "Present"
Profitability:                  "Desires 2 yen / kWh or more"
Participation intent:           "This time, participate"
Equipment use limitations:      "Reverse power flow possible, recover to SOC of 7:00AM of preceding day by 7:00 AM of day following DR implementation"

Customer No. 2:

Implementation guarantee:       "None"
Profitability:                  "Desires 5 yen / kWh or more"
Participation intent:           "This time, participate"
Equipment use limitations:      "Reverse power flow not possible, no demand for SOC recovery"

Customer No. 3:

Implementation guarantee:       "Present"
Profitability:                  "At aggregator's discretion; Priority to DR use"
Participation intent:           "Participate"
Equipment use limitations:      "Reverse power flow possible, No demand for SOC recovery"

Customer No. 4:

Implementation guarantee:       "Present"
Profitability:                  "Desires 2 yen / kWh or more"
Participation intent:           "This time, participate"
Equipment use limitations:      "Reverse power flow possible, No demand for SOC recovery"

Customer No. 5:

Implementation guarantee:       "Present"
Profitability:                  "At aggregator's discretion; Priority to DR use"
Participation intent:           "Participate"
Equipment use limitations:      "Reverse power flow possible, No demand for SOC recovery"

Customer No. n:

Implementation guarantee:       "Present"
Profitability:                  "Desires 5 yen / kWh or more"
Participation intent:           "This time, participate"
Equipment use limitations:      "Reverse power flow possible, No demand for SOC recovery"

Selection unit 700 next stores the participation intent of customers regarding the DR applications in database 702.

Central control device 7 next selects, for each DR application, storage batteries that are to be used for from among candidates and selects the amount of power in storage batteries that are to be adjusted that is to be adjusted on the basis of information (information stored in database 702) that was collected or determined in Steps S2701-S2704. The method of selection is next described.

The candidates of storage batteries that are to be used for each of the three DR applications this time are as shown below (see FIG. 26).

Storage battery 9 of Customer No. 1: Candidate storage battery that is to be used for DR applications 1, 2, and 3
Storage battery 9 of Customer No. 2: Candidate storage battery that is to be used for DR application 1
Storage battery 9 of Customer No. 3: Candidate storage battery that is to be used for DR applications 1 and 2
Storage battery 9 of Customer No. 4: Candidate storage battery that is to be used for DR applications 1, 2, and 3
Storage battery 9 of Customer No. 5: Candidate storage battery that is to be used for DR applications 1, 2, and 3
Storage battery 9 of Customer No. n: Candidate storage battery that is to be used for DR application 1

Based on these states, selection unit 700 selects storage batteries that are to be used for each DR application.

Selection unit 700 first narrows down candidates that satisfy the reliability (implementation guarantee) that is sought by the DR applications and that is a necessary condition in this instance of DR implementation (Step S2705). Candidates are narrowed down as shown below by the implementation of Step S2705. Storage battery 9 of Customer No. 1: Candidate storage battery that is to be used for DR applications 1, 2, and 3

Storage battery 9 of Customer No. 2: Candidate storage battery that is to be used for DR application 1
Storage battery 9 of Customer No. 3: Candidate storage battery that is to be used for DR applications 1 and 2
Storage battery 9 of Customer No. 4: Candidate storage battery that is to be used for DR applications 1, 2, and 3
Storage battery 9 of Customer No. 5: Candidate storage battery that is to be used for DR applications 1, 2, and 3
Storage battery 9 of Customer No. n: Candidate storage battery that is to be used for DR application 1

In this instance, the DR application that seeks implementation guarantee is DR application 2. A customer for "implementation not guaranteed" among customers No. 1-5 and n is Customer No. 2. However, because Customer No. 2 is not a candidate for DR application 2, Customer No. 2 has no relation to the selection in Step S2705.

However, of the customers that are selected as candidates for DR application 2 among customers No. 6-[n-1], "implementation not guaranteed" customers have been excluded from candidates for DR application 2.

Selection unit 700 next narrows down, from the profitability offered by each DR application, candidates of storage batteries that are to be used for relating first to DR application 1 whose profitability is highest in this instance of DR implementation (Step S2706).

Candidates are narrowed down as shown below by the implementation of Step S2706. Storage battery 9 of Customer No. 1: Candidate storage battery that is to be used for DR application 1

Storage battery 9 of Customer No. 2: Candidate storage battery that is to be used for DR application 1
Storage battery 9 of Customer No. 3: Candidate storage battery that is to be used for DR application 1
Storage battery 9 of Customer No. 4: Candidate storage battery that is to be used for DR application 1
Storage battery 9 of Customer No. 5: Candidate storage battery that is to be used for DR application 1
Storage battery 9 of Customer No. n: Candidate storage battery that is to be used for DR application 1

In this instance, Customers No. 1-5 and n are all selected as candidates of storage batteries that are to be used for DR application 1. In addition, of storage batteries 9 of customers No. 6-[n-1], storage batteries that were candidates of DR application 1 as a result of the narrowing down of Step S2705 are all selected as candidates of DR application1.

Selection unit 700 next selects storage batteries that are to be used for DR application 1 based on the implementation time that is required by DR application 1 (Step S2707).

Selection unit 700 next determines the output of the storage batteries that are to be used for DR application 1 so as not to exceed the usable output and the usable capacity of the storage batteries that are the objects of use of DR application 1.

The selection result of storage batteries that are to be used for DR application 1 and the determination result of the output are as shown below:

Storage battery 9 of Customer No. 1:

Selection of application to DR application 1... output: 0.5k W x 3h

Storage battery 9 of Customer No. 2:

Selection of application to DR application 1... output: 0.3 kW x 3h

Storage battery 9 of Customer No. 3:

Selection of application to DR application 1... output: 3.0 kW x 3h

Storage battery 9 of Customer No. 4:

Selection of application to DR application 1... output: 5.0 kW x 3h

Storage battery 9 of Customer No. 5:

Selection of application to DR application 1... output: 3.0 kW x 3h

Storage battery 9 of Customer No. n:

Selection of application to DR application 1... output: 0.6 kW x 3h

In this instance, storage batteries 9 of Customers 1-5 and n can all be used in the time slot required by DR application 1. As a result, storage batteries 9 of Customers 1-5 and n are all selected for application to storage batteries that are to be used for DR application 1.

As a result, storage batteries 9 of Customers 1-5 and n are applied to DR application 1 during the time slot from 12:00 to 15:00.

In addition, of storage batteries 9 of Customers 6-[n-1], candidates of batteries that can be used in the time slot in which DR application 1 is implemented are all selected to be applied to DR application 1.

Of storage batteries 9 of Customers 6-[n-1], storage batteries 9 that can be used in a portion of the time of the implementation time of DR application 1 such as batteries having an implementable time of from 12:00 to 14:00 or from 13:00 to 15:00 are selected as storage batteries 9 that are applied to DR application 1.

Selection unit 700 next judges whether the profitability of DR application 1 is a determined value (Step S2708).

Here, the profitability "10 yen - 5 yen / kWh @ 12:00-15:00" of DR application 1 (demand reduction process) is a provisional value for tending a bid. As a result, selection unit 700 judges that the profitability of DR application 1 is not determined.

The amount of reduction of power demand that is prepared in each time slot in all storage batteries that are to be used for DR application 1 is assumed to be "350 kW" from 12:00 to 13:00, "300 kW" from 13:00 to 14:00, and "200 kW" from 14:00 to 15:00.

Under these circumstances, selection unit 700 participates in the bidding on the wholesale power exchange (Step S2709).

As a result of bidding, selection unit 700 is assumed to make a successful bid of DR in which the assigned amount of power reduction is "200 kW for the entirety of n customers" from 12:00 to 15:00 at profitability of "6 yen/kWh." In accordance with this successful bid, selection unit 700 determines the profitability and necessary capacity of DR application 1 (Step S2710).

Selection unit 700 next assigns this 200 kW x 3h to the storage batteries of customers that were selected for application to DR application 1. In this instance, selection unit 700 determines the assignment by a method of weighting the capacity of each time slot of storage batteries 9 as shown below.

Selection unit 700 calculates 200 kW/350 kW = x as the weighting coefficient for 12:00-13:00.
Selection unit 700 calculates 200 kW/300 kW = y as the weighting coefficient for 13:00-14:00.
Selection unit 700 calculates 200 kW/200 kW = z as the weighting coefficient for 14:00-15:00.
Selection unit 700 multiplies the weighting coefficient by the capacity of each time slot of storage batteries 9 to determine the power reduction from the baseline for each time slot for storage batteries that are to be used for DR application 1 as shown below.

Storage battery 9 of Customer No. 1: Selection for application to DR application 1...output: "0.5x" kW, "0.5y" kW, "0.5z" kW (each for one hour)

Storage battery 9 of Customer No. 2: Selection for application to DR application 1...output: "0.3x" kW, "0.3y" kW, "0.3z" kW (each for one hour)

Storage battery 9 of Customer No. 3: Selection for application to DR application 1...output: "3.0 x" kW, "3.0y" kW, "3.0z" kW (each for one hour)

Storage battery 9 of Customer No. 4: Selection for application to DR application 1...output: "5.0x" kW, "5.0y" kW, "5.0z" kW (each for one hour)

Storage battery 9 of Customer No. 5: Selection for application to DR application 1...output: "3.0x" kW, "3.0y" kW, "3.0z" kW (each for one hour)

Storage battery 9 of Customer No. n: Selection for application to DR application 1...output: "0.6x" kW, "0.6y" kW, "0.6z" kW (each for one hour)

Selection unit 700 next judges whether a DR application remains for which storage batteries that are to be used have not been selected (Step S2711)

If a DR application remains for which storage batteries that are to be used have not been selected, selection unit 700 returns the process to Step S2706. In the present embodiment, selection unit 700 executes Step S2706 and Step S2707 for DR application 2 and DR application 3.

Selection unit 700 next executes Step S2706 and Step S2707 for DR application 3 (GF process) having the next highest profitability after DR application 1.

The implementation time of DR application 3 is from 9:00 to 15:00. As a result, selection unit 700 selects the storage batteries that are to be used for DR application 3 as shown below. Storage battery 9 of Customer No. 1: Selection for application to DR application 3 (9:00-12:00, 1.12 kWh are necessary after 12:00)

Storage battery 9 of Customer No. 2:
Storage battery 9 of Customer No. 3:
Storage battery 9 of Customer No. 4:
Storage battery 9 of Customer No. 5: Selection for application to DR application 3 (9:00-12:00, 6.71 kWh necessary after 12:00)
Storage battery 9 of Customer No. n:

In this instance, it is determined that storage batteries 9 of Customer No. 1 and Customer No. 5 are to be applied for DR application 3 in the time slot from 9:00 to 12:00.

In addition, among storage batteries 9 of Customer No. 6-Customer No. n-1, all candidates that can be used in the time slot in which DR application 3 is implemented are selected for application to DR application 3.

In this instance, all storage batteries 9 that can be applied to DR application 3 in the period from 12:00 to 15:00 are being applied to DR application 1, and storage batteries 9 of customers having a time slot that allows use for DR application 3 in the period from 9:00 to 12:00 are therefore selected.

Of storage batteries 9 that have been selected for DR application 1, selection unit 700 may also apply storage batteries 9 that can be used for DR application 3 in the period from 12:00 to 15:00 to DR application 3 in the period from 12:00 to 15:00.

Regarding storage battery 9 of Customer No. 1, selection unit 700 uses (3 kWh-1.12 kWh) = 1.88 kWh in DR application 3 to secure the 1.12 kWh that is required for implementation of DR application 1 after 12:00.

However, because DR application 1 does not require implementation guarantee, selection unit 700 need not leave 1.12 kWh for storage battery 9 of Customer No. 1 at the stage of 12:00.

In addition, because there is no implementation guarantee for DR application 3, selection unit 700 applies storage battery 9 of Customer No. 1 to DR application 3 at an output of 0.62 kW obtained by dividing 1.88 kWh by 3 (3h). In this case, selection unit 700 applies storage battery 9 of Customer No. 1 to DR application 3 as the storage battery with the output at 0.62 kW and capacity at 1.88 kWh.

When selection unit 700 carries out implementation guarantee for DR application 3 regarding storage battery 9 of Customer No. 1, selection unit 700 takes a margin and sets the GF center at half of 1.88 kWh (= 0.94 kWh). Selection unit 700 next applies storage battery 9 of Customer No. 1 to DR application 3 as a storage battery with output of 0.94 kWh/3h (9:00-12:00) = 0.3 kW. In this case, selection unit 700 applies storage battery 9 of Customer No. 1 to DR application 3 as a storage battery having output of 0.3 kW and capacity of 1.88 kWh.

Selection unit 700 also applies storage battery 9 of Customer No. 5 to DR application 3 as a storage battery having output of 1.1 kW and capacity of (10 kWh-6.71 kWh) = 3.29 kWh by the same process. When a margin is taken, selection unit 700 sets the GF center at one half of 3.29 kWh (=1.65 kWh). Selection unit 700 then applies storage battery 9 of Customer No. 5 to DR application 3 as storage battery having output of 1.65 kW/3h (9:00-12:00) = 0.55 kW. In this case, selection unit 700 applies storage battery 9 of Customer No. 5 to DR application 3 as a storage battery having output of 0.55 kW and capacity of 3.29 kWh.

Selection unit 700 then executes Step S2708.

The profitability "2 yen/kW x 1h" of DR application 3 is a determined value, and selection unit 700 therefore advances the process to Step S2711.

Selection unit 700 next executes Step S2706 and Step S2707 for DR application 2 (LFC process) having the lowest profitability.

The implementation time of DR application 2 is from 11:00 to 13:00. As a result, selection unit 700 selects storage batteries that are the objects of use of DR application 2 as follows:

Storage battery 9 of Customer No. 1:

Storage battery 9 of Customer No. 2:

Storage battery 9 of Customer No. 3: Selection for application to DR application 2 (11:00-12:00, and 6.71 kWh necessary after 12:00)

Storage battery 9 of Customer No. 4:

Storage battery 9 of Customer No. 5:

Storage battery 9 of Customer No. n:

Of storage batteries 9 of Customers No. 6-[n-1], candidates of storage batteries that can be used in the time slot of implementation of DR application 2 are all selected for use in DR application 2.

In this instance, storage batteries 9 that can be used for DR application 1 in the period of from 12:00 to 15:00 are all applied to DR application 1, and storage batteries that can be used for DR application 3 in the time slot of from 9:00 to 12:00 are all applied to DR application 3. As a result, storage batteries 9 that are usable for DR in the time slot of from 11:00 to 12:00 and that cannot be used for DR application 3 due to their characteristics but that can be used for DR application 2 are selected as storage batteries that are to be used for DR application 2.

The output and capacity of storage batteries 9 that are applied to DR application 2 are next described.

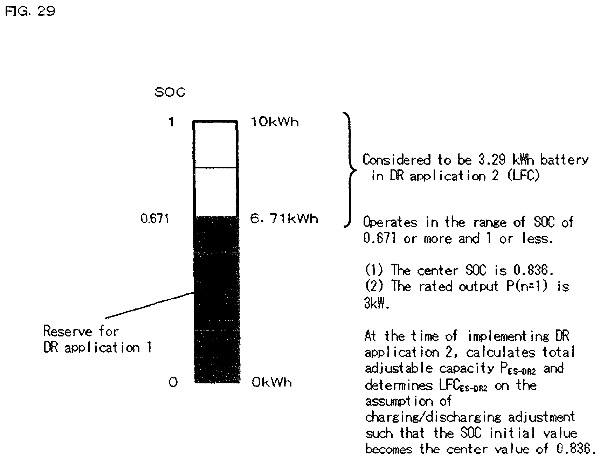

Regarding storage battery 9 of Customer No. 3, selection unit 700 sets the LFC center for which implementation guarantee is required to SOC = 0.836 that corresponds to 8.36 kWh intermediate that is between 10 kWh and 6.71 kWh (see FIG. 29). 10 kWh is the usable capacity of storage battery 9 of Customer No. 3. 6.71 kWh is the capacity that storage battery 9 of Customer No. 3 uses in DR application 1.

Selection unit 700 operates storage battery 9 of Customer No. 3 in the time slot of DR application 2 with the SOC in the range of from 0.671-1.0 and views it as a storage battery having a capacity of 3.29 kWh.

Selection unit 700 prescribes operation of storage batteries 9 similarly for other storage batteries 9 used in DR application 2 so as to leave capacity for DR application 1 that is implemented in subsequent time slots.

By means of the above process, each storage battery 9 that is to be used, output, and capacity are determined such that the profitability obtained by customers for the three DR applications is increased. (Step S2712).

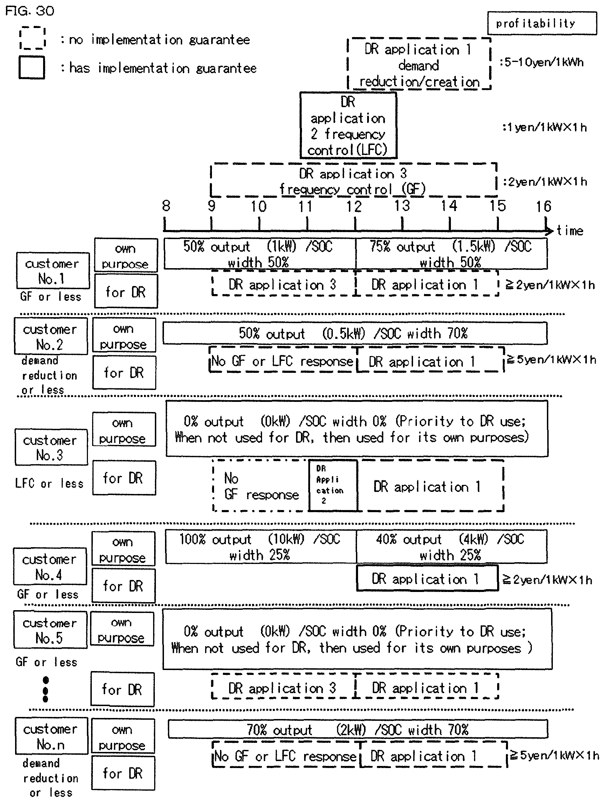

FIG. 30 shows the selection results of storage batteries that are to be used for each DR application. In FIG. 30, time slots in which storage batteries cannot be applied to DR applications are indicated by an alternate long and short dash line. In this time slot, customers can use storage batteries 9 for the purposes of the customers themselves.

The assignment capacity to the storage battery group that is to be used (hereinbelow referred to as "storage battery group B that is the object of use") that is applied to DR application 1 (demand reduction process) is 200 kW x 3h (DR1 allotment power amount).

The assignment capacity of the storage battery group that is to be used (hereinbelow referred to as "storage battery group C that is the object of use") that is used for DR application 2 (LFC process) is assumed to be 300 kW ($=LFC_{ES-DR2}$).

The assignment capacity of the storage battery group that is to be used (hereinbelow referred to as "storage battery group A that is the object of use") that is used for DR application 3 (GF) is assumed to be 440 kW ($=GF_{ES-DR3}$).

The implementation operation of DR application 1 is next described.

The implementation operation of DR application 1 described below is implemented in the time slot of 12:00-15:00 with storage battery group B that is the object of use (a number M of storage batteries 9) that was selected by the above-described processes as the object of control.

The implementation operation is here described taking Customer No. 1 as an example because basically similar charging/discharging processes are carried out for different customers.

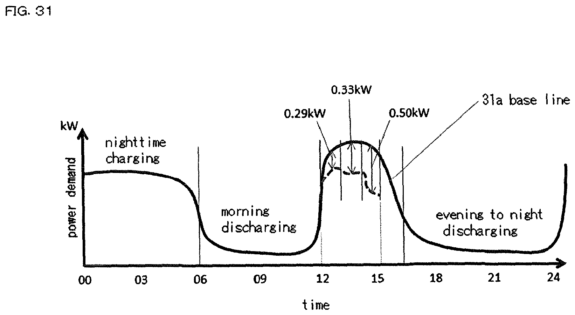

FIG. 31 shows the output demand curve during normal time of Customer No. 1.

Customer No. 1 has storage battery 9 (for example, Lib) in addition to normal home appliances.

Customer No. 1 implements operation that achieves a reduction of electricity charges overall by charging storage battery 9 with cheap nighttime power and discharging storage battery 9 to deal with the power consumption of its own home appliances in the time slot of expensive daytime power.

However, Customer No. 1 did not carry out discharging in time slots in which peak demand occurs on the power grid side.

As a result, the baseline that corresponds to DR application 1 of Customer No. 1 was recognized as the shape shown by solid line 31 a of FIG. 31.

In the time slot of 12:00-15:00 on the day of implementing DR application 1, demand reduction is carried out basically as:

12:00-13:00: baseline-0.29 kW
13:00-14:00: baseline-0.33 kW
14:00-15:00: baseline-0.50 kW

Control unit 704 of central control device 7 transmits information of the demand reduction amount in each of these times at the stage of the preceding day from communication unit 701 to apparatus control device 8 of Customer No. 1.

Further, control unit 704 also transmits, from communication unit 701 to apparatus control device 8 of Customer No. 1, operation control information that specifies the demand reduction amount at an period of TA1=5 minutes at the time that DR application 1 is implemented on the day that DR application 1 is implemented. Operation control information that specifies the demand reduction amount is an example of the operation control information of DR application 1.

The operation control information may represent the difference from the baseline (0.29 kW at 12:00-13:00) or may represent the ratio (weighting coefficients: x, y, and z) of the difference for the rated output of the power conditioner of storage battery 9.

Upon receiving operation control information by way of communication unit 802 in apparatus control device 8 of Customer No. 1, control unit 804 causes discharging of the demand reduction amount that is specified in the operation control information from storage batteries 9 in real time at period TA2 = 0.1 seconds.

DR application 1 is implemented by carrying out similar control for storage batteries 9 of other customers that belong to storage battery group B that is the object of use.

Further, the possibility exists that, among storage batteries that belong to storage battery group B that is the object of use, there will be storage batteries that cannot implement DR application 1 due to communication trouble, storage battery failure, or some other circumstance at the stage of implementing DR application 1 on the day in question.

In such a case, control unit 704 of central control device 7 achieves continued implementation of DR application 1 by changing the weighting coefficients (x, y, and z) for storage batteries of other customers belonging to storage battery group B that is the object of use.

For example, the original weighting coefficient was 200 kW/350 kW = x in the time slot of 12:00-13:00. In this case, there is storage battery output surplus power of 150 kW as storage battery group B that is the object of use.

Accordingly, when one storage battery that is to be used drops out, control unit 704 secures the original demand reduction amount by making the weighting coefficient for M-1 storage batteries the value "(200 kW × M) / (350 kW × (M-1))." Control unit 704 implements control of storage batteries that are the objects of use by sending operation control information that specifies the "difference from the baseline" that was calculated by this new weighting coefficient to each customer at the period TA1=5 minutes on the day of implementation of DR application 1.

If there is no control surplus power as in the time slot of 14:00-15:00, the shortage is compensated by charging/discharging of, for example, storage batteries maintained as reserve power by the aggregator.

The execution operation of DR application 2 (LFC) is next described.

A summary of the execution operation of DR application 2 is first described.

(1) Central control device 7 receives the SOC of storage batteries 9 that are to be used for DR application 2 at period $T_{B1}$ from apparatus control devices 8 that have been assigned to DR application 2 to collect the SOC of storage batteries 9 that are to be used for DR application 2. Period $T_{B1}$ is on the order of 15 minutes.

(2) Central control device 7 derives, for each collection of the SOC of storage batteries 9 that are to be used for DR application 2, total adjustable capacity $P_{ES-DR2}$ on the basis of the SOC of storage batteries 9 that are to be used for DR application 2.

(3) Central control device 7 next transmits total adjustable capacity $P_{ES-DR2}$ to load dispatching unit 2 at period $T_m$. Period $T_m$ is equal to or greater than period $T_{B1}$, and is, for example, 15 minutes.

(4) Load dispatching unit 2, for each reception of the total adjustable capacity $P_{ES-DR2}$, calculates the LFC assignment capacity $LFC_{ES-DR2}$ (where $LFC_{ES-DR2} <= P_{ES-DR2}$) for storage battery 9 group that is to be used for DR application 2.

(5) For each calculation of LFC assignment capacity $LFC_{ES-DR2}$, load dispatching unit 2 uses the LFC assignment capacity $LFC_{ES-DR2}$ and maximum value $\Delta f_{max}$ of the integrated value of the frequency deviation to create the DR2 charging/discharging gain line. Load dispatching unit 2 then transmits the DR2 charging/discharging gain line to central control device 7.

(6) Central control device 7 calculates the DR2 allotment coefficient K in accordance with the most recent DR2 charging/discharging gain line from load dispatching unit 2.

(7) Central control device 7 next transmits the DR2 allotment information (DR2 allotment coefficient K and maximum value $\Delta f_{max}$ of the integrated value of the frequency deviation) to each apparatus control device 8 that has been assigned to DR application 2 at period $T_{B1}$.

(8) Each apparatus control device 8 that has been assigned to DR application 2 calculates a local charging/discharging gain line that prescribes the charging/discharging operation of storage batteries 9 that are to be used for DR application 2 on the basis of the DR2 allotment coefficient K and the maximum value $\Delta f_{max}$ of the integrated value of frequency deviation.

(9) Each apparatus control device 8 that has been assigned to DR application 2 uses the local charging/discharging gain line and the grid frequency to control the charging/discharging operation of storage batteries 9 that are to be used for DR application 2.

The details of the execution operation of DR application 2 are next described.

The operation in which central control device 7 derives the total adjustable capacity $P_{ES\text{-}DR2}$ (hereinbelow referred to as the "$P_{ES\text{-}DR2}$ derivation operation") on the basis of the SOC of storage batteries 9 that are the objects of use of DR application 2.

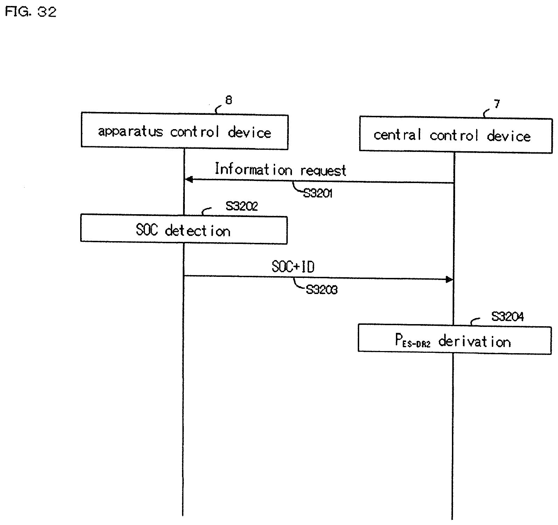

FIG. 32 is a sequence diagram for describing the $P_{ES\text{-}DR2}$ derivation operation. In FIG. 32, the number of apparatus control devices 8 that correspond to DR application 2 is assumed to be "1" in the interest of simplifying the explanation.

Communication unit 701 of central control device 7 transmits an information request indicating a request for SOC to each apparatus control device 8 that corresponds to DR application 2 (Step S3201).

In each apparatus control device 8, upon reception of the information request indicating a request for SOC by way of communication unit 802, control unit 804 causes detection unit 801 to detect the SOC of storage battery 9 that is to be used for DR application 2 (Step S3202).

Control unit 804 next transmits the SOC that was detected by detection unit 801 together with the ID from communication unit 802 to central control device 7 (Step S3203). The ID is hereinbelow described as a sequential number (n) from "1" to "N."

Central control device 7, upon receiving the SOC to which the ID is appended (hereinbelow referred to as "SOC(n)") from each apparatus control device 8 that accommodates DR application 2, derives the total adjustable capacity $P_{ES\text{-}DR2}$ (Step S3204).

Central control device 7 and each apparatus control device 8 that corresponds to DR application 2 repeat the operation of Steps S3201-S3404 ($P_{ES\text{-}DR2}$ derivation operation) at a period of TB1.

The method of deriving the total adjustable capacity $P_{ES\text{-}DR2}$ is next described.

Communication unit 701 of central control device 7 collects SOC(n) from each apparatus control device 8 that corresponds to DR application 2 at a period of TB1.

Comprehension unit 703 next uses SOC(n) and the storage battery distribution ratio curves 202a and 202b in database 702 to derive, for each storage battery 9 that is to be used for DR application 2, storage battery distribution ratio $\alpha_{discharging}(n)$ at the time of discharging and storage battery distribution ratio $\alpha_{charging}(n)$ at the time of charging.

In the present example embodiment, storage battery distribution ratio curves 202a and 202b are assumed to be based on the curves shown in FIGs. 23A and 23B. Storage battery distribution ratio curves 202a and 202b become different curves according to information that relates to the execution time that is required by DR application 2 and information such as the rated output P(n) of storage batteries 9 that are the objects of use (the number of kW that is the output of the power conditioner, the number of kWh of storage battery capacity of the storage batteries). For example, in the present example embodiment, a curve is used in which the total adjustable capacity $P_{ES\text{-}DR2}$ that is derived by the process described below becomes a value considered to enable charging/discharging to continue at least in an interval of period TB 1. The storage battery distribution ratio curve is not limited to the curve described here and can be altered as appropriate according to the demand and the DR application.

As the storage battery distribution ratio curves shown in FIGs. 23A and 23B, curves are used that have the object of basically maintaining SOC at about 50% both during charging and during discharging. However, the storage battery distribution ratio curve is corrected as appropriate to leave capacity for DR application 1 following DR application 2. In the present example embodiment, comprehension unit 703 corrects the storage battery distribution ratio curve to a curve with the object of basically maintaining SOC at 83.6% (=0.836) both during charging and during discharging.

Comprehension unit 703 next uses storage battery distribution ratio $\alpha_{discharging}(n)$, storage battery distribution ratio $\alpha_{charging}(n)$ the rated output P(n) of each of a total number N of storage batteries 9 that are the objects of use of DR application 2 in database 702, and the equations shown in Numerical Expression 1 and Numerical Expression 2 to derive $P_{ES,\ discharging}$ and $P_{ES,\ charging}$.

Numerical Expression 1

$$P_{ES,discharging} = \sum_{n=1}^{N} \alpha_{discharging}(n) \cdot P(n)$$

Numerical Expression 2

$$P_{ES,charging} = \sum_{n=1}^{N} \alpha_{charging}(n) \cdot P(n)$$

Comprehension unit 703 next adopts, of $P_{ES, discharging}$ and $P_{ES, charging}$, the smaller value as the total adjustable capacity $P_{ES-DR2}$.

The operation by which central control device 7 communicates with load dispatching unit 2 to comprehend the DR2 charging/discharging gain line (hereinbelow referred to as the "DR2 comprehension operation") is next described.

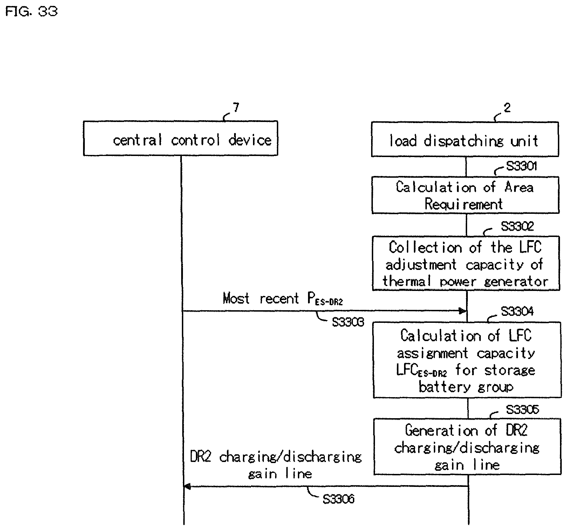

FIG. 33 is a sequence diagram for describing the DR2 comprehension operation.

Control unit 203 of load dispatching unit 2 uses the grid frequency that was detected by frequency gauge 201 to calculate the area requirement (AR) that is the output correction amount of a power plant (Step S3301).

Control unit 203 next collects the LFC adjustment capacity of thermal power generator 1 from the thermal power generator control unit (not shown) (Step S3302).

On the other hand, communication unit 701 of central control device 7 transmits the most recent total adjustable capacity $P_{ES-DR2}$ to load dispatching unit 2 (Step S3303).

Communication unit 202 of load dispatching unit 2 receives the most recent total adjustable capacity $P_{ES-DR2}$ that was transmitted from communication unit 701 of central control device 7. Communication unit 202 supplies this most recent total adjustable capacity $P_{ES-DR2}$ to control unit 203.

Control unit 203, upon receiving the most recent total adjustable capacity $P_{ES-DR2}$, uses the area requirement AR, the LFC adjustment capacity of thermal power generator 1, and the most recent total adjustable capacity $P_{ES-DR2}$ to derive the LFC capacity. Control unit 203 next assigns to thermal power generator 1 the capacity that follows removal of the rapid fluctuation component of the LFC capacity. Control unit 203 then assigns the remaining LFC capacity $LFC_{ES-DR2}$ (where $LFC_{ES-DR2} \leq P_{ES-DR2}$) to the DR application 2 storage battery group as the LFC assignment capacity $LFC_{ES-DR2}$ (Step S3304).

Control unit 203 determines the ratio of the assignment of the LFC capacity to thermal power generator I and the assignment of the LFC capacity (the LFC assignment capacity $LFC_{ES-DR2}$) to the DR application 2 storage battery group while giving consideration to the viewpoint of economy while also taking into consideration the assigned portion of the EDC (Economic Load Dispatching Control) component.

Control unit 203 next generates DR2 charging/discharging gain line (see FIG. 24A) that represents the LFC assignment capacity $LFC_{ES-DR2}$ and the maximum value $\Delta f_{max}$ of the integrated value of the frequency deviation that was determined beforehand (Step S3305).

The DR2 charging/discharging gain line shown in FIG. 24A represents the charging/discharging amount of the DR application 2 storage battery group for integrated value $\Delta f$ of the frequency deviation. The DR2 charging/discharging gain line changes by becoming line 400A and then line 400B according to the size of the LFC assignment capacity $LFC_{ES-DR2}$ ($LFC_{ES}$ and $LFC_{ES}'$) within the range of "LFC assignment capacity $LFC_{ES-DR2} \leq$ total adjustable capacity $P_{ES-DR2}$."

Control unit 203 then transmits the DR2 charging/discharging gain line from communication unit 202 of central control device 7 (Step S3306).

Central control device 7 and load dispatching unit 2 repeat the operations of Steps S3301-S3306 (DR2 comprehension operation) at a period $T_m$ (where $T_m$ is, for example, 15 minutes).

Comprehension unit 703 of central control device 7 goes on receiving the DR2 charging/discharging gain line by way of communication unit 701 and holds, of the DR2 charging/discharging gain line, the most recent charging/discharging gain line.

The operations of generating DR2 allotment information, transmitting the DR2 allotment information to each apparatus control device 8, and deriving the local charging/discharging gain line (hereinbelow referred to as the "DR2 allotment operations") are next described.

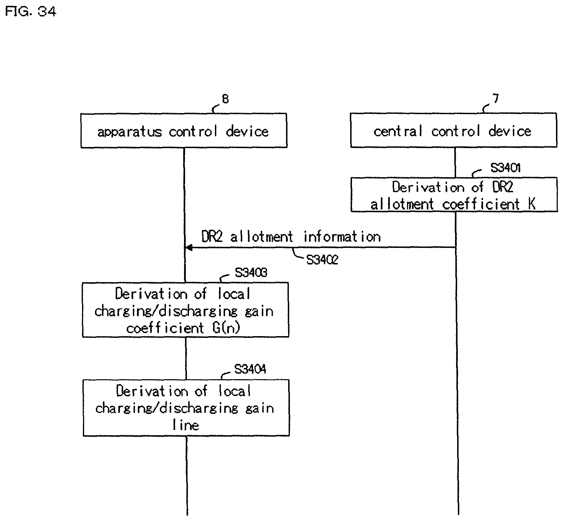

FIG. 34 is a sequence diagram for describing the DR2 allotment operations. In FIG. 34, the number of apparatus control devices 8 that have been assigned to DR application 2 is assumed to be "1" in the interest of simplifying the explanation.

Control unit 704 of central control device 7 uses the LFC assignment capacity $LFC_{ES-DR2}$ indicated in the most recent charging/discharging gain line, the most recent total adjustable capacity $P_{ES-DR2}$, and the equation shown in Numerical Expression 3 to derive the DR2 allotment coefficient K (Step S3401).

Numerical Expression 3

$$K=\frac{LFC_{ES-DR2}}{P_{ES-DR}}$$

Control unit 704 next transmits the DR2 allotment information that indicates the DR2 allotment coefficient K and the maximum value $\Delta f_{max}$ of the integrated value of the frequency deviation indicated in the most recent DR2 charging/discharging gain line from communication unit 701 to each apparatus control device 8 that has been assigned to DR application 2 (Step S3402). Although Numerical Expression 3 was used as the DR2 allotment coefficient K in the present example embodiment, flexible operation is also possible such as, when under pressure, instructing individual storage batteries to forcibly supply output close to the limit as the value of DR2 allotment coefficient K.

In the present example embodiment, the following process is executed in Step S3402.

Control unit 704 specifies for each storage battery 9 that is to be used for DR application 2, of the most recent storage battery distribution ratio $\alpha_{discharging}(n)$ and storage battery distribution ratio $\alpha_{charging}(n)$ that are derived by comprehension unit 703, the smaller value as the storage battery distribution ratio $\alpha(n)$.

Control unit 704 next generates, for each storage battery 9 that is to be used for DR application 2, operation-relevant information that represents the storage battery distribution ratio $\alpha(n)$ and the output power P(n) that is being held in database 702.

Control unit 704 next appends the DR2 allotment information to each item of operation-relevant information. Control unit 704 then transmits DR2 allotment information to which the operation-relevant information has been appended to each apparatus control device 8 that corresponds to the operation-relevant information from communication unit 701. The DR2 allotment information to which the operation-relevant information has been appended is an example of the operation control information of DR application 2.

In each apparatus control device 8 that has been assigned to DR application 2, control unit 804 receives the DR2 allotment information to which the operation-relevant information has been appended by way of communication unit 802.

Control unit 804 uses the DR2 allotment information to which the operation-relevant information has been appended and the equation shown in Numerical Expression 4 to derive the local charging/discharging gain coefficient G(n) (Step S3403).

## Numerical Expression 4

$$G(n) = \frac{K \cdot \alpha(n) \cdot P(n)}{\Delta f_{max}}$$

The values in the equation of Numerical Expression 4 are indicated in the DR2 allotment information to which the operation-relevant information has been appended.

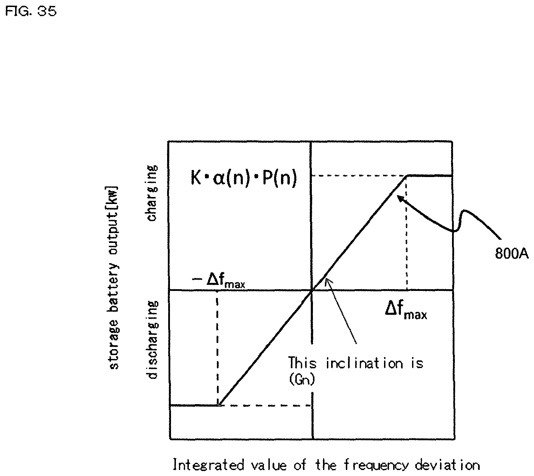

Control unit 804 then uses the local charging/discharging gain coefficient G(n) and the maximum value $\Delta f_{max}$ of the integrated value of the frequency deviation indicated in the DR2 allotment information to which the operation-relevant information has been appended to derive local charging/discharging gain line 800A shown in FIG. 35 (Step S3404).

Local charging/discharging gain line 800A that is shown in FIG. 35 is a straight line that, in the range in which the integrated value $\Delta f$ of the frequency deviation is $-\Delta f_{max} \leq \Delta f \leq \Delta f_{max}$, passes through the origin 0 with an inclination that is the local charging/discharging gain coefficient G(n). In addition, local charging/discharging gain line 800A takes the fixed value "$-K \cdot \alpha(n) \cdot P(n)$" (where the minus sign indicates discharging) in the range in which the integrated value $\Delta f$ of the frequency deviation is $\Delta f < -\Delta f_{max}$. In addition, local charging/discharging gain line 800A takes the fixed value "$K \cdot \alpha(n) \cdot P(n)$" in the range in which the integrated value $\Delta f$ of the frequency deviation is $\Delta f_{max} < \Delta f$.

Central control device 7 and each apparatus control device 8 that has been assigned to DR application 2 repeat Steps S3401-S3404 at period TB1.

In each apparatus control device 8 that has been assigned to DR application 2, control unit 804 goes on receiving the DR2 allotment information to which the operation-relevant information has been appended by way of communication unit 802 and holds, of the DR2 allotment information to which the operation-relevant information has been appended, the most recent DR2 allotment information to which operation-relevant information has been appended.

An operation in which apparatus control devices 8 that have been assigned to DR application 2 control the charging/discharging of storage batteries 9 that are the objects of use of DR application 2 on the basis of the DR2 allotment information to which the operation-relevant information has been appended and the grid frequency (hereinbelow referred to as the "DR2 charging/discharging control operation") is next described.

Control unit 704 of central control device 7, upon the starting time of DR application 2, transmits execution interval information IB that indicates the operation period TB2 to apparatus control devices 8 that have been assigned to DR application 2 by way of communication unit 701. Operation interval TB2 is, for example, 10 seconds. Upon receiving the execution interval information IB by way of communication unit 802, control unit 804 of each apparatus control device 8 that has been assigned to DR application 2 holds the execution interval information IB.

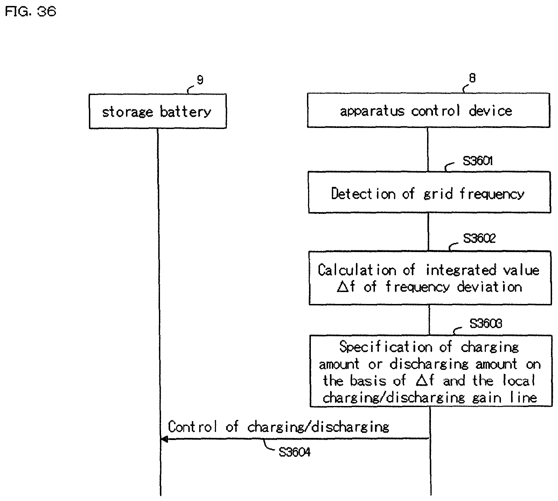

FIG. 36 is a sequence diagram for describing the charging/discharging control operation.

In each apparatus control device 8 that has been assigned to DR application 2, control unit 804 causes frequency gauge 803 to detect the grid frequency (Step S3601).

Control unit 804 next calculates the integrated value $\Delta f$ of the frequency deviation by subtracting the standard frequency of the grid frequency from the detection result of frequency gauge 803 and then integrating this subtraction result (Step S3602).

Control unit 804 next calculates the charging amount or discharging amount of storage batteries 9 that are the objects of use of DR application 2 in accordance with the integrated value $\Delta f$ of the frequency deviation and the local charging/discharging gain line (Step S3603).

When the absolute value of the integrated value $\Delta f$ of the frequency deviation is equal to or less than the maximum value (threshold value) $\Delta f_{max}$ of the integrated value of the frequency deviation in Step S3603, control unit 804 calculates the absolute value of the value $(G(n) \cdot \Delta f)$ that was obtained by multiplying the integrated value $\Delta f$ of the frequency deviation by the local charging/discharging gain coefficient $G(n)$ as the adjustment power amount.

On the other hand, when the absolute value of the integrated value $\Delta f$ of the frequency deviation is greater than the maximum value $\Delta f_{max}$ of the integrated value of frequency deviation, control unit 804 calculates a value $(K \cdot \alpha(n) \cdot P(n))$ obtained by multiplying together the allotment coefficient K, the storage battery distribution ratio $\alpha(n)$, and the rated output $P(n)$ as the adjustment power amount.

In this example, FIG. 35 showed a case of point symmetry in which the inclination of $G(n)$ is the same on the charging side and discharging side, but in actuality, a case that is not point symmetry can also be supposed. In such a case as well, $G(n)$ is determined by the same approach.

Control unit 804 next causes storage batteries 9 that are the objects of use of application 2 to execute a charging operation of the adjustment power amount when the integrated value $\Delta f$ of the frequency deviation is a positive value. Alternatively, when the integrated value $\Delta f$ of the frequency deviation is a negative value, control unit 804 causes storage batteries 9 that are the objects of use of DR application 2 to execute a discharging operation of the adjustment power amount (Step S3604).

Each apparatus control device 8 repeats Steps S3601-S3604 at period TB2 that is indicated in the execution interval information IB. As a result, the value of the integrated value of the frequency deviation changes each time, and with each change, charging/discharging is effected according to $G(n) \cdot \Delta f$.

In the midst of the implementation of DR application 2, there is a possibility that, from among storage batteries that belong to storage battery group C that is the object of use of storage batteries, that DR application 2 cannot be implemented due to communication trouble, storage battery failure, or some other circumstance.

In such cases, control unit 704 of central control device 7 redistributes the allotted portion of the storage battery that is unable to implement DR application 2 to a remaining storage battery of storage battery group C that is the object of use to continue DR application 2. At this time, control unit 704 implements redistribution $P_{ES-DR2}$ that remains after subtracting the adjustable capacity of the storage battery that is unable to implement DR application 2 satisfies $LFC_{ES} <= P_{ES-DR2}$.

Apparatus control device 8 (for example, control unit 804) that executes DR application 2 measures the result of charging/discharging of LFC upon the baseline. Apparatus control device 8 (for example, control unit 804) that executes DR application 2 saves this measurement result. Apparatus control device 8 (for example, control unit 804) that executes DR application 2 transmits this measurement result as implementation history to central control device 7 at a suitable degree of frequency.

The execution operation of DR application 3 is next described.

A summary of the execution operation of DR application 3 is first presented.

(1) Central control device 7 receives the SOC of storage batteries 9 that are the objects of use of DR application 3 at period TC1 from apparatus control devices 8 that have been assigned to DR application 3 and thus collects the SOC of storage batteries 9 that are the objects of use of DR application 3. Period TC1 is on the order of 5 minutes.

(2) Central control device 7, for each collection of SOC of storage batteries 9 that are the objects of use of DR application 3, derives the total adjustable capacity $P_{ES-DR3}$ on the basis of the SOC of storage batteries 9 that are the objects of use of DR application 3.

(3) Central control device 7 next transmits the total adjustable capacity $P_{ES-DR3}$ to load dispatching unit 2 at period $T_m$. Period $T_m$ is equal to or greater than period TC1, and is, for example, 15 minutes.

(4) With each reception of the total adjustable capacity $P_{ES-DR3}$, load dispatching unit 2 calculates the GF assignment capacity $GF_{ES-DR3}$ (where $GF_{ES-DR3} \leq P_{ES-DR3}$) for the group of storage batteries 9 that are the objects of use of DR application 3.

(5) With each calculation of the GF assignment capacity $GF_{ES-DR3}$, load dispatching unit 2 uses the GF assignment capacity $GF_{ES-DR3}$ and the maximum value $f_{max}$ of the frequency deviation to produce the DR3 drooping characteristic line. Load dispatching unit 2 then transmits the DR3 drooping characteristic line to central control device 7.

(6) Central control device 7 calculates the DR3 allotment coefficient K in accordance with the most recent DR3 drooping characteristic line from load dispatching unit 2.

(7) Central control device 7 next transmits DR3 allotment information (the DR3 allotment coefficient K and the maximum value $f_{max}$ of the frequency deviation) to each apparatus control device 8 that has been assigned to DR application 3 at period TC1.

(8) Each apparatus control device 8 that has been assigned to DR application 3 calculates a local drooping characteristic line that prescribes the charging/discharging operation of storage batteries 9 that are the objects of use of DR application 3 on the basis of the DR3 allotment coefficient K and the maximum value $f_{max}$ of the frequency deviation. The local drooping characteristic line will be described later.

(9) Each apparatus control device 8 that has been assigned to DR application 3 uses the local drooping characteristic line and the grid frequency to control the charging/discharging operation of storage batteries 9 that are the objects of use of DR application 3.

The operation in which central control device 7 derives the total adjustable capacity $P_{ES-DR3}$ on the basis of the SOC of storage batteries that are the objects of use of DR application 3 (hereinbelow referred to as "$P_{ES-DR3}$ derivation operation") is first described.

The explanation of this $P_{ES-DR2}$ derivation operation is realized by reading the explanation of the above-described $P_{ES-DR2}$ derivation operation as shown below.

"DR application 2" is to be read "DR application 3."

"$_{DR2}$" is to be read "$_{DR3}$."

"Period TB1" is to be read "period TC1."

The operation in which central control device 7 communicates with load dispatching unit 2 to comprehend the DR3 drooping characteristic line (hereinbelow referred to as the "DR3 comprehension operation") is next described.

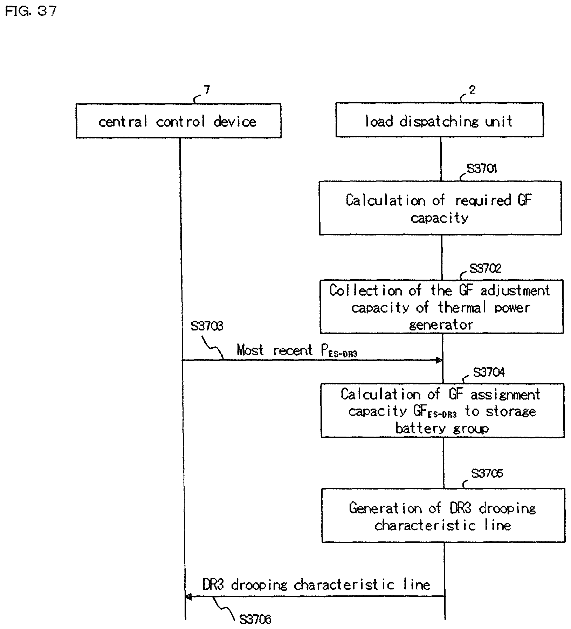

FIG. 37 is a sequence diagram for describing the DR3 comprehension operation.

Control unit 203 of load dispatching unit 2 calculates the GF capacity that is required in an area on the basis of the estimated generation amount of solar power generation, the estimated generation amount of wind power generation, and the estimated power demand (Step S3701).

Control unit 203 next collects the GF adjustment capacity of thermal power generator 1 from the thermal power generator control unit (not shown) (Step S3702).

On the other hand, communication unit 701 of central control device 7 transmits the most recent total adjustable capacity $P_{ES-DR3}$ to load dispatching unit 2 (Step S3703).

Communication unit 202 of load dispatching unit 2 receives the most recent total adjustable capacity $P_{ES-DR3}$ that was transmitted from communication unit 701 of central control device 7. Communication unit 202 supplies this most recent total adjustable capacity $P_{ES-DR3}$ to control unit 203.

Control unit 203, upon receiving the most recent total adjustable capacity $P_{ES-DR3}$, allots the capacity to thermal power generator 1 and the storage battery group of DR application 3. For example, control unit 203 uses the GF adjustment capacity of thermal power generator 1 and the most recent total adjustable capacity $P_{ES-DR3}$ to assign a capacity portion of the required GF capacity to thermal power generator 1 that, of the capacity that thermal power generator 1 can bear, the capacity portion that can be efficiently borne based on a forecast of the operating state of the generator. Control unit 203 next assigns to the storage battery group of DR application 3 the remaining GF capacity $GF_{ES-DR3}$ (where $GF_{ES-DR3} \leq P_{ES-DR3}$) as the GF assignment capacity $GF_{ES-DR3}$ (Step S3704).

Control unit 203 then generates DR3 drooping characteristic line (see FIG. 24B) that represents the GF assignment capacity $GF_{ES-DR3}$ and the maximum value $f_{max}$ of the frequency deviation that was determined beforehand (Step S3705).

The DR3 drooping characteristic line shown in FIG. 24B represents the charging/discharging amount of the DR application 3 storage battery group with respect to the frequency deviation $\Delta f$. The inclination of the DR3 drooping characteristic line changes according to the size of the GF assignment capacity $GF_{ES-DR3}$ (assignment ratio) in the range in which "GF assignment capacity $GF_{ES-DR3} \leq$ total adjustable capacity $P_{ES-DR3}$."

Control unit 203 next transmits the DR3 drooping characteristic line to central control device 7 from communication unit 202 (Step S3706).

Central control device 7 and load dispatching unit 2 repeat the operations of Steps S3701-S3706 (the DR3 comprehension operations) at period $T_m$ (where $T_m$ is, for example, 15 minutes).

Comprehension unit 703 of central control device 7 goes on receiving the DR3 drooping characteristic line by way of communication unit 701 and holds, of DR3 drooping characteristic line, the most recent drooping characteristic line.

The operations of generating DR3 allotment information, transmitting the DR3 allotment information to each apparatus control device 8, and deriving the local drooping characteristic line (hereinbelow referred to as the "DR3 allotment operations") are next described.

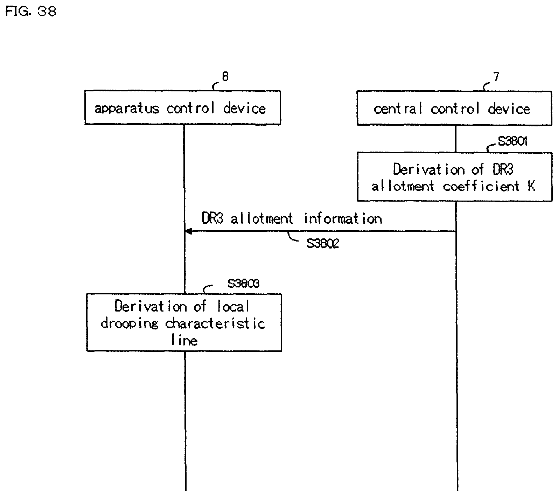

FIG. 38 is a sequence diagram for describing the DR3 allotment operations. In FIG. 38, the number of apparatus control devices 8 that have been assigned to DR application 3 is assumed to be "1" in the interest of simplifying the explanation.

Control unit 704 of central control device 7 uses the GF assignment capacity $GF_{ES-DR3}$ indicated in the most recent drooping characteristic line, the most recent total adjustable capacity $P_{ES-DR3}$, and the equation shown in Numerical Expression 5 to derive the DR3 allotment coefficient K (Step S3801).

## Numerical Expression 5

$$K= (GF_{ES-DR3}) \ / \ (P_{ES-DR3})$$

Control unit 704 next transmits the DR3 allotment information that indicates the DR3 allotment coefficient K and the maximum value $f_{max}$ of the frequency deviation indicated in most recent DR3 drooping characteristic line from communication unit 701 to each apparatus control device 8 that has been assigned to the DR application 3 (Step S3802). Although Numerical Expression 5 is used as the DR3 allotment coefficient K in the present example embodiment, flexible operation is also possible such as, when under pressure, instructing individual storage batteries to forcibly supply output close to the limit as the value of DR3 allotment coefficient K.

In the present example embodiment, the following process is executed in Step S3802. Control unit 704 specifies, for each storage battery 9 that is to be used for DR application 3, the smaller value of the most recent storage battery distribution ratio $\alpha_{discharging}(n)$ and storage battery distribution ratio $\alpha_{charging}(n)$ that were derived by comprehension unit 703 as the storage battery distribution ratio $\alpha(n)$.

Control unit 704 next generates for each storage battery 9 that is to be use for DR application 3 operation-relevant information that represents the storage battery distribution ratio $\alpha(n)$ and the rated output P(n) that is being held in database 702.

Control unit 704 next appends the DR3 allotment information to each item of operation-relevant information.

Control unit 704 then transmits the DR3 allotment information to which the operation-relevant information was appended from communication unit 701 to apparatus control devices 8 that correspond to the operation-relevant information. The DR3 allotment information to which the operation-relevant information was appended is an example of the operation control information of DR application 3.

In each apparatus control device 8 that has been assigned to DR application 3, control unit 804 receives DR3 allotment information to which operation-relevant information has been appended by way of communication unit 802.

Control unit 804 uses the maximum value $f_{max}$ of the frequency deviation that is indicated in the DR3 allotment information to which the operation-relevant information has been appended and the equation shown in Numerical Expression 6 to derive the local drooping characteristic line (Step S3803).

## Numerical Expression 6

$$GF(n)=K \cdot \alpha(n) \cdot P(n)$$

The values in Numerical Expression 6 are indicated in the DR3 allotment information to which the operation-relevant information was appended.

Local drooping characteristic line 400C shown in FIG. 24B is a straight line that, in the range in which the frequency deviation $\Delta f$ is $-f_{max} \le \Delta f \le +f_{max}$, passes through the origin (0 [kW], $f_0$=50Hz) and the inclination is determined by GF(n) and $f_{max}$. In addition, local drooping characteristic line 400C takes the fixed value "$-K \cdot \alpha(n) \cdot P(n)$" (where the minus sign indicates discharging) in the range in which the frequency deviation $\Delta f$ is $\Delta f < -f_{max}$. In addition, local drooping characteristic line takes the fixed value "$K \cdot \alpha(n) \cdot P(n)$" in the range in which the frequency deviation $\Delta f$ is $+f_{max} < \Delta f$.

Central control device 7 and each apparatus control device 8 that has been assigned to DR application 3 repeat Steps S 3801-S3803 at period TC1 (where TC1 is, for example, 5 minutes).

In each apparatus control device 8 that has been assigned to DR application 3, control unit 804 goes on receiving the DR3 allotment information to which the operation-relevant information has been appended by way of communication unit 802 and holds, of the DR3 allotment information to which the operation-relevant information has been appended, the most recent DR3 allotment information to which operation-relevant information has been appended.

The operation in which apparatus control devices 8 that have been assigned to DR application 3 control the charging/discharging of storage batteries 9 that are the objects of use of DR application 3 on the basis of the DR3 allotment information to which the operation-relevant information has been appended and the grid frequency (hereinbelow referred to as the "DR3 charging/discharging control operation") is next described.

At the starting time of DR application 3, control unit 704 of central control device 7 transmits execution interval information IB that indicates the operation period TC2 to apparatus control devices 8 that have been assigned to DR application 3 by way of communication unit 701. Operation period TC2 is, for example, 0.1 seconds. Control unit 804 of each apparatus control device 8 that has been assigned to DR application 3, upon receiving the execution interval information IB by way of communication unit 802, holds the execution interval information IB.

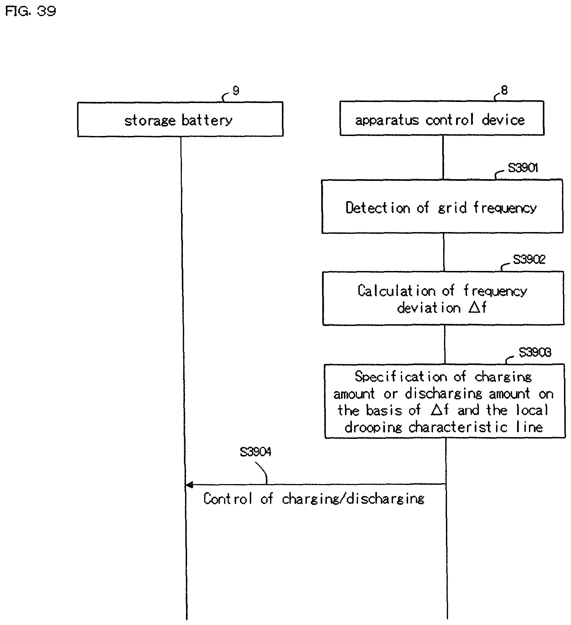

FIG. 39 is a sequence diagram for describing the charging/discharging control operation.

In apparatus control devices 8 that have been assigned to DR application 3, control unit 804 causes frequency gauge 803 to detect the grid frequency (Step S3901).

Control unit 804 next calculates the frequency deviation $\Delta f$ by subtracting the standard frequency of the grid frequency from the detection result of frequency gauge 803 (Step S3902).

Control unit 804 then calculates the charging amount or the discharging amount of storage battery 9 that is to be used for DR application 3 in accordance with the frequency deviation $\Delta f$ and the local drooping characteristic line (Step S3903).

If the absolute value of the frequency deviation $\Delta f$ is equal to or less than the maximum value (threshold value) $f_{max}$ of the frequency deviation in Step S3903, control unit 804 calculates, as the adjustment power amount, the absolute value of the value $(GF(n) \cdot \Delta f / f_{max})$ obtained by multiplying $GF(n)$ by the value obtained by dividing the frequency deviation $\Delta f$ by $f_{max}$.

On the other hand, if the absolute value of the frequency deviation $\Delta f$ is greater than the maximum value $f_{max}$ of the absolute value of the frequency deviation, control unit 804 calculates $GF(n)$ as the adjustment power amount.

If the frequency deviation $\Delta f$ is a positive value, control unit 804 then causes storage battery 9 that is to be used for DR application 3 to execute a charging operation of the adjustment power amount. Alternatively, if the frequency deviation $\Delta f$ is a negative value, control unit 804 causes storage battery 9 that is to be used for DR application 3 to execute a discharging operation of the adjustment power amount (Step S3904).

Each apparatus control device 8 repeats Steps S3901-S3904 at period TC2 that is indicated in the execution interval information IB (where, for example, TC2 is 0.1 seconds). As a result, the value of the frequency deviation changes each time, and with each change, charging/discharging is effected that accords with $GF(n) \cdot \Delta f / f_{max}$.

The effect of the present example embodiment is next described.

According to the present example embodiment, selection unit 700 selects storage batteries that satisfy the characteristics of applications for each of DR applications 1-3 as the storage batteries that are to be used for.

As a result, the selection, as storage batteries that are to be used for an application, of storage batteries that do not satisfy the characteristics of the application can be prevented. Using storage batteries that are the objects of use to execute applications therefore enables execution of applications with higher precision.

A modification of the present example embodiment is next described.

Each of period TA1, period TB1, period TA2, period TB2, and period TC2 can be altered as appropriate.

The number of DR applications that central control device 7 carries out is not limited to three and can be altered as appropriate.

The DR applications that central control device 7 carries out is not limited to DR applications 1-3 and can be altered as appropriate.

For example, a spinning reserve process and a non-spinning reserve process can also be used as DR applications. In this case, database 702 further stores characteristics of each of the spinning reserve process and the non-spinning reserve process (for example, response time, degree of communication confidence, profitability, reliability, and implementation time).

Selection unit 700 further has the following functions.

Selection unit 700 has the functions of selecting storage batteries that accommodate the characteristics of the spinning reserve process as storage batteries that are the objects of use of the spinning reserve process and selecting storage batteries that accommodate the non-spinning reserve process as storage batteries that are the objects of use of the non-spinning reserve process.

In addition, control unit 704 transmits operation control information for controlling the operation of storage batteries that are the objects of use that accords with the spinning reserve process to apparatus control devices that control storage batteries that are the objects of use of the spinning reserve process. Further, control unit 704 transmits operation control information for controlling the operation of storage batteries that are the objects of use according to the non-spinning reserve process to apparatus control devices that control storage batteries that are the objects of use of the non-spinning reserve process.

The following operating mode can be considered as an example of the operating mode as a non-spinning reserve process or spinning reserve process that uses storage batteries of customers to carry out power demand control.

Capacity (kW) is reserved as reserve power 24 hours a day, and compensation (for example, 1 yen/kW x 1h) is paid for reserving reserve power. The actuation of the operation of the spinning reserve process is implemented for a limited time such as from 11:00 to 11:30.

For example, control unit 704 transmits operation control information to apparatus control device 8 of Customer No. 3 that participates in the spinning reserve process such that 3 kW is normally reserved for spinning reserve at Customer No. 3.

When the report of new DR application 1 (demand reduction process) arrives at Customer No. 3 on the preceding day, Customer No. 3 does not act if DR application 1 (the demand reduction process) requires an implementation guarantee, but if there is no implementation guarantee, tenders a bid for, for example, 2 kW x 3h in consideration of the price (the price being 5 yen kWh).

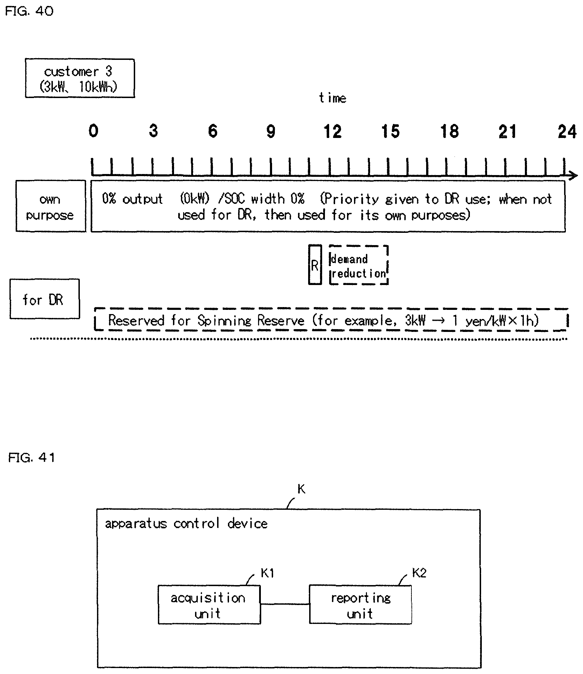

On the day in question, spinning reserve that was given priority and that required "implementation guaranteed" is actuated from 11:00 to 11:30, and at Customer No. 3, operation is therefore carried out of participating in spinning reserve during that time and participating in demand reduction from 12:00 to 15:00 (see FIG. 40).

Alternatively, the operation described below may also be carried out when the use of storage battery 9 maintained by Customer No. 3 does not give priority to DR.

Customer No. 3 takes into consideration the actuation frequency of spinning reserve and reserves output that can be permitted beforehand for spinning reserve use. Then, although Customer No. 3 normally uses storage battery 9 for its own purposes, when the time comes that spinning reserve is actuated, it uses storage battery 9 with priority given to spinning reserve.

In the present example embodiment, storage batteries were used as power supply/demand adjustment devices, but the power supply/demand adjustment devices are not limited to storage batteries. For example, the power supply/demand adjustment devices may also be home appliances, electric water heaters, heat-pump water heaters, pumps, or electric vehicles, as shown in the first example embodiment.

In communication carried out at the above-described periods TA1, TB1, and TC1, central control device 7 collects not only operation control information but also information relevant to monitoring the communication state and monitoring the state of implementation of control.

In addition, when the discharging (reverse power flow) from storage battery 9 (customer-side) to power grid 3 is prohibited, control unit 804 causes the discharged power of storage battery 9 to discharge within the range of the power consumption amount of loads 10 of the customer. The consumption of the discharged power of storage battery 9 by loads 10 decreases the power demand upon power grid 3.

When the discharging (reverse power flow) from storage battery 9 (customer-side) to power grid 3 is not prohibited, control unit 804 may supply the discharged power of storage battery 9 to power grid 3.

In the present example embodiment, control unit 804 uses the frequency deviation f that fluctuates according to the state of balance between power supply and demand and the integrated value Δf of the frequency deviation as information for specifying the overall supply/demand adjustment amount.

However, information for specifying the overall supply/demand adjustment amount is not limited to the frequency deviation f or the integrated value Δf of the frequency deviation and can be altered as appropriate. For example, information that indicates the overall supply/demand adjustment amount may be used in place of the frequency deviation f or the integrated value Δf of frequency deviation as information for specifying the overall supply/demand adjustment amount.

Information that indicates the overall supply/demand adjustment amount is transmitted, for example, from load dispatching unit 2. In this case, load dispatching unit 2 transmits information that indicates the overall supply/demand adjustment amount to each apparatus control device 8 by, for example, one-way communication (such as by broadcast transmission). The method of transmitting the information that indicates the overall supply/demand adjustment amount is not limited to one-way communication (such as broadcast transmission) and can be altered as appropriate.

In each apparatus control device 8, communication unit 802 receives information that indicates the overall supply/demand adjustment amount and supplies the information that indicates the overall supply/demand adjustment amount to control unit 804. Control unit 804 uses the overall supply/demand adjustment amount in place of, for example, the integrated value Δf of frequency deviation. In this case, an explanation of the power supply/demand adjustment is realized by reading the "integrated value Δf of frequency deviation" as "overall supply/demand adjustment amount."

In addition, load dispatching unit 2 generates information that indicates the overall supply/demand adjustment amount as shown below.

Load dispatching unit 2 uses the grid frequency and the power flow of linking line 4 to calculate the overall supply/demand adjustment amount.

For example, when power is being supplied from power grid 3 to another power grid 13 by way of linking line 4, load dispatching unit 2 multiplies a predetermined constant by a value obtained by subtracting the actual grid frequency from the standard frequency of the grid frequency. Load dispatching unit 2 then calculates the result of subtracting the power flow of linking line 4 (the power that is supplied to another power grid 13 from power grid 3 by way of linking line 4) from this multiplication result as the overall supply/demand adjustment amount.

When power is supplied to power grid 3 from another power grid 13 by way of linking line 4, load dispatching unit 2 first multiplies a value obtained by subtracting the actual grid frequency from the standard frequency of the grid frequency as shown above by a predetermined constant. Load dispatching unit 2 then calculates the result of adding the power flow of linking line 4 (the power that is supplied to power grid 3 from another power grid 13 by way of linking line 4) to the multiplication result as the overall supply/demand adjustment amount.

The above-described apparatus control device R1 or 8 may be further provided with acquisition unit K1 and reporting unit K2.

FIG. 41 shows apparatus control device K that is provided with acquisition unit K1 and reporting unit K2.

Acquisition unit K1 acquires, for each power supply/demand adjustment device such as a storage battery, information that relates to the power supply/demand adjustment device and information that indicates characteristics of power supply/demand adjustment processing (applications).

Reporting unit K2 reports to outside devices that a power supply/demand adjustment device that is controlled by apparatus control device K is a power supply/demand adjustment device that satisfies the characteristics of power supply/demand adjustment processing on the basis of the information that relates to the power supply/demand adjustment device and information that indicates the characteristics of the power supply/demand adjustment processing. The outside devices are, for example, control devices A-H and central control device 7.

In this case, the report of reporting unit K2 functions as the selection result of storage batteries that are the objects of use for each application. The outside devices (for example, control devices A-H and central control device 7) therefore need not select storage batteries that are the objects of use for each application, and the concentration of processing in the outside devices can be limited.

Reporting unit K2 may also report to outside devices that the power supply/demand adjustment devices that are controlled by apparatus control device K are power supply/demand adjustment devices that have a response time that is equal to or less than the response time of the power supply/demand adjustment processing.

Alternatively, reporting unit K2 may also report to outside devices that the power supply/demand adjustment devices that apparatus control device K controls are power supply/demand adjustment devices that have a degree of communication confidence that is equal to or greater than the degree of communication confidence of the power supply/demand adjustment processing.

Still further, reporting unit K2 may also report to outside devices that the power supply/demand adjustment devices that apparatus control device K controls are power supply/demand adjustment devices that are provided with a profitability condition that is equal to or less than the compensation of the power supply/demand adjustment processing.

When there is a plurality of processes related to power supply/demand adjustment having compensation that is equal to or greater than the profitability condition provided in a power supply/demand adjustment device, reporting unit K2 may report to the outside devices that the power supply/demand adjustment device that is controlled by apparatus control device K is a power supply/demand adjustment device that satisfies the characteristics of the process that is related to power supply/demand adjustment having the highest profitability.

Further, reporting unit K2 may also report to outside devices that a power supply/demand adjustment device that is controlled by apparatus control device K is a power supply/demand adjustment device that has a usage-permitted interval that is contained in an execution interval that relates to a power supply/demand adjustment process.

Still further, reporting unit K2 may report to outside devices that a power supply/demand adjustment device that is controlled by apparatus control device K is a power supply/demand adjustment device that satisfies an implementation guarantee that relates to a power supply/demand adjustment process.

In the present example embodiment, information that relates to power supply/demand adjustment devices is collected from customers or storage batteries by a central control device (aggregator). In addition, as information that relates to power supply/demand adjustment processing (applications), information may be used that is collected from other devices by a central control device (aggregator) or that is stored beforehand in a storage unit or a database.

Selection unit (acquisition unit) 700 may acquire, for example, information that relates to the characteristics of applications or information that relates to storage batteries from an outside device or from database 702.

In each of the above-described example embodiments, information that indicates characteristics of power supply/demand adjustment processing such as applications is an example of information that indicates suitable conditions (predetermined conditions) in the execution of power supply/demand adjustment processing. Further, information that relates to power supply/demand adjustment devices such as storage batteries is an example of information that indicates the characteristics of power supply/demand adjustment devices that correspond to suitable conditions in the execution of the power supply/demand adjustment processing such as applications.

In each of the above-described example embodiments, each of control devices A-H and A10, central control device 7, and apparatus control devices 8 and K maybe realized by a computer. In such cases, a computer reads and executes a program that is recorded on a recording medium that can be read by the computer to execute the functions belonging to any of control devices A-H and A10 or to central control device 7 and apparatus control devices 8 and K. The recording medium is, for example, a CD-ROM (Compact Disk Read Only Memory). The recording medium is not limited to a CD-ROM and can be altered as appropriate.

In each of the above-described example embodiments, the configurations shown in the drawings are merely examples, and the present invention is not limited to these configurations.

In the specification, "acquisition" includes at least one of: a particular device taking data or information that is stored on another device or recording medium (active acquisition), for example, by submitting a request or an inquiry to another device and receiving data or information or by accessing another device or recording medium and reading data or information; and procuring data or information that is supplied from another device to its own device (passive acquisition), for example, by receiving data or information that is distributed (or, for example, transmitted or push reported). In addition, "acquisition" includes acquisition by selecting from among received data or information or reception by selecting data or information that is distributed.

Although the invention of the present application has been described with reference to example embodiments, the invention of the present application is not limited to the above-described example embodiments. The configuration and details of the invention of the present application are open to various modifications within the scope of the invention of the present application that will be clear to one of ordinary skill in the art. This application claims the benefits of priority based on Japanese Patent Application No. 2014-156202 for which application was submitted on July 31, 2014 and incorporates by citation all of the disclosures of that application.

All or a portion of the above-described example embodiments can be described as shown in the following Supplementary Notes but are not limited to the following Supplementary Notes.

SUPPLEMENTARY NOTE 1

A control device is provided with:

an acquisition unit that acquires information that relates to power supply/demand adjustment devices that is indicated for each power supply/demand adjustment device and information that indicates characteristics of power supply/demand adjustment processing; and

a reporting unit that, on the basis of the information that relates to the power supply/demand adjustment devices and information that indicates characteristics of the power supply/demand adjustment processing, reports an actuation of the power supply/demand adjustment processing to the power supply/demand adjustment devices that are to be used for the power supply/demand adjustment processing.

SUPPLEMENTARY NOTE 2

In the control device as described in Note 1, the information that indicates characteristics of the power supply/demand adjustment processing is information that indicates suitable conditions that enable execution of the power supply/demand adjustment processing.

SUPPLEMENTARY NOTE 3

In the control device as described in Note 1 or 2, the information that relates to the power supply/demand adjustment devices is information that indicates characteristics of the power supply/demand adjustment devices that satisfy suitable conditions that enable execution of the power supply/demand adjustment processing.

SUPPLEMENTARY NOTE 4

In the control device as described in Note 1, the reporting unit reports an actuation of the power supply/demand adjustment processing to power supply/demand adjustment devices that have a response time that is equal to or less than the response time of the power supply/demand adjustment processing.

SUPPLEMENTARY NOTE 5

In the control device as described in Note 1, the reporting unit reports an actuation of the power supply/demand adjustment processing to power supply/demand adjustment devices that have a degree of communication confidence that is equal to or greater than the degree of communication confidence of the power supply/demand adjustment processing.

SUPPLEMENTARY NOTE 6

In the control device as described in Note 1, the reporting unit reports an actuation of the power supply/demand adjustment processing to power supply/demand adjustment devices that are provided with a profitability condition that is equal to or less than compensation of the power supply/demand adjustment processing.

SUPPLEMENTARY NOTE 7

In the control device as described in Note 6, when there are a plurality of the power supply/demand adjustment processes having compensation that is equal to or greater than a profitability condition provided in the power supply/demand adjustment devices, the reporting unit reports actuation of the power supply/demand adjustment processing that has the highest profitability to power supply/demand adjustment devices provided with a profitability condition that is equal to or less than compensation of the power supply/demand adjustment processing.

SUPPLEMENTARY NOTE 8

In the control device as described in Note 1, the reporting unit reports an actuation of the power supply/demand adjustment processing to power supply/demand adjustment devices that have a usage-permitted interval that is contained in an execution interval of the power supply/demand adjustment processing.

SUPPLEMENTARY NOTE 9

In the control device as described in Note 1, the reporting unit reports an actuation of the power supply/demand adjustment processing to power supply/demand adjustment devices that satisfy an implementation guarantee relating to the power supply/demand adjustment processing.

SUPPLEMENTARY NOTE 10

In the control device as described in Note 8, the reporting unit reports an actuation of the power supply/demand adjustment processing to a plurality of power supply/demand adjustment devices according to the usage-permitted interval.

SUPPLEMENTARY NOTE 11

In the control device as described in any one of Notes 1 to 10, a communication unit is provided that transmits operation control information to apparatus control devices that control the power supply/demand adjustment devices; and the apparatus control devices control an operation of the power supply/demand adjustment devices on the basis of a state of a power grid and the operation control information at a time interval that is shorter than a transmission interval of the operation control information.

SUPPLEMENTARY NOTE 12

In the control device as described in any one of Notes 1 to 10, a communication unit is provided that transmits, to apparatus control devices that control the power supply/demand adjustment devices, the operation control information that was generated on the basis of a state of the power supply/demand adjustment devices and a power amount that is shared by all N (where N is a number equal to or greater than 1) of the power supply/demand adjustment devices to adjust the power amount on the power grid.

SUPPLEMENTARY NOTE 13

In the control device as described in any one of Notes 1 to 12, the report of an actuation of the power supply/demand adjustment processing is a transmission of operation control information that controls operation of the power supply/demand adjustment devices.

SUPPLEMENTARY NOTE 14

An apparatus control device includes:

a communication unit that transmits information that relates to power supply/demand adjustment devices to an outside device; and
a reception unit that receives the report of an actuation of power supply/demand adjustment processing that is determined on the basis of information that relates to the power supply/demand adjustment devices and information that indicates characteristics that relate to the power supply/demand adjustment processing.

SUPPLEMENTARY NOTE 15

In the apparatus control device as described in Note 14, the information that indicates characteristics of the power supply/demand adjustment processing is information that indicates suitable conditions that enable execution of the power supply/demand adjustment processing.

SUPPLEMENTARY NOTE 16

In the apparatus control device as described in Note 14 or 15, the information that relates to the power supply/demand adjustment devices is information that indicates characteristics of power supply/demand adjustment devices that satisfy suitable conditions that enable execution of the power supply/demand adjustment processing.

SUPPLEMENTARY NOTE 17

In the apparatus control device as described in Note 14, a power supply/demand adjustment device that has response time that is equal to or less than the response time of the power supply/demand adjustment processing receives a report of an actuation of the power supply/demand adjustment processing by way of the reception unit.

SUPPLEMENTARY NOTE 18

In the apparatus control device as described in Note 14, a power supply/demand adjustment device that has a degree of communication confidence that is equal to or greater than the degree of communication confidence of the power supply/demand adjustment processing receives a report of an actuation of the power supply/demand adjustment processing by way of the reception unit.

SUPPLEMENTARY NOTE 19

In the apparatus control device as described in Note 14, a power supply/demand adjustment device that is provided with a profitability condition that is equal to or less than compensation of the power supply/demand adjustment processing receives a report of an actuation of the power supply/demand adjustment processing by way of the reception unit.

SUPPLEMENTARY NOTE 20

In the apparatus control device as described in Note 14, when there are a plurality of the power supply/demand adjustment processes having compensation that is equal to or greater than a profitability condition that is provided in the power supply/demand adjustment devices, the power supply/demand adjustment devices receives a report of an actuation of the power supply/demand adjustment process having the highest profitability by way of the reception unit.

SUPPLEMENTARY NOTE 21

In the apparatus control device as described in Note 14, a power supply/demand adjustment device, that has a usage-permitted interval that is contained in an execution interval that relates to the power supply/demand adjustment processing, receives a report of an actuation of the power supply/demand adjustment processing by way of the reception unit.

SUPPLEMENTARY NOTE 22

In the apparatus control device as described in Note 14, a power supply/demand adjustment device, that satisfies an implementation guarantee that relates to the power supply/demand adjustment processing, receives a report of an actuation of the power supply/demand adjustment processing by way of the reception unit.

SUPPLEMENTARY NOTE 23

In the apparatus control device as described in Note 21, the power supply/demand adjustment device receive a report of an actuation of a plurality of power supply/demand adjustment processes according to the usage-permitted interval by way of the reception unit.

SUPPLEMENTARY NOTE 24

In the apparatus control device as described in any one of Notes 14 to 23, the communication unit transmits a state of the power supply/demand adjustment devices to the outside device, and the reception unit receives from the outside device operation control information that accords with a state of the power supply/demand adjustment devices.

SUPPLEMENTARY NOTE 25

The apparatus control device as described in Note 24 acquires a state of the power grid at a time interval that is shorter than a reception interval of the operation control information and controls operation of the power supply/demand adjustment devices on the basis of a state of the power grid and the operation control information.

SUPPLEMENTARY NOTE 26

In the apparatus control device as described in any one of Notes 14 to 23, the reception unit receives from the outside device the operation control information that was generated on the basis of a state of the power supply/demand adjustment devices and a power amount that is shared by all N (where N is a number equal to or greater than 1) of the power supply/demand adjustment devices to adjust the power amount on a power grid.

SUPPLEMENTARY NOTE 27

In the apparatus control device as described in any one of Notes 14 to 26, the report of an actuation of the power supply/demand adjustment processing is a report of operation control information that controls operation of the power supply/demand adjustment devices.

SUPPLEMENTARY NOTE 28

In the apparatus control device as described in any one of Notes 14 to 27, the power supply/demand adjustment device is a storage battery and functions as an electrical storage device that contains the storage battery.

SUPPLEMENTARY NOTE 29

An apparatus control device is provided with:

an acquisition unit that acquires information that relates to power supply/demand adjustment devices and that is indicated for each power supply/demand adjustment device and information that indicates characteristics of power supply/demand adjustment processing; and

a reporting unit that, on the basis of information that relates to the power supply/demand adjustment devices and information that indicates characteristics of the power supply/demand adjustment processing, performs reporting to an outside device that {a power supply/demand adjustment device} is a power supply/demand adjustment device that satisfies the characteristics of the power supply/demand adjustment processing.

SUPPLEMENTARY NOTE 30

In the apparatus control device as described in Note 29, the information that indicates characteristics of the power supply/demand adjustment processing is information that indicates suitable conditions in the execution of the power supply/demand adjustment processing.

SUPPLEMENTARY NOTE 31

In the apparatus control device as described in Note 29 or 30, the information that relates to the power supply/demand adjustment devices is information that indicates characteristics of power supply/demand adjustment devices that satisfy suitable conditions that enable execution of the power supply/demand adjustment processing.

SUPPLEMENTARY NOTE 32

In the apparatus control device as described in Note 29, the reporting unit reports to the outside device that {a power supply/demand adjustment device} is a power supply/demand adjustment device that has a response time that is equal to or less than the response time of the power supply/demand adjustment processing.

SUPPLEMENTARY NOTE 33

In the apparatus control device as described in Note 29, the reporting unit reports to the outside device that {a power supply/demand adjustment device} is a power supply/demand adjustment device that has a degree of communication confidence that is equal to or greater than the degree of communication confidence of the power supply/demand adjustment processing.

SUPPLEMENTARY NOTE 34

In the apparatus control device as described in Note 29, the reporting unit reports to the outside device that {a power supply/demand adjustment device} is a power supply/demand adjustment device that is provided with a profitability condition that is equal or less than compensation of the power supply/demand adjustment processing.

SUPPLEMENTARY NOTE 35

In the apparatus control device as described in Note 29, when there are a plurality of processes that relate to the power supply/demand adjustment that have compensation that is equal to or greater than the profitability condition provided in the power supply/demand adjustment device, the reporting unit reports to the outside device that {a power supply/demand adjustment device} is a power supply/demand adjustment device that corresponds to the characteristics of the process that relates to the power supply/demand adjustment that has the highest profitability.

SUPPLEMENTARY NOTE 36

In the apparatus control device as described in Note 29, the reporting unit reports to the outside device that {a power supply/demand adjustment device} is a power supply/demand adjustment device that has a usage-permitted interval that is contained in the execution interval that relates to the power supply/demand adjustment processing.

SUPPLEMENTARY NOTE 37

In the apparatus control device as described in Note 29, the reporting unit reports to the outside device that {a supply and demand adjustment device} is a power supply/demand adjustment device that satisfies an implementation guarantee that relates to the power supply/demand adjustment processing.

SUPPLEMENTARY NOTE 38

In the apparatus control device as described in any one of Notes 29 to 37, the power supply/demand adjustment device is a storage battery and functions as an electrical storage device that contains the storage battery.

SUPPLEMENTARY NOTE 39

A control method includes steps of:

acquiring information that relates to power supply/demand adjustment devices and that is indicated for each power supply/demand adjustment device and information that indicates characteristics of power supply/demand adjustment processing; and
on the basis of the information that relates to the power supply/demand adjustment devices and information that indicates characteristics of the power supply/demand adjustment processing, reporting an actuation of the power supply/demand adjustment processing to the power supply/demand adjustment devices that are to be used for the power supply/demand adjustment processing.

SUPPLEMENTARY NOTE 40

In the control method as described in Note 39, the information that indicates characteristics of the power supply/demand adjustment processing is information that indicates suitable conditions that enable execution of the power supply/demand adjustment processing.

SUPPLEMENTARY NOTE 41

In the control method as described in Note 39 or 40, the information that relates to the power supply/demand adjustment devices is information that indicates characteristics of power supply/demand adjustment devices that satisfy suitable conditions in the execution of the power supply/demand adjustment processing.

SUPPLEMENTARY NOTE 42

In the control method as described in any one of Notes 39 to 41, the report of actuation of the power supply/demand adjustment processing is a transmission of operation control information that controls operation of the power supply/demand adjustment devices.

SUPPLEMENTARY NOTE 43

A report reception method that includes steps of:

transmitting to an outside device information that relates to power supply/demand adjustment devices; and receiving a report of an actuation of the power supply/demand adjustment processing that was determined on the basis of information that relates to the power supply/demand adjustment devices and information that indicates characteristics that relate to the power supply/demand adjustment processing.

SUPPLEMENTARY NOTE 44

In the report reception method as described in Note 43, the information that indicates the characteristics of the power supply/demand adjustment processing is information that indicates suitable conditions that enable execution of the power supply/demand adjustment processing.

SUPPLEMENTARY NOTE 45

In the report reception method as described in Note 43 or 44, the information that relates to the power supply/demand adjustment devices is information that indicates characteristics of power supply/demand adjustment devices that satisfy suitable conditions that enable execution of the power supply/demand adjustment processing.

SUPPLEMENTARY NOTE 46

In the report reception method as described in any one of Notes 43 to 45, the report of an actuation of the power supply/demand adjustment processing is a report of operation control information that controls operation of the power supply/demand adjustment devices.

SUPPLEMENTARY NOTE 47

A reporting method includes steps of:

acquiring information that relates to power supply/demand adjustment devices and that is indicated for each power supply/demand adjustment device and information that indicates characteristics of power supply/demand adjustment processing; and
on the basis of the information that relates to the power supply/demand adjustment devices and information that indicates characteristics of the power supply/demand adjustment processing, reporting to an outside device that {a power supply/demand adjustment device} is a power supply/demand adjustment device that satisfies the characteristics of the power supply/demand adjustment processing.

SUPPLEMENTARY NOTE 48

In the reporting method as described in Note 47, the information that indicates characteristics of the power supply/demand adjustment processing is information that indicates suitable conditions that enable execution of the power supply/demand adjustment processing.

SUPPLEMENTARY NOTE 49

In the reporting method as described in Note 47 or 48, the information that relates to the power supply/demand adjustment devices is information that indicates characteristics of power supply/demand adjustment devices that satisfy suitable conditions that enable execution of the power supply/demand adjustment processing.

SUPPLEMENTARY NOTE 50

A recording medium that can be read by a computer and on which is recorded a program causes a computer to execute:

an acquisition procedure of acquiring information that relates to power supply/demand adjustment devices and that is indicated for each power supply/demand adjustment device and information that indicates characteristics of power supply/demand adjustment processing; and
a reporting procedure of, on the basis of the information that relates to the power supply/demand adjustment devices and information that indicates characteristics of the power supply/demand adjustment processing, reporting an actuation of the power supply/demand adjustment processing to the power supply/demand adjustment devices that are to be used for the power supply/demand adjustment processing.

SUPPLEMENTARY NOTE 51

In the recording medium as described in Note 50, the information that indicates characteristics of the power supply/demand adjustment processing is information that indicates suitable conditions that enable execution of the power supply/demand adjustment processing.

SUPPLEMENTARY NOTE 52

In the recording medium as described in Note 50 or 51, the information that relates to the power supply/demand adjustment devices is information that indicates characteristics of power supply/demand adjustment devices that satisfy suitable conditions that enable execution of the power supply/demand adjustment processing.

SUPPLEMENTARY NOTE 53

In the recording medium as described in any one of Notes 50 to 52, the report of an actuation of the power supply/demand adjustment processing is a transmission of operation control information that controls operation of the power supply/demand adjustment devices.

SUPPLEMENTARY NOTE 54

A recording medium causes a computer to execute:

a transmission procedure of transmitting to an outside device information that relates to power supply/demand adjustment devices; and
a reception procedure of receiving a report of an actuation of power supply/demand adjustment processing that was determined on the basis of the information that relates to the power supply/demand adjustment devices and information that indicates characteristics that relate to the power supply/demand adjustment processing.

SUPPLEMENTARY NOTE 55

In the recording medium as described in Note 54, the information that indicates characteristics of the power supply/demand adjustment processing is information that indicates suitable conditions that enable execution of the power supply/demand adjustment processing.

SUPPLEMENTARY NOTE 56

In the recording medium as described in Note 54 or 55, the information that relates to the power supply/demand adjustment devices is information that indicates characteristics of power supply/demand adjustment devices that that satisfy suitable conditions that enable execution of the power supply/demand adjustment processing.

SUPPLEMENTARY NOTE 57

In the recording medium as described in any one of Notes 54 to 56, the report of an actuation of the power supply/demand adjustment processing is a report of operation control information that controls operation of the power supply/demand adjustment devices.

SUPPLEMENTARY NOTE 58

A recording medium that can be read by a computer and on which is recorded a program causes a computer to execute:

an acquisition procedure of acquiring information that relates to power supply/demand adjustment devices and that is indicated for each power supply/demand adjustment device and information that indicates characteristics of power supply/demand adjustment processing; and
a reporting procedure of, on the basis of the information that relates to the power supply/demand adjustment devices and information that indicates characteristics of the power supply/demand adjustment processing, carrying out reporting to an outside device that {a power supply/demand adjustment device} is a power supply/demand adjustment device that satisfies to the characteristics of the power supply/demand adjustment processing.

SUPPLEMENTARY NOTE 59

In the recording medium as described in Note 58, the information that indicates characteristics of the power supply/demand adjustment processing is information that indicates suitable conditions that enable execution of the power supply/demand adjustment processing.

SUPPLEMENTARY NOTE 60

In the recording medium as described in Note 58 or 59, the information that relates to the power supply/demand adjustment devices is information that indicates characteristics of power supply/demand adjustment devices that satisfy suitable conditions that enable execution of the power supply/demand adjustment processing.

Explanation of Reference Numbers

**[0682]**

| | |
|---|---|
| A-H, AA | control device |
| A1 | acquisition unit |
| A2 | reporting unit |
| AA1, AA2, B1, B2, D1, E1 | storage unit |
| AA3, B3, D3, E3, G3, H3 | selection unit |
| C1 | communication unit |
| C2 | comprehension unit |
| C3, F3 | control unit |
| R1, R1A, K | apparatus control device |
| R2 | power grid |
| R3 | storage battery |
| R4 | load |
| K1 | acquisition unit |
| K2 | reporting unit |
| 1000 | power control system |
| 1 | thermal power generator |
| 2 | load dispatching unit |

| 201 | frequency gauge |
| 202 | communication unit |
| 203 | control unit |
| 3 | power grid |
| 4 | linking line |
| 5 | distribution transformer |
| 6 | power line |
| 7 | central control device |
| 700 | selection unit |
| 701 | communication unit |
| 702 | database |
| 703 | comprehension unit |
| 704 | control unit |
| 8 | apparatus control device |
| 801 | detection unit |
| 802 | communication unit |
| 803 | frequency gauge |
| 804 | control unit |
| 9 | storage battery |
| 10 | load |
| 111 | renewable power source (solar power generator) |
| 112 | renewable power source (wind power generator) |

**Claims**

1. A control device is provided with:

   an acquisition unit that acquires information that relates to power supply/demand adjustment devices that is indicated for each power supply/demand adjustment device and information that indicates characteristics of power supply/demand adjustment processing; and
   a reporting unit that, on the basis of the information that relates to said power supply/demand adjustment devices and information that indicates characteristics of said power supply/demand adjustment processing, reports an actuation of said power supply/demand adjustment processing to said power supply/demand adjustment devices that are to be used for said power supply/demand adjustment processing.

2. The control device as set forth in claim 1, wherein the information that indicates characteristics of said power supply/demand adjustment processing is information that indicates suitable conditions that enable execution of said power supply/demand adjustment processing.

3. The control device as set forth in claim 1 or 2, wherein the information that relates to said power supply/demand adjustment devices is information that indicates characteristics of power supply/demand adjustment devices that satisfy suitable conditions that enable execution of said power supply/demand adjustment processing.

4. The control device as set forth in claim 1, wherein said reporting unit reports an actuation of said power supply/demand adjustment processing to power supply/demand adjustment devices that have a response time that is equal to or less than the response time of said power supply/demand adjustment processing.

5. The control device as set forth in claim 1, wherein said reporting unit reports an actuation of said power supply/demand adjustment processing to power supply/demand adjustment devices that have a degree of communication confidence that is equal to or greater than the degree of communication confidence of said power supply/demand adjustment processing.

6. The control device as set forth in claim 1, wherein said reporting unit reports an actuation of said power supply/demand adjustment processing to power supply/demand adjustment devices that are provided with a profitability condition that is equal to or less than compensation of said power supply/demand adjustment processing.

7. The control device as set forth in claim 6, wherein when there are a plurality of said power supply/demand adjustment

48

processes having compensation that is equal to or greater than a profitability condition provided in said power supply/demand adjustment devices, said reporting unit reports an actuation of said power supply/demand adjustment processing that has the highest profitability to power supply/demand adjustment devices provided with a profitability condition that is equal to or less than compensation of said power supply/demand adjustment processing.

8. The control device as set forth in claim 1, wherein said reporting unit reports an actuation of said power supply/demand adjustment processing to power supply/demand adjustment devices that have a usage-permitted interval that is contained in an execution interval of said power supply/demand adjustment processing.

9. The control device as set forth in claim 1, wherein said reporting unit reports an actuation of said power supply/demand adjustment processing to power supply/demand adjustment devices that satisfy an implementation guarantee relating to said power supply/demand adjustment processing.

10. The control device as set forth in claim 8, wherein said reporting unit reports an actuation of said power supply/demand adjustment processing to a plurality of power supply/demand adjustment devices according to said usage-permitted interval.

11. The control device as set forth in any one of claims 1 to 10, further comprising:

a communication unit that transmits operation control information to apparatus control devices that control said power supply/demand adjustment devices;
wherein said apparatus control devices control operation of said power supply/demand adjustment devices on the basis of a state of a power grid and the operation control information at a time interval that is shorter than a transmission interval of said operation control information.

12. The control device as set forth in any one of claims 1 to 10, further comprising:

a communication unit that transmits, to apparatus control devices that control said power supply/demand adjustment devices, said operation control information that was generated on the basis of a state of said power supply/demand adjustment devices and a power amount that is shared by all N (where N is a number equal to or greater than 1) of said power supply/demand adjustment devices to adjust the power amount on the power grid.

13. The control device as set forth in any one of claims 1 to 12, wherein the report of an actuation of said power supply/demand adjustment processing is a transmission of operation control information that controls operation of said power supply/demand adjustment devices.

14. An apparatus control device comprising:

a communication unit that transmits information that relates to power supply/demand adjustment devices to an outside device; and
a reception unit that receives the report of an actuation of power supply/demand adjustment processing that is determined on the basis of information that relates to said power supply/demand adjustment devices and information that indicates characteristics that relate to said power supply/demand adjustment processing.

15. The apparatus control device as set forth in claim 14, wherein the information that indicates characteristics of said power supply/demand adjustment processing is information that indicates suitable conditions that enable execution of said power supply/demand adjustment processing.

16. The apparatus control device as set forth in claim 14 or 15, wherein the information that relates to said power supply/demand adjustment devices is information that indicates characteristics of power supply/demand adjustment devices that satisfy suitable conditions that enable execution of said power supply/demand adjustment processing.

17. The apparatus control device as set forth in claim 14, wherein a power supply/demand adjustment device that has response time that is equal to or less than the response time of said power supply/demand adjustment processing receives a report of an actuation of said power supply/demand adjustment processing by way of said reception unit.

18. The apparatus control device as set forth in claim 14, wherein a power supply/demand adjustment device that has a degree of communication confidence that is equal to or greater than the degree of communication confidence of said power supply/demand adjustment processing receives a report of an actuation of said power supply/demand adjustment processing by way of said reception unit.

19. The apparatus control device as set forth in claim 14, wherein a power supply/demand adjustment device that is provided with a profitability condition that is equal to or less than compensation of said power supply/demand adjustment processing receives a report of an actuation of said power supply/demand adjustment processing by way of said reception unit.

20. The apparatus control device as set forth in claim 14, wherein when there are a plurality of said power supply/demand adjustment processes having compensation that is equal to or greater than a profitability condition that is provided in said power supply/demand adjustment device, said power supply/demand adjustment device receives a report of an actuation of the power supply/demand adjustment process having the highest profitability by way of said reception unit.

21. The apparatus control device as set forth in claim 14, wherein a power supply/demand adjustment device, that has a usage-permitted interval that is contained in an execution interval that relates to said power supply/demand adjustment processing, receives a report of an actuation of said power supply/demand adjustment processing by way of said reception unit.

22. The apparatus control device as set forth in claim 14, wherein a power supply/demand adjustment device, that satisfies an implementation guarantee that relates to said power supply/demand adjustment processing, receives a report of an actuation of said power supply/demand adjustment processing by way of said reception unit.

23. The apparatus control device as set forth in claim 21, wherein said power supply/demand adjustment device receives a report of an actuation of a plurality of power supply/demand adjustment processes according to said usage-permitted interval by way of said reception unit.

24. The apparatus control device as set forth in any one of claims 14 to 23, wherein said communication unit transmits a state of said power supply/demand adjustment devices to said outside device, and said reception unit receives from said outside device operation control information that accords with a state of said power supply/demand adjustment devices.

25. The apparatus control device as set forth in claim 24 acquires a state of a power grid at a time interval that is shorter than a reception interval of said operation control information and controls operation of said power supply/demand adjustment devices on the basis of a state of the power grid and said operation control information.

26. The apparatus control device as set forth in any one of claims 14 to 23, wherein said reception unit receives from said outside device said operation control information that was generated on the basis of a state of said power supply/demand adjustment devices and a power amount that is shared by all N (where N is a number equal to or greater than 1) of said power supply/demand adjustment devices to adjust the power amount on a power grid.

27. The apparatus control device as set forth in any one of claims 14 to 26, wherein the report of an actuation of said power supply/demand adjustment processing is a report of operation control information that controls operation of said power supply/demand adjustment devices.

28. The apparatus control device as set forth in any one of claims 14 to 27, wherein said power supply/demand adjustment device is a storage battery and functions as an electrical storage device that contains said storage battery.

29. An apparatus control device comprising:

an acquisition unit that acquires information that relates to power supply/demand adjustment devices and that is indicated for each power supply/demand adjustment device and information that indicates characteristics of power supply/demand adjustment processing; and
a reporting unit that, on the basis of information that relates to said power supply/demand adjustment devices and information that indicates characteristics of said power supply/demand adjustment processing, performs reporting to an outside device that is a power supply/demand adjustment device that satisfies the characteristics of said power supply/demand adjustment processing.

30. The apparatus control device as set forth in claim 29, wherein the information that indicates characteristics of said power supply/demand adjustment processing is information that indicates suitable conditions that enable execution of said power supply/demand adjustment processing.

31. The apparatus control device as set forth in claim 29 or 30, wherein the information that relates to said power supply/demand adjustment devices is information that indicates characteristics of power supply/demand adjustment devices that satisfy suitable conditions that enable execution of said power supply/demand adjustment processing.

32. The apparatus control device as set forth in claim 29, wherein said reporting unit reports to said outside device that is a power supply/demand adjustment device that has a response time that is equal to or less than the response time of said power supply/demand adjustment processing.

33. The apparatus control device as set forth in claim 29, wherein said reporting unit reports to said outside device that is a power supply/demand adjustment device that has a degree of communication confidence that is equal to or greater than the degree of communication confidence of said power supply/demand adjustment processing.

34. The apparatus control device as set forth in claim 29, wherein said reporting unit reports to said outside device that is a power supply/demand adjustment device that is provided with a profitability condition that is equal or less than compensation of said power supply/demand adjustment processing.

35. The apparatus control device as set forth in claim 29, wherein when there are a plurality of processes that relate to said power supply/demand adjustment that have compensation that is equal to or greater than the profitability condition provided in said power supply/demand adjustment device, said reporting unit reports to said outside device that is a power supply/demand adjustment device that corresponds to the characteristics of the process that relates to the power supply/demand adjustment that has the highest profitability.

36. The apparatus control device as set forth in claim 29, wherein said reporting unit reports to said outside device that is a power supply/demand adjustment device that has a usage-permitted interval that is contained in an execution interval that relates to said power supply/demand adjustment processing.

37. The apparatus control device as set forth in claim 29, wherein said reporting unit reports to said outside device that is a power supply/demand adjustment device that satisfies an implementation guarantee that relates to said power supply/demand adjustment processing.

38. The apparatus control device as set forth in any one of claims 29 to 37, wherein said power supply/demand adjustment device is a storage battery and functions as an electrical storage device that contains said storage battery.

39. A control method comprising:

acquiring information that relates to power supply/demand adjustment devices and that is indicated for each power supply/demand adjustment device and information that indicates characteristics of power supply/demand adjustment processing; and
on the basis of the information that relates to said power supply/demand adjustment devices and information that indicates characteristics of said power supply/demand adjustment processing, reporting an actuation of said power supply/demand adjustment processing to said power supply/demand adjustment devices that are to be used for said power supply/demand adjustment processing.

40. A report reception method, comprising:

transmitting to an outside device information that relates to power supply/demand adjustment devices; and
receiving a report of an actuation of power supply/demand adjustment processing that was determined on the basis of information that relates to said power supply/demand adjustment devices and information that indicates characteristics that relate to said power supply/demand adjustment processing.

41. A reporting method, comprising:

acquiring information that relates to power supply/demand adjustment devices and that is indicated for each power supply/demand adjustment device and information that indicates characteristics of power supply/demand adjustment processing; and,

on the basis of the information that relates to said power supply/demand adjustment devices and information that indicates characteristics of said power supply/demand adjustment processing, reporting to an outside device that is a power supply/demand adjustment device that satisfies the characteristics of said power supply/demand adjustment processing.

42. A recording medium that can be read by a computer and on which is recorded a program for causing a computer to execute:

an acquisition procedure of acquiring information that relates to power supply/demand adjustment devices and that is indicated for each power supply/demand adjustment device and information that indicates characteristics of power supply/demand adjustment processing; and

a reporting procedure of, on the basis of the information that relates to said power supply/demand adjustment devices and information that indicates characteristics of said power supply/demand adjustment processing, reporting an actuation of said power supply/demand adjustment processing to said power supply/demand adjustment devices that are to be used for said power supply/demand adjustment processing.

43. A recording medium that causes a computer to execute:

a transmission procedure of transmitting to an outside device information that relates to power supply/demand adjustment devices; and

a reception procedure of receiving a report of an actuation of power supply/demand adjustment processing that was determined on the basis of the information that relates to said power supply/demand adjustment devices and information that indicates characteristics that relate to said power supply/demand adjustment processing.

44. A recording medium that can be read by a computer and on which is recorded a program for causing a computer to execute:

an acquisition procedure of acquiring information that relates to power supply/demand adjustment devices and that is indicated for each power supply/demand adjustment device and information that indicates characteristics of power supply/demand adjustment processing; and

a reporting procedure of, on the basis of the information that relates to said power supply/demand adjustment devices and information that indicates characteristics of said power supply/demand adjustment processing, carrying out reporting to an outside device that is a power supply/demand adjustment device that satisfies the characteristics of said power supply/demand adjustment processing.

FIG. 1A

A

control device

A1

acquisition unit

A2

reporting unit

FIG. 1B

AA

control device

AA1

storage unit

AA2

storage unit

selection unit AA3

FIG. 1C

AA

control device

AA1

storage unit

AA2

storage unit

AA3

selection
unit

A1

acquisition unit

A2

reporting unit

FIG. 2

|  | application AP1 | application AP2 | application AP3 |
|---|---|---|---|
| response time | 10 seconds to one minute | one to nine seconds | less than one second |

FIG. 3

START

S301
Acquire the response time of each application and the response time of each storage battery

S302
For each application, select storage batteries that are to be the objects of use

S303
For each application, report the actuation of the application to the storage batteries that are the objects of use

END

FIG. 4

FIG. 5

|  | application AP1 | application AP2 | application AP3 |
|---|---|---|---|
| response time | 10 seconds to one minute | one to nine seconds | less than one second |
| degree of communication confidence | medium reliability | medium reliability | high reliability |

FIG. 6

START

S601
Acquire the response time of the application,
the degree of communication confidence of
the application, and the response time and
compatible communication mode of each
storage battery

S602
For each application, select the storage
batteries that are to be the objects of use

S603
For each application, report the actuation
of the application to the storage batteries
that are the objects of use

END

FIG. 7

FIG. 8

| | storage battery that is the object of use |
|---|---|
| application AP1 | 3-1、 3-3、 3-k、 ・・・ |
| application AP2 | 3-1、 3-5、 3-s、 ・・・ |
| application AP3 | 3-2、 3-10、 3-t、 ・・・ |

FIG. 9

```
        ┌──────────────┐
        │    START     │
        └──────────────┘
               │
               ▼           S901
┌──────────────────────────────────┐
│ generate operation control information │
└──────────────────────────────────┘
               │
               ▼           S902
┌──────────────────────────────────┐
│ check the storage batteries that are │
│ the objects of use of each application │
└──────────────────────────────────┘
               │
               ▼           S903
┌──────────────────────────────────┐
│ transmit operation control information │
└──────────────────────────────────┘
               │
               ▼
        ┌──────────────┐
        │     END      │
        └──────────────┘
```

FIG. 10

FIG. 11

|  | application AP1 | application AP2 | application AP3 |
|---|---|---|---|
| response time | 10 seconds to one minute | one to nine seconds | less than one second |
| degree of communication confidence | medium reliability | medium reliability | high reliability |
| profitability | 7yen/kW×1h | 1yen/kW×1h | 2yen/kW×1h |

FIG. 12

|  | storage battery 3-1 | storage battery 3-2 | · · · | storage battery 3-n |
|---|---|---|---|---|
| profitability condition | 2yen/kW×1h or more | 5yen/kW×1h or more |  | no limit |

FIG. 13

```
        START
          |
          |           S1301
          v
for each application, select storage
batteries that are to be the objects of use
          |
          |           S1302
          v
     store the selection result
          |
          v
         END
```

FIG. 14

FIG. 15

|  | application AP1 | application AP2 | application AP3 |
|---|---|---|---|
| response time | 10 seconds to one minute | one to nine seconds | less than one second |
| degree of communication confidence | medium reliability | medium reliability | high reliability |
| profitability | 7yen/kW×1h | 1yen/kW×1h | 2yen/kW×1h |
| reliability | implementation not guaranteed | implementation guaranteed | implementation not guaranteed |
| implementation time | three hours (12:00-15:00) | two hours (11:00-13:00) | six hours (9:00-15:00) |

FIG. 16

|  | storage battery 3-1 | storage battery 3-2 | . . . | storage battery 3-n |
|---|---|---|---|---|
| implementation guarantee | implementation guaranteed | Implementation not guaranteed |  | Implementation guaranteed |
| usage-permitted interval | all day | 8:00-15:00 |  | 9:00-12:00 |

FIG. 17

```
        ┌─────────────┐
        │    START    │
        └─────────────┘
               │
               │            S1701
               ▼
┌──────────────────────────────────┐
│ for each application, select storage│
│ batteries that are to be the objects of│
│ use that satisfy all of Conditions (a)-(e)│
└──────────────────────────────────┘
               │
               │            S1702
               ▼
┌──────────────────────────────────┐
│      Store the selection results  │
└──────────────────────────────────┘
               │
               ▼
        ┌─────────────┐
        │     END     │
        └─────────────┘
```

FIG. 18

FIG. 19

control device — G

selection unit — G3

storage unit — E1

comprehension unit — C2

control unit — F3

communication unit — C1

customer side
R1A
apparatus control device

R4 — load
R3 — storage battery

· · ·

customer side
R1A
apparatus control device

R4 — load
R3 — storage battery

R2  power grid

FIG. 20

control device — H

selection unit — H3

storage unit — E1

comprehension unit — C2

control unit — F3

communication unit — C1

customer side
R1A — apparatus control device
R4 — load
R3 — storage battery

customer side
R1A — apparatus control device
R4 — load
R3 — storage battery

. . .

R2 power grid

FIG. 21

1000 power control system

7 central control device

12 communication network

8 apparatus control device

storage battery 9

load 10

customer-side

13 another power system

8 apparatus control device

storage battery 9

load 10

customer-side

4 linking line

1 thermal power generator

2 load dispatching unit

distribution transformer 5

6 power line

3 power grid

111 renewable power source (solar power generator)

112 renewable power source (wind power generator)

FIG. 22

FIG. 23A

FIG. 23B

FIG. 24A

Integrated value of the frequency deviation

FIG. 24B

Drooping characteristic line of
the storage battery (Group)

FIG. 25

START

S2501

collect static characteristics (communication characteristic and response characteristic) sought by each DR application

S2502

collect the characteristics of each storage battery

S2503

collect the communication characteristics of each communication path

S2504

select candidates of the storage batteries that are the objects of use for each DR application

END

FIG. 26

static characteristics sough by applications

candidates of storage batteries that are the objects of use

| DR application 1 demand reduction/ creation | DR application 2 frequency control (LFC) | DR application 3 frequency control |

| communication characteristics | medium reliability | medium reliability | high reliability |

| response characteristic | ten-odd seconds to 1 minute | on the order of seconds | 1 second or less |

customer No. 1 — high reliability, msec, Lib, GF authentication

customer No. 2 — high reliability, ten-odd seconds, Lead

customer No. 3 — medium reliability, on the order of seconds, NiH

customer No. 4 — high reliability, msec, Lib, GF authentication

customer No. 5 — high reliability, msec, Lib, GF authentication

customer No. n — medium reliability, several seconds, lead

FIG. 27

```
                          START

                                           /S2701
        collect dynamic characteristics sought
        by each DR application (implementation
        reliability, profitability, implementation time)

                                           /S2702
        determine the baseline each DR application
        takes as a standard

                                           /S2703
        collect operation schedule information of storage
        batteries and power demand schedule information
        of customers

                                           /S2704
        collect participation intent
        for the DR applications

                                           /S2705
        use the reliability (implementation guarantee
        characteristic) to narrow down candidates


              /S2706                              /S2710
        use the profitability        determine the required capacity and
        to narrow down candidates    profitability of the DR application
                   /S2707                        /S2709
        use the implementation time to    participate in bidding
        select storage batteries that
        are to be the objects of use

                       S2708
                   Is the profitability      No
                   determined?

                       Yes

                          S2711
                   Is there a remaining      Yes
                   application?

                       No                  S2712
        determine the output, capacity, and storage
        batteries that are to be the objects of use for
        the DR application

                          END
```

FIG. 28

┌ ─ ┐
┊ ┊ : no implementation guarantee
└ ─ ┘

┌───┐
│   │ : has implementation guarantee
└───┘

| profitability |

DR application 1
demand
reduction/creation     :5-10yen/1kWh

DR
application
2 frequency
control(LFC)            :1yen/1kW×1h

DR application 3
frequency control (GF)  :2yen/1kW×1h

```
   8    9    10   11   12   13   14   15   16
   |    |    |    |    |    |    |    |    |
   └────────────────────────────────────────▶ time
```

| customer No.1 | own purpose | 50% output (1kW) /SOC width 50% | 75% output (1.5kW) /SOC width 50% |
| GF or less | for DR | 50% output (1kW) /SOC width 50% (3kWh) | 25% output (0.5kW) /SOC width 50% (3kWh) ≧2yen/1kW×1h |

| customer No.2 | own purpose | 50% output (0.5kW) /SOC width 70% |
| demand reduction or less | for DR | 50% output (0.5kW) /SOC width 30% (1kWh) ≧5yen/1kW×1h |

| customer No.3 | own purpose | 0% output (0kW) /SOC width 0% (Priority to DR use; When not used for DR, then used for its own purposes) |
| LFC or less | for DR | 100% output (3kW) /SOC width 100% (10kWh) : No limits on profitability |

| customer No.4 | own purpose | 100% output (10kW) /SOC width 25% | 40% output (4kW) /SOC width 25% |
| GF or less | for DR | | 60% output (6kW) /SOC width 75% (15kWh) ≧2yen/1kW×1h |

| customer No.5 | own purpose | 0% output (0kW) /SOC width 0% (Priority to DR use; When not used for DR, then used for its own purposes ) |
| GF or less | for DR | 100% output (10kW) /SOC width 100% (10kWh) : No limits on profitability |

| customer No.n | own purpose | 70% output (2kW) /SOC width 70% |
| demand reduction or less | for DR | 30% output (1kW) /SOC width 30% (2kWh) ≧5yen/1kW×1h |

FIG. 29

SOC

1      10kWh

Considered to be 3.29 kWh battery
in DR application 2 (LFC)

0.671     6. 71kWh

Operates in the range of SOC of
0.671 or more and 1 or less.

(1) The center SOC is 0.836.
(2) The rated output P(n=1) is
3kW.

At the time of implementing DR
application 2, calculates total
adjustable capacity $P_{ES-DR2}$ and
determines $LFC_{ES-DR2}$ on the
assumption of
charging/discharging adjustment
such that the SOC initial value
becomes the center value of 0.836.

Reserve for
DR application 1

0     0kWh

FIG. 30

┌ ─ ┐
└ ─ ┘ : no implementation guarantee

☐ : has implementation guarantee

profitability

┌─────────────────────────┐
│ DR application 1         │  :5-10yen/1kWh
│ demand                   │
│ reduction/creation       │
└─────────────────────────┘

┌──────────────┐
│ DR           │  :1yen/1kW×1h
│ application  │
│ 2 frequency  │
│ control(LFC) │
└──────────────┘

┌─────────────────────────┐
│ DR application 3         │  :2yen/1kW×1h
│ frequency_control_(GF)   │
└─────────────────────────┘

8    9   10   11   12   13   14   15   16
                                        → time

| customer No.1 | own purpose | 50% output (1kW) /SOC width 50% | 75% output (1.5kW) /SOC width 50% | |
| GF or less | for DR | DR application 3 | DR application 1 | ≧2yen/1kW×1h |

| customer No.2 | own purpose | 50% output (0.5kW) /SOC width 70% | | |
| demand reduction or less | for DR | No GF or LFC response | DR application 1 | ≧5yen/1kW×1h |

| customer No.3 | own purpose | 0% output (0kW) /SOC width 0% (Priority to DR use; When not used for DR, then used for its own purposes) | | |
| LFC or less | for DR | No GF response | DR Application 2 | DR application 1 |

| customer No.4 | own purpose | 100% output (10kW) /SOC width 25% | 40% output (4kW) /SOC width 25% | |
| GF or less | for DR | | DR application 1 | ≧2yen/1kW×1h |

| customer No.5 | own purpose | 0% output (0kW) /SOC width 0% (Priority to DR use; When not used for DR, then used for its own purposes ) | | |
| GF or less | for DR | DR application 3 | DR application 1 | |

| customer No.n | own purpose | 70% output (2kW) /SOC width 70% | | |
| demand reduction or less | for DR | No GF or LFC response | DR application 1 | ≧5yen/1kW×1h |

FIG. 31

FIG. 32

FIG. 33

central control device  7

load dispatching unit  2

S3301
Calculation of Area Requirement

S3302
Collection of the LFC adjustment capacity of thermal power generator

Most recent $P_{ES-DR2}$

S3303

S3304
Calculation of LFC assignment capacity $LFC_{ES-DR2}$ for storage battery group

S3305
Generation of DR2 charging/discharging gain line

DR2 charging/discharging gain line

S3306

FIG. 34

FIG. 35

Integrated value of the frequency deviation

FIG. 36

```
        9                              8
   ┌──────────────────┐        ┌──────────────────────────┐
   │  storage battery │        │  apparatus control device│
   └──────────────────┘        └──────────────────────────┘
            │                              │
            │                              │  ┌ S3601
            │                 ┌──────────────────────────┐
            │                 │ Detection of grid frequency│
            │                 └──────────────────────────┘
            │                              │
            │                              │  ┌ S3602
            │                 ┌──────────────────────────┐
            │                 │ Calculation of integrated value│
            │                 │ Δf of frequency deviation │
            │                 └──────────────────────────┘
            │                              │
            │                              │  ┌ S3603
            │                 ┌──────────────────────────┐
            │                 │  Specification of charging│
            │                 │  amount or discharging amount on│
            │                 │  the basis of Δf and the local│
            │                 │  charging/discharging gain line│
            │                 └──────────────────────────┘
            │  Control of charging/discharging │
            │◄─────────────────────────────────│
            │              └ S3604             │
            │                              │
```

FIG. 37

central control device      7

load dispatching unit      2

S3701

Calculation of required GF capacity

S3702

Collection of the GF adjustment capacity of thermal power generator

S3703

Most recent $P_{ES-DR3}$

S3704

Calculation of GF assignment capacity $GF_{ES-DR3}$ to storage battery group

S3705

Generation of DR3 drooping characteristic line

DR3 drooping characteristic line

S3706

FIG. 38

FIG. 39

```
        ┌─────────────────┐              ┌──────────────────────┐
        │  storage battery │ 9            │ apparatus control device │ 8
        └─────────────────┘              └──────────────────────┘
                │                                   │
                │                          ┌────────────────────────┐ S3901
                │                          │ Detection of grid frequency │
                │                          └────────────────────────┘
                │                                   │
                │                          ┌────────────────────────┐ S3902
                │                          │ Calculation of frequency │
                │                          │      deviation Δf        │
                │                          └────────────────────────┘
                │                                   │
                │                          ┌────────────────────────┐ S3903
                │                          │ Specification of charging │
                │                          │ amount or discharging amount on │
                │                          │ the basis of Δf and the local │
                │                          │ drooping characteristic line │
                │                          └────────────────────────┘
         S3904  │                                   │
                │◄──────────────────────────────────┘
                │  Control of charging/discharging
                │                                   │
```

FIG. 40

| customer 3 (3kW, 10kWh) | | | | | | | | |

time

```
        0     3     6     9     12    15    18    21    24
        └┴┴┴┴┴┴┴┴┴┴┴┴┴┴┴┴┴┴┴┴┴┴┴┴┴──►
```

| own purpose | 0% output   (0kW) /SOC width 0%   (Priority given to DR use; when not used for DR, then used for its own purposes) |

| | R | demand reduction |

| for DR | Reserved for Spinning Reserve (for example, 3kW → 1 yen/kW×1h) |

FIG. 41

K

apparatus control device

| acquisition unit | K1 | — | reporting unit | K2 |

## INTERNATIONAL SEARCH REPORT

| International application No. |
|---|
| PCT/JP2015/070256 |

**A. CLASSIFICATION OF SUBJECT MATTER**
*H02J13/00*(2006.01)i, *G06Q50/06*(2012.01)i, *H02J3/32*(2006.01)i, *H04Q9/00*
(2006.01)i

According to International Patent Classification (IPC) or to both national classification and IPC

**B. FIELDS SEARCHED**

Minimum documentation searched (classification system followed by classification symbols)
H02J13/00, G06Q50/06, H02J3/32, H04Q9/00

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2013-172537 A  (Toshiba Corp.),<br>02 September 2013 (02.09.2013),<br>paragraphs [0014] to [0124]; fig. 1 to 18<br>(Family: none) | 1-44 |
| Y | JP 2013-176284 A  (NEC Corp.),<br>05 September 2013 (05.09.2013),<br>paragraphs [0022] to [0274]; fig. 1 to 22<br>& JP 5234235 B          & US 2015/0002100 A1<br>& WO 2013/042474 A1      & EP 2760098 A1 | 1-44 |
| Y | WO 2013/172022 A1  (Panasonic Corp.),<br>21 November 2013 (21.11.2013),<br>paragraph [0076]<br>& US 2014/0222239 A1 | 4,17,32 |

| ☒ Further documents are listed in the continuation of Box C. | ☐ See patent family annex. |
|---|---|

\*    Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 07 September 2015 (07.09.15) | 15 September 2015 (15.09.15) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (July 2009)

**INTERNATIONAL SEARCH REPORT**

International application No.

PCT/JP2015/070256

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2013/030937 A1  (Hitachi, Ltd.),<br>07 March 2013 (07.03.2013),<br>paragraphs [0076] to [0077]<br>(Family: none) | 9,22,37 |
| A | JP 2013-258806 A  (Panasonic Corp.),<br>26 December 2013 (26.12.2013),<br>paragraphs [0085] to [0096]; fig. 4 to 5<br>(Family: none) | 1-44 |
| A | JP 2006-277385 A  (Kyocera Corp.),<br>12 October 2006 (12.10.2006),<br>paragraphs [0015] to [0030]; fig. 1 to 3<br>(Family: none) | 1-44 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014038201 A

- JP 2014156202 A